Europäisches Patentamt

European Patent Office

Office européen des brevets

(19)

(11) Publication number: **0 050 950**
**B1**

(12) EUROPEAN PATENT SPECIFICATION

(45) Date of publication of patent specification: **02.01.86**

(51) Int. Cl.⁴: **B 23 K 11/24**

(21) Application number: **81304848.5**

(22) Date of filing: **16.10.81**

(54) Feedback welder control system.

(30) Priority: **16.10.80 US 197426**

(43) Date of publication of application:
**05.05.82 Bulletin 82/18**

(45) Publication of the grant of the patent:
**02.01.86 Bulletin 86/01**

(84) Designated Contracting States:
**DE FR GB IT SE**

(56) References cited:
**CH-A- 586 425**
**US-A-3 573 421**
**US-A-3 875 367**

**SIEMENS-ZEITSCHRIFT 52, no. 9, 1978, Berlin
and Munich (DE), K. MAYER + E.R.
WOLFGANG "Bedeutung des Mikroprozessors
für die Struktur der Siemens-Systeme 300",
pages 524-528**

(73) Proprietor: **SQUARE D COMPANY**
**Executive Plaza**
**Palatine, IL 60067 (US)**

(72) Inventor: **Jurek, Dennis J.**
**395 River View Drive**
**Grafton Wisconsin 53024 (US)**

(74) Representative: **Baillie, Iain Cameron et al**
**c/o Ladas & Parry Isartorplatz 5**
**D-8000 München 2 (DE)**

Courier Press, Leamington Spa, England.

## Description

### Background of the invention

This invention relates to a feedback welder control system and, more particularly, to a feedback welder control system which is immune to line voltage waveform disturbances. The control system senses changes in the power factor in the primary circuit of the welder to determine when a quality weld is made without the need for attaching external leads or auxiliary devices in the secondary circuit of the welding transformer or positioning auxiliary sensing devices in the vicinity of the workpiece area.

The object of any resistance welding feedback welder control system is to sense the progress of the development of the weld nugget and to use this information for adjusting the weld schedule. One way of sensing the developing weld nugget is to measure the resistance across a weld as it is being formed and, based on changes in the measured resistance, terminating the weld when a desired resistance change has occurred. In short, the weld current is terminated when a fully formed weld is sensed through these resistance changes. Alternatively, the weld current can be changed to complete the weld in a preset time, or some combination of the above-mentioned techniques can be used.

Previously, methods used to sense the progress of the weld nugget have included detection of acoustical emissions, electrode movement, resistance changes in the workpiece, infrared emission from the weld, and still others. In general, all such methods have required the placement of a sensor or some type of transducer with pick-up leads attached to, or in the immediate vicinity of, the welding electrodes where such sensing devices were vulnerable to accidental damage during the welding operation due to a number of factors, including heat generated by the welding process, welding flash, mechanical vibration, or physical damage such as severed leads, all of which can render the above feedback methods of sensing inoperative.

More recently, feedback welder control systems have been developed which utilize the measurement of resistance changes in the weld nugget without the necessity for auxiliary leads or sensing devices at or near the welding electrodes. The measurement of resistance change is accomplished indirectly by measuring the power factor during each half cycle of weld current and detecting the minute changes in power factor which occur as the resistance in the weld area changes. This technique of measuring changes in the resistance of a weld by observing very small changes in the power factor or phase angle of the weld current includes one disadvantage, i.e., being sensitive to the line voltage waveform disturbances during the conduction interval. Previous attempts to minimize this problem of line voltage waveform disturbances have centered on an averaging technique in which a predetermined number of welds are evaluated to determine the level of energy to be delivered to the weld area for the next succeeding group of welds. One such approach is found in US—A—4289951 entitled Power Factor Monitoring and Control System for Resistance Welding with Line Disturbance Immunity, published on September 15, 1981.

Although this system operates successfully under automated conditions where workpiece uniformity can be assured, it has been discovered that the averaging technique does not permit the system to respond to sudden changes in weld conditions such as may result from operator interaction, fit-up, surface contamination, and the like.

### Summary of the invention

The feedback welder control system according to the present invention uses the resistance change technique of measuring weld progress and is immune to line voltage waveform disturbances in the AC supply to the welder. As recounted earlier in lesser detail, it is well known that the electrical resistance of a workpiece, as measured between the welding tips or electrodes, changes during formation of a weld nugget (see for example US—A—3573421). This change in resistance is reflected in the primary circuit of the welding transformer as a small change in the power factor or phase angle. By sensing or measuring this change in power factor or phase angle, it is possible to monitor the weld progress without attaching external transducers or pick-up leads in the vicinity of the welding electrodes or to the secondary circuitry, respectively (see for example US—A—3875367).

However, this technique of measuring power factor change in the primary of the welding transformer has the above-stated disadvantage of sensitivity to line voltage waveform disturbances which commonly occur in large factories having a multitude of welders connected to the same voltage source. In such an environment, the line voltage waveform disturbances have been found to cause changes in the power factor or phase angle which are different from the power factor change which would have occurred as a result of the resistance change in the nugget area of the weld. In order to use this technique of measuring changes in the resistance of a weld in a factor line voltage waveform environment, the circuitry must operate precisely as though it were independent of the line voltage waveform disturbances.

According to the present invention there is provided control apparatus for controlling the quality of a weld in a resistance welding apparatus with the apparatus including a pair of welding electrodes and a welding transformer having a secondary winding connected to the electrodes and a primary winding connectible to an AC source for energizing the primary and the secondary winding with alternating polarity half cycles of actual welding current, characterized by: means providing a model of the actual welding current in the primary winding and a model signal indicative of the instant when each half cycle of the model welding current reaches zero; means providing an actual weld signal indicative of the actual welding current in the primary winding and the instant when each half cycle of actual welding current reaches zero; and means for measuring a time difference between the zero crossing of the model signal and the zero crossing of the actual weld signal and interrupting an actuable switching means between the source and the primary winding when the difference equals a preselected value.

The invention also provides a method for controlling the quality of a weld that is formed by a resistance welding apparatus with the apparatus including a pair of welding electrodes engageable with a pair of workpieces that are to be welded together and a welding transformer having a secondary winding connected to the electrodes and a primary winding connectible to an AC source for energizing the primary and the secondary winding with alternating polarity half cycles of actual welding current, characterized by: providing a model of the actual welding current in the primary winding and a model signal indicating the instant when each half cycle of model welding current reaches zero; providing an output signal indicative of the actual welding current in the primary winding and the instant when each half cycle of actual welding current reaches zero; measuring a time difference between the zero crossing of the model signal and the zero crossing of the actual weld signal during a half cycle when the value of the time difference between the signals is minimum and storing the value of the minimum time difference; and interrupting the actual welding current in the primary winding when the difference between the minimum difference value and the signal indicative of the difference between the model signal and the actual weld signal during a half cycle subsequent to the half cycle producing the minimum difference value is greater than or equal to a preprogrammed value. Optional features of the apparatus according to the invention are recited in claims 2 to 6 below.

The principle underlying the present invention is to compare the phase relationship between the weld currents of two identical welders operating simultaneously on the same line voltage so that both welders are subjected to the same line voltage waveform disturbances. A first one of the welders includes a workpiece between its welding tips or electrodes; the second welder serves as a reference and operates with its tips closed and without a workpiece. Because both welders are subjected to the same line voltage waveform disturbances, they will in the ideal respond identically to any given disturbance in the waveform, and thus, except for changes brought about by changes in the resistance of the workpiece in only the first welder, the weld currents of each of the welders will remain in phase with one another regardless of line voltage waveform disturbances.

Accordingly, differences in phase relationship will arise when the resistance of the workpiece changes during a weld. In actual practice, this difference in phase relationship can be represented by the difference between the extinction angles of the weld currents, that is to say, the angle at which the weld currents pass through zero during each half cycle.

One embodiment of this invention dispenses with the second welder and replaces it with an electronic simulator or modeling circuit which produces, as an output, a voltage waveform which, in the ideal, is identical in shape and extinction angle to the primary current of the actual welder before the occurrence of any change in resistance of the workpiece. The electronic simulator circuit is adjusted to closely match the response of the actual welding circuit to the line voltage waveform because, for optimum immunity from line voltage waveform disturbances, the welder and the electronic simulator circuit should be conducting simultaneously for identical periods of time. Thus, by comparing the apparent power factor or phase angle of the welding circuit with that of the electronic simulator or modeling circuit, the only difference which will be observed will be due to changes in the resistance of the workpiece in the actual welding circuit and not due to distortion in the line voltage waveform. Differences in extinction time between the welder current and the electronic simulator circuit output are measured with a high speed counter and clock during each half cycle of a weld. For small changes, as are normally experienced in resistance welding, there is a linear relationship between the change in resistance and the counter output. Thus, a sample of the workpiece resistance is available at the end of each half cycle of current.

By observing the progression of the resistance samples as the weld is being made, the feedback welder control system judges on a half-cycle-by-half-cycle basis whether or not the weld should be continued. The resistive curve formed by plotting the resistive samples versus time on a number of half cycles can be expected to take on the characteristic shape and height of a dynamic resistive curve applicable to the materials being joined together by the weld. Further, circuitry described below makes use of a pattern recognition technique on a half-cycle-by-half-cycle basis to extract from the curve at least three quantitative features in determining when the resistive changes have proceeded along an appropriate path indicative of a satisfactory weld nugget formation. These features are: (1) Area the area under this dynamic resistive curve must fall with the lower and upper limits set for the particular metal being welded; (2) Convexity—the measure of curvature which is taken as positive for a curve with a centre higher than either end and, again, this curvature is checked against upper and lower limits for the particular metal being welded; and, (3) Drop—the drop in resistance from the peak value which is generally the most indicative of a weld completion although this characteristic is the most prone to spurious high or low amplitude data errors. Once a weld has been started, it will be terminated only stop if all three of the curve features simultaneously fall within the operator-determined limits, or failing this, when the maximum allowed number of weld cycles, as programmed by the operator, are expended, such as disclosed in U.S. Patent No. 4,104,724 ('724 patent).

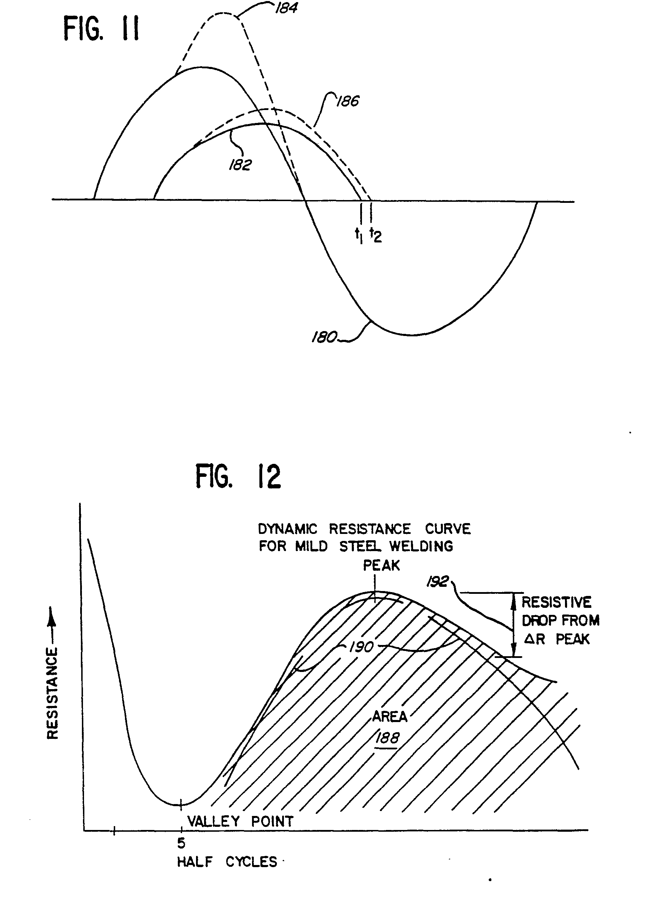

The above-mentioned pattern recognition technique works best for bare steel welds having the classic dynamic resistance curve, as shown in Fig. 12. However, when a variety of steel materials are going to be welded including galvanized steel to galvanized steel or welding steels of varying thickness, a second recognition technique is utilized with a slightly modified modeling circuitry. This second recognition technique includes a single recognition parameter for bare steel, a predictive recognition parameter for galvanized steel and a blanking recognition parameter for steels of varying thicknesses.

The predictive recognition technique replaces the previous pattern recognition technique for bare steel in the case of welding galvanized steel to determine a quality weld. The blanking recognition technique automatically ignores the first pulse in a dual pulse weld and approximately one-half of its second pulse leaving approximately the remaining half of the second pulse for determining a quality weld when welding together steels of varying thicknesses. In the case of bare steel, only a single parameter is used and that is the resistance drop from the peak in the classic dynamic resistive curve being equal to the predetermined amount of resistive drop indicating a quality weld.

Once any of the above types of welds are initiated, they will only stop if the pre-set operator determined limits are met or the maximum allowed number of weld cycles are programmed by the operator are expended. Overriding the limits and maximum allowable weld cycles is the case of expulsion which is highly indicative of a proper weld nugget formation at which time the weld will also terminate.

A second embodiment of the present invention utilizes the same pattern recognition technique which includes either the same features or different features, depending on whether a workpiece consists of mild steel or galvanized steel requiring still other features to be considered.

Other objects and advantages will become apparent from the description wherein reference is made to the accompanying drawings illustrating the preferred embodiments of the invention.

Brief description of the drawings

Fig. 1 shows a partial block and schematic representation of a power factor and monitoring control system for resistance welding embodying the principles of the present invention;

Fig. 2 is a block diagram of a flowchart utilized by the microprocessor in Fig. 1;

Fig. 3A shows the characteristic dynamic resistance curve of mild steels in resistance welding occurring during the half cycles of a weld;

Fig. 3B illustrates graphically the reproduction of the curve in Fig. 3A by the controller of Fig. 1;

Fig. 4 shows a block diagram of the module interconnections for the feedback welder control system embodying the principles of the present invention;

Fig. 5 is a front elevation of the sequence module incorporating the adjust location for the feedback parameters of the present invention;

Fig. 6 is a block diagram of the inputs and outputs to the microprocessor of Fig. 1;

Fig. 7 is an elementary circuit and system block diagram of a welder including an embodiment of the present invention;

Figs. 8A—D are circuit and logic block diagrams in greater detail of a system block diagram of Fig. 7;

Figs. 9A—B show waveforms illustrating the input and output signals to the system block diagram of Fig. 8;

Figs. 10A—C are block diagrams of a flowchart of the operation of a welder including an embodiment of the present invention;

Fig. 11 shows waveforms illustrating the effect of line voltage distortions on extinction angle of a feedback welder control system;

Fig. 12 shows a typical dynamic resistive curve of mild steel during welding;

Figs. 13A—C illustrate the pattern recognition features and their limits in a feedback welder control system;

Fig. 14 shows where operations occur in the voltage and current waveforms;

Fig. 15 shows a front elevation of the second sequence module embodying the second recognition technique;

Fig. 16 is a modified block diagram of module interconnections for the feedback welder control system utilizing the second recognition technique;

Fig. 17 is a circuit diagram of a portion of the blocks in Fig. 16;

Fig. 18A—B shows waveforms of resistance curves for bare and galvanized steel, respectively;

Fig. 19 shows resistance curves for galvanized steel at various current levels;

Fig. 20 is a block diagram of a flowchart of the second recognition technique embodiment;

Fig. 21 shows the stop time computation flowchart of the second recognition technique embodiment;

Fig. 22 shows the touch-up subroutine flowchart of the second recognition technique embodiment;

Fig. 23 shows the filter subroutine flowchart of the second recognition technique embodiment; and,

Fig. 24 shows the fast adjust subroutine flowchart of the second recognition technique.

Description of a basic embodiment

The term "power factor" is conventionally defined as the cosine of the phase angle between the voltage and the current under conditions of continuous sinusoidal excitation. It is used in the preceeding and following descriptions in a qualitative sense to include the case where the voltage and current waveforms are chopped or discontinuous as is commonly the case in SCR controlled systems. In both the chopped or discontinuous case and the continuous case, the qualitative effect is the same, i.e. a higher power factor in an inductive circuit results in earlier current extinction (zero crossing in the continuous case) and a lower power factor results in later current extinction.

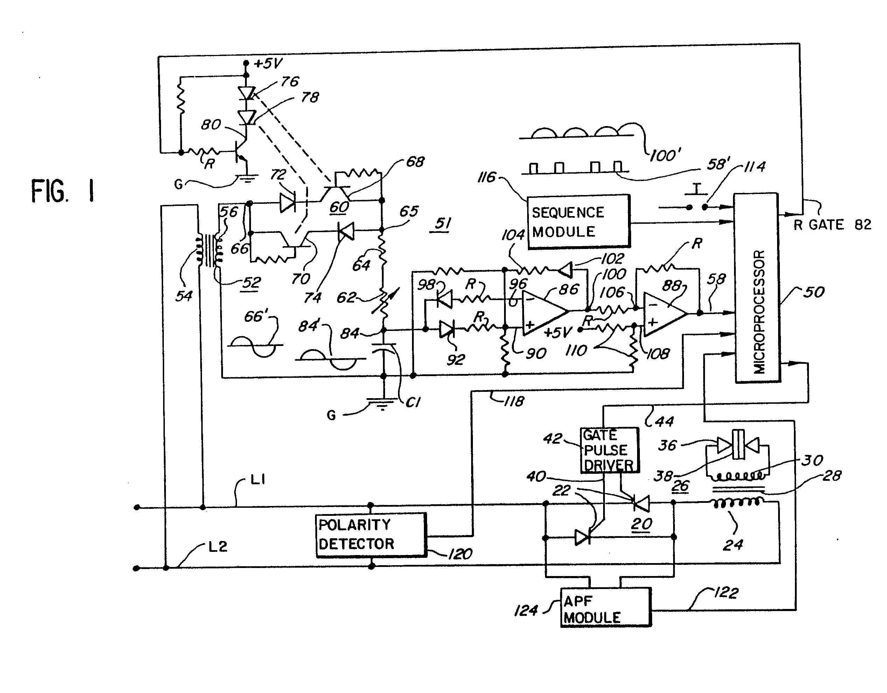

Referring to Fig. 1, a welding contactor 20 includes a pair of inversely connected thyristors (SCR's) 22 that control current delivered to a primary winding 24 of a welding transformer 26 from an alternating current source connected to lines L1 and L2. The transformer 26 includes the primary winding 24, an iron core 28 and a secondary winding 30. The secondary winding 30 is connected in a secondary circuit including a pair of welding electrodes 36 with work pieces 38, to be welded together, clamped between the electrodes 36.

The current conduction of the thyristors 22 is controlled by output signals 40 from a gate pulse driver circuit 42. The output signals of the gate pulse driver circuit 42 in turn are controlled by a signal 44 that is furnished by a microprocessor 50 as will be later described. A simplified form of a simulator or modeling circuit 51 includes a transformer 52 having a primary winding 54 connected to lines L1 and L2 to energize a secondary winding 56. The secondary winding supplies power to the circuit 51 which provides an output signal 58 that serves as an input to the microprocessor 50. The secondary winding 56 is connected through a full wave switching circuit 60 to impress a voltage signal across a series circuit including potentiometer resistor 62, a resistor 64 and a capacitor C1. The capacitor C1 has one side connected through a junction 84 and the series circuit including the potentiometer resistor 62 and the resistor 64 to a terminal 65 of the full wave switching circuit 60. The other terminal 66 of the circuit 60 is connected to one side of the secondary winding 56. The other side of the secondary winding 56 is connected to a ground G and the other side of the capacitor C1.

The full wave switching circuit 60 includes a pair of oppositely poled transistors 68 and 70 and diodes 72 and 74. The transistors 68 and 70 are of the light sensitive type which conduct when exposed to light from an external source. The diode 72 and the transistor 68, connected in series, are polarized in their associated circuit to conduct current from the terminal 66 to 65. The diode 74 and the transistor 70 are likewise connected in series, but are polarized to conduct current from the terminal 65 to the terminal 66. The transistors 68 and 70 receive switching illumination from light emitting diodes 76 and 78 which have their conduction controlled by a transistor 80. The transistor 80 is part of a switching circuit that responds to a signal R-GATE 82 from an output of the microprocessor 50. The transistor 80 has its collector connected through the diodes 76 and 78 to a positive supply and its emitter connected to a ground G. The base of the transistor 80 is connected through a base load resistor R to receive the R-GATE 82 output signal of the microprocessor 50.

The leading edges of the signals 44 and 82 occur simultaneously. The signal 44 consists of a voltage pulse of short duration which occurs during each half cycle of voltage across lines L1 and L2 when current flow through the SCR's 22 is to be initiated. The signal 82 is initiated simultaneously with the initiation of the signal 44 and continues until the signal 58 indicates that the signal at the junction 84 is zero. The signal at the junction 84 is analogous to the signal which would be provided by actual welding current through the primary winding 24 of the welding transformer 26. The term analogous as used herein, means that the voltage waveform at the junction 84 and the current waveform in the primary winding 24 are identical in time of initiation, shape, and time of extinction when the resistor potentiometer 62 is properly adjusted as will be later described.

The circuit 51 includes a section that converts the signal appearing at the junction 84 to the input signal 58 of the microprocessor 50. The circuit includes a pair of operational amplifiers 86 and 88. The operational amplifier 86 has its non-inverting input 90 connected through a resistor R and a diode 92 to the junction 84. The inverting input 96 of the amplifier 86 is connected through a resistor R and a diode 98 to the junction 84. The negative feedback of the operational amplifier 86 is provided by a series circuit that is connected between an output 100 of the operational amplifier 86 and the inverting input 96. The negative feedback circuit includes a diode 102 and a resistor 104. The operational amplifier 88 has an inverting input 106 connected through a resistor R to the output 100. The non-inverting input 108 of the operational amplifier 88 is connected to a voltage divider comprising a pair of equal impedance resistors 110 that are connected between a 5V source and ground so that a bias voltage of approximately 2-1/2V is present at input 108. The negative feedback of the amplifier 88 is provided through a resistor R connected between the output of the amplifier 88 and the inverting input 106.

The signals appearing in the modeling circuit 51 at the various junctions in the circuit are as follows. The junction 66 has a fullwave alternating voltage designated as 66' impressed thereon from the transformer 52. The fullwave signal at the junction 66 is modified by the circuits including the fullwave switch 60 and the resistors 62 and 64 in the charging circuit of the capacitor C1. The signal shown by the wave 84' appears across the capacitor C1 as a series of alternate polarity half cycle voltage pulses which are analogous to the pulses of current in the welding transformer 24. The signal at junction 84 is converted by the circuit that includes the amplifier 86 and appears at the output 100 as precision fullwave rectified voltage pulses as shown on the curve designated as 100'. The output provided by the operational amplifier 88, which acts like an inverting comparator, is a series of pulses shown on the waveform labeled 58'. The pulses at output 58 occur during the interval between each of the voltage pulses of waveform 100'.

The operation of the microprocessor 50 is fully described in the U.S. patent 4,104,724. In the '724 patent, the functions provided by an initiating switch 114, a welder sequence module 116, and a lead trail signal 118 which is provided by a polarity detector 120, connected between lines L1 and L2, are fully described. As described in the '724 patent, a signal 122 is provided by an automatic power factor (APF) module 124. The module 124 has a pair of input leads connected across the contactor 20 so as to be responsive to the voltage appearing across the parallel-connected SCR's 22. During current flow through the transformer primary 24, i.e. when the SCR's 22 are conducting, no significant voltage drop appears across the contactor 20. When neither of the SCR's 22 are conducting, a voltage will appear across the contactor 20 and provide an input to the APF module 124. The output signal 122 of the APF module 124 is an input to the microprocessor 50, and when current is flowing in the transformer primary 24, the signal 122 is present. During the interval when the SCR's 22 are not conducting, the signal 122 input to the microprocessor 50 will be absent.

The microprocessor system 50, consisting preferably of an 8-bit Motorola M6800 microprocessor and its associated memory and various ancillary devices, receives the line voltage polarity information via the signal 118 as well as the state of conduction of the SCR welding contactor 20 as signal 122. The microprocessor 50 generates appropriately timed SCR welding contactor gate signals 44 and feeds the gate signals via the gate pulse drives 42 to gates of the welding SCR's 22 based on operator input data such as the desired welding current, the duration of the weld, etc., stored via a sequence module 116 as fully described in the '724 patent. Based on an analysis of the relative timing representing a change in power factor between the modeling circuit 51 output signal 58 and the cessation of the conduction of the welding SCR's 22 represented by the output signal 122, the microprocessor 50 terminates the weld period.

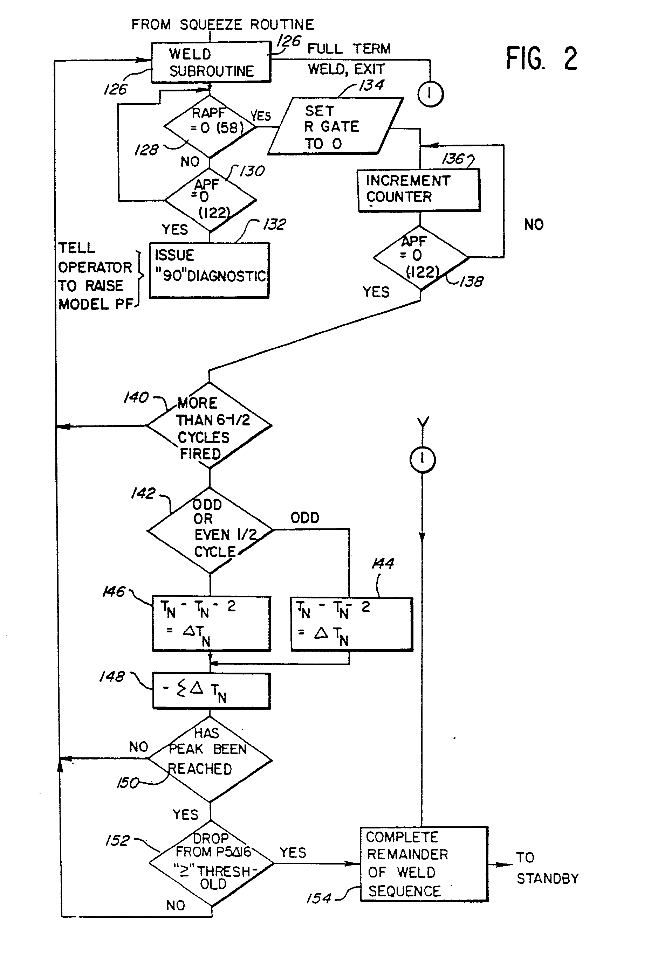

Turning now to a partial flow chart as shown in Fig. 2, the operation sequence of the welding control system is similar to that described in the '724 patent with the exception of the measurement of the timing periods. An analysis of the timing period measurements and the results of the measurements are detailed in the flow chart of Fig. 2.

Upon initiation of a weld sequence and the completion of the squeeze time, the microprocessor 50 leaves the squeeze routine and enters a weld subroutine 126. The weld subroutine 126 includes certain checks and timing information necessary to fire the SCR welding contactor 20 at the appropriate time. Upon generation of the SCR gate signal 44 which initiates the firing of the SCR welding contactor 20, the microprocessor system 50 issues the R-GATE signal 82 which switches the transistor 80 into a conducting state and initiates the operation of the modeling circuit 51.

Control is then transferred to a decision block 128 which tests the state of the signal 58. If the signal 58 is not a logic zero, control is transferred to block 130. If the signal 58 is a logic zero, control is transferred to an output block 134 the significance of which will be later described. Block 130 then tests the state of the signal 122. If the signal 122 is a logic zero, control transfers to a block 132. The significance of the operation of the block 132 will be later described. If the signal 122 is a logic 1, control transfers from the block 130 and is returned to the block 128. The control remains in a loop defined by the blocks 128 and 130 until one of the signals 58 or 122 is detected as a logic zero. If the signal 58 is detected as a logic zero prior to the detection of the signal 122 as a logic zero, control transfers to block 134. If the signal 122 is detected as a logic zero prior to the detection of the signal 58 as a logic zero, control transfers to block 132.

Output block 134 sets the signal R-GATE 82 to a logic zero which terminates conduction of transistor 80 which results in a turnoff of the transistor switch 60 thus simulating the action of the weld contactor 20. Control is then transferred to the timing loop made up of blocks 136 and 138. Block 136 increments a timing counter within the microprocessor 50 for every traverse of the loop made up of blocks 136 and 138. Decision block 138 terminates the traverse of the loop when the signal 122 becomes a logic zero indicating extinction of the actual welder current. Thus the loop counter in the block 136 contains a count of the number of traversals of the loop defined by blocks 136 and 138 which is a measure of the time interval between the switching of the signals 58 and 122 in that order to a logic zero. Control then transfers to a block 140.

As previously mentioned, if the signal 122 becomes a logic zero prior to the signal 58 becoming a logic zero, control is transferred to the block 132. This occurs when the potentiometer 62 in the modeling circuit 51 is misadjusted causing the signal 84 to extinguish after the actual welder current extinguishes. Block 132 issues a diagnostic message advising the operator to increase the power factor of the modeling circuit by adjusting potentiometer 62. The potentiometer 62 is incrementally adjusted and another weld is initiated. The adjustment of the potentiometer 62 is repeated until welds are completed without a diagnostic message from block 132.

A decision block 140 is used to prevent an analysis of the timing data occurring during the first few half cycles of a weld period because the resistance of work piece 38 varies indeterminately during the beginning of the period and thus does not produce reliable data. The timing data occurring during the first four half cycles of the weld period is ignored and the results of half cycles 5 and 6 are retained and respectively stored in the odd or even memory storage locations of the microprocessor 50. Control of the weld is returned from the decision block 140 to the weld subroutine 126 during the first six half cycles of the weld period. Beginning with the seventh half cycle, the decision block 140 control is transferred to a decision block 142 which determines whether a half cycle under consideration is numerically odd or numerically even. In the case of the seventh half cycle, which is odd, the control is transferred to an arithmetic block 144 where the time T7, in 5 microsecond increments, has subtracted from it the time of the previous odd half cycle, e.g. time T5. Therefore, the arithmetic equation is $T_n - T_{n-2} = T_n$. Thus, the result of this subtraction forms Delta T7. In the next half cycle which is an even numbered half cycle, an arithmetic block 146 is used as a control to form Delta T8 which is equal to time T8 minus time T6 (T8 = T8 − T6). In this manner, the Delta's T's for all the subsequent half cycles are formed. Preferably the Delta T's are determined on an odd minus odd and even minus even basis to cancel polarity sensitive timing errors such as rectification at the welding tips due to oxide and other impurities, or unequal response times of the SCR's in the welding contactor 20.

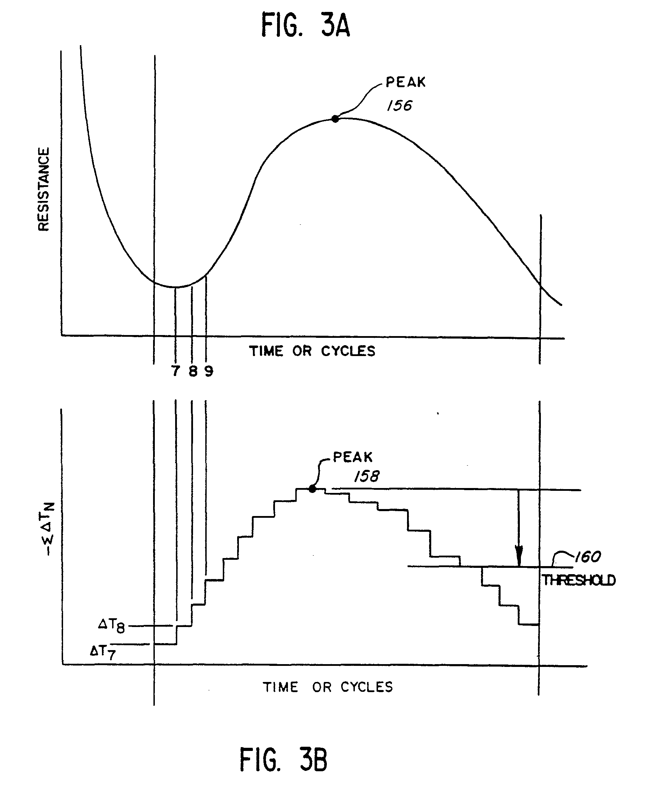

It can be demonstrated that for small changes in resistance, the Delta T's derived in the foregoing manner are proportional to the negative time derivative of the resistance versus time function of the dynamic resistance curve produced during the progress of a weld. To reconstruct a numerical representation of the resistance versus time function suitable for analysis by the microprocessor, it is necessary to form a negative integral of the Delta T function. In numerical terms, this is accomplished by a summation operation performed in summation block 148. If the output of the block 148 is plotted with respect to time or weld cycles, a curve similar to Fig. 3B results which is an approximation of the dynamic resistance curve shown in Fig. 3A. The height of the curve in Fig. 3B at any instant is equal to sum of the preceding Delta T's.

Studies of weld strength versus resistance of the weld area demonstrate that a quality weld will be achieved if weld current is continued until the resistance across the weld is reduced a predetermined amount after peak 156 in Fig. 3A is reached, also approximated by the peak 158 in Fig. 3B. A decision block 150 determines if a peak in the data from the block 148 has occurred. If a peak is reached, a decision block 152 measures the drop from the peak value 158 in Fig. 3B and compares the value of the drop to a threshold value 160 as seen in Fig. 3B which is a preselected value. If the peak is not reached, the control exits decision block 150 and returns to the weld subroutine block 126 to continue a weld. If the drop from the peak 158 is equal to or greater than the threshold value as determined by decision block 152, the microprocessor 50 does not return to the weld subroutine 126 to continue the weld and transfers control to an operation block 154 where the operations such as "hold" that complete the weld sequence are performed. Exiting operation block 154, the microprocessor returns to the standby mode. In the event block 152 does not transfer control to block 154 before the pre-programmed weld cycle counts have been reached, control is transferred from block 126 directly to block 154. Block 154 terminates the weld at its maximum duration and begins a hold period as described in the '724 patent.

Description of the preferred embodiments

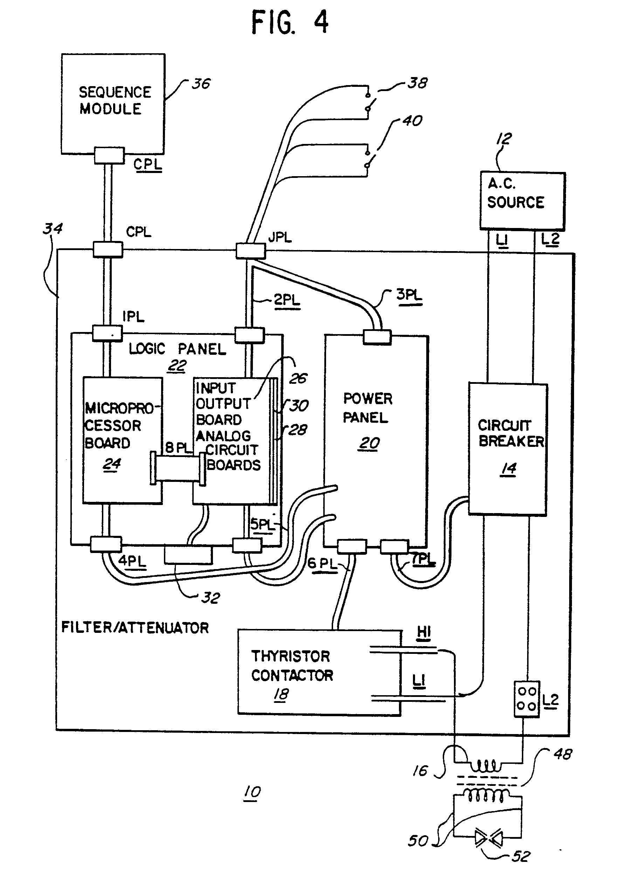

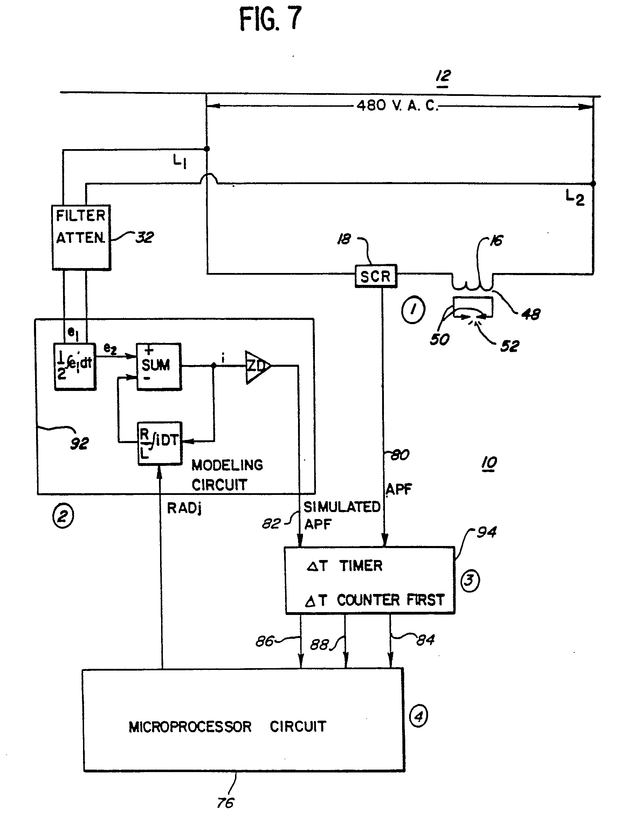

Referring to Figs. 4 and 7, a feedback welder control system 10, that can be used in any general, industrial or commercial installation is connected to a power source, such as an alternating current power source 12 typically of a 480-volt potential, having lines L1 and L2, which are connected in any known manner through a circuit breaker 14. Line L2 is connected to the primary of a welding transformer 16, and L1 is connected to the primary of the welding transformer 16 through a thyristor contactor 18 and a line H1, as shown in Fig. 4. The circuit breaker side of power lines L1 and L2 are also connected to a power panel 20 through a cable 7PL, as shown in Fig. 4. The power panel 20 is connected to the thyristor contactor 18 through power cable 6PL. A logic panel 22 contains a microprocessor board 24, an input/output board 26, and an analog circuit board 28 with a shield 30 therebetween or, alternatively, the analog and I/O boards could be combined on a single board, all of which are interconnected by a signal cable 8PL. The microprocessor board 24 contains an 8-bit microprocessor of any known type (not shown), such as a Motorola M6800. The 8-bit microprocessor includes read only memories and other registers containing the executive program, random access memories (RAM) containing the program constants of the weld sequence, port registers and various gate and amplifying circuits interconnecting the above-mentioned integrated circuits of the microprocessor in any known manner in the art. The microprocessor board also includes a battery for retaining the data stored in the RAM whenever the welder controller is deenergized. The battery and the data retention circuit for the RAM is trickle-charged during normal operation when the welder controller is powered from the line and has a useful life of approximately 21 days for retention of the data in the RAMs when the welder controller is deenergized.

The input/output board (hereinafter called I/O board) 26 serves as an I/O signal conditioner to interface the processor bus. The I/O board also contains initiation and fault relays which energize and de-energize the welder solenoid upon triggering the gun or upon a fault occurring, respectively. The I/O board also contains a solenoid amplifier for providing enough power to operate the selected solenoid. Both the microprocessor board 24 and I/O boards 26 communicate with the power panel 20 through cables 4PL and 5PL, respectively. The analog circuit board 28 is connected to lines L1 and L2 through a filter/attenuator 32 to be described in greater detail later. The logic panel 22, filter/attenuator 32, power panel 20, thyristor contactor 18, and circuit breaker 14 are all housed within a contactor module 34.

A sequence module 36 communicates to the microprocessor board and the contactor module 34 through cables CPL and 1PL. The sequence module 36 provides a means for entering the weld schedule, setting pattern recognition limits, and interrogating the microprocessor to be described in greater detail later. It also displays a diagnostic readout, provides a fast adjust and a feedback mode of operation and includes other operator controls for the feedback welder controller. A remote no-weld operator switch 38 and an initiation weld operator switch 40 are connected through cables JPL, 2PL and 3PL to the logic panel 22 and power panel 20. The operation of switches 38 and 40 will be described in greater detail later.

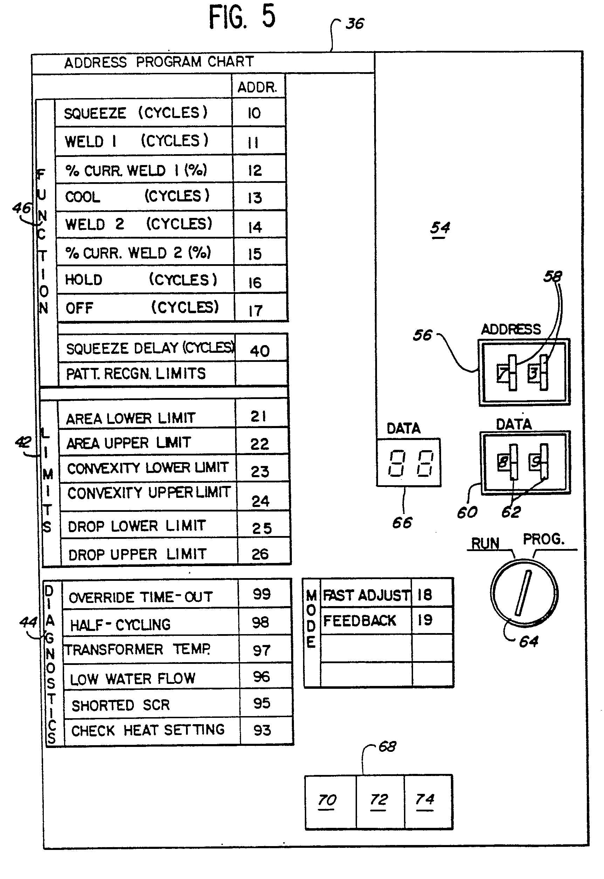

The feedback welder control system described herein operates in a similar manner to the one described in the '724 patent with the exception of its operation during the time that weld current is flowing. Moreover, the maintenance interval counter and compensator (MICC) of the '724 patent is no longer needed and it is replaced on the address program chart of Fig. 5 corresponding to Fig. 4 of the '724 patent by addresses for pattern recognition limits 42, to be described in greater detail later. All other operations, such as communication with the sequence module 36, diagnostic checks 44, timing of the non-current steps in the welding sequence, etc. are carried on in a manner which is described in the '724 patent, incorporated herein by reference. For the sake of simplicity, this embodiment has only one sequence which can be selected by the operator, rather than three, as in the '724 patent. As previously mentioned, the circuitry and feature called MICC is not required because the use of feedback to vary the length of weld supplants the need for this feature.

Turning now to Fig. 5, a weld operator enters the weld schedule in a function section 46 having addresses 10—17 and 40 in the same manner as in the '724 patent. Ideally, for the current selected, the weld time is in excess of the minimum required to provide an acceptable weld. In addition, the operator will enter the acceptance limits of the features extracted from a dynamic resistive curve as each weld is performed. These limits for area, convexity and drop are entered into addresses 21—26. During the normal operation of the feedback welder control system, a control circuitry stops the weld current when these three features (area, convexity and drop) are all simultaneously between their upper and lower limits which are determined empirically from the material to be welded.

Prior to using the welder with its feedback welder control system, the electronic simulator or model circuit is adjusted to match the actual load circuit consisting of a welding transformer 48, its cables 50, and welding gun with electrodes 52. This adjustment process is greatly expedited by putting the welder control into a fast adjust mode. To accomplish this adjustment, reference is made to a front panel 54 of the sequence module 36 which includes an address readout 56 and its thumbwheels 58, a data readout 60 and its thumbwheels 62, a key operated run/program switch 64 having a run and a program mode, an LED data display 66 having a display of the data currently stored in the memory location set on the address thumbwheels 58 and entry switches 68 having individual operator buttons 70, 72 and 74, which perform the same function as switches 82, 80 and 74, respectively, as described in the '724 patent. The welder control is placed in the fast adjust mode by dialing an address 18 on the thumbwheels of address display 56 and then entering an non-zero number on the data thumbwheels 62. This non-zero number on the data thumbwheels 62 is actually entered into the RAM memory location 18, the fast adjust mode, by depressing the enter/reset switch 74. Then, the LED data display 66 displays the data currently stored in the memory location 18 set on the address thumbwheels 58. So now the operator can check to see if, indeed, the dialed data on the data thumbwheels 62 has been entered or not. In this fast adjust mode 18, the microprocessor checks the "First" input and will incrementally change N (the power factor adjust word) in a manner which will minimize the difference between the welder extinction angle and the electronic simulator or modeling circuit extinction angle. For example, if the "First" input is a logic one, the modeling circuit power factor is too low and the microprocessor will add one to N. Subtraction of one occurs in the opposite case. This adjustment process occurs on each half cycle until the electronic simulator or modeling converges to a unit one limit cycle around the ideal adjustment point for N. To obtain the best results, this adjustment can be made while over welding on a sample coupon (type of metal to be welded on) to include the workpiece resistance in the adjustment.

After the fast adjustment of the welder controller has been completed (the worst case requires 250 half cycles for adjustment and that the adjustment interval is divided into two to the eighth power segments), the welder controller is set-up to be used in the feedback mode. To accomplish this, the operator resets the address location 18 to zero by dialing data thumbwheels 62 to read zero and entering that zero number into the RAM memory by depressing the enter/reset switch 74 to inhibit the fast adjust mode 18. Then, the operator dials address thumbwheels 58 to number 19 and dials data thumbwheels 62 to a non-zero number for enabling the microprocessor of the welder controller to halt the weld current when the dynamic resistive curve features are within the pattern recognition limits 42, previously dialed into the microprocessor of the controller in a similar manner as the fast adjust and feedback modes were set. To compensate for the effects of cable heating, electronic component drift, etc., the microprocessor checks the dynamic resistive curve during the valley of said curve and, based on the signal of this data, makes an incremental adjustment of N early in the next weld in a manner similar to that of the fast adjust mode. The valley point resistance is chosen as a basis for adjustment because it remains fairly constant from weld to weld and is in an area of minimal slope, as shown in Fig. 12.

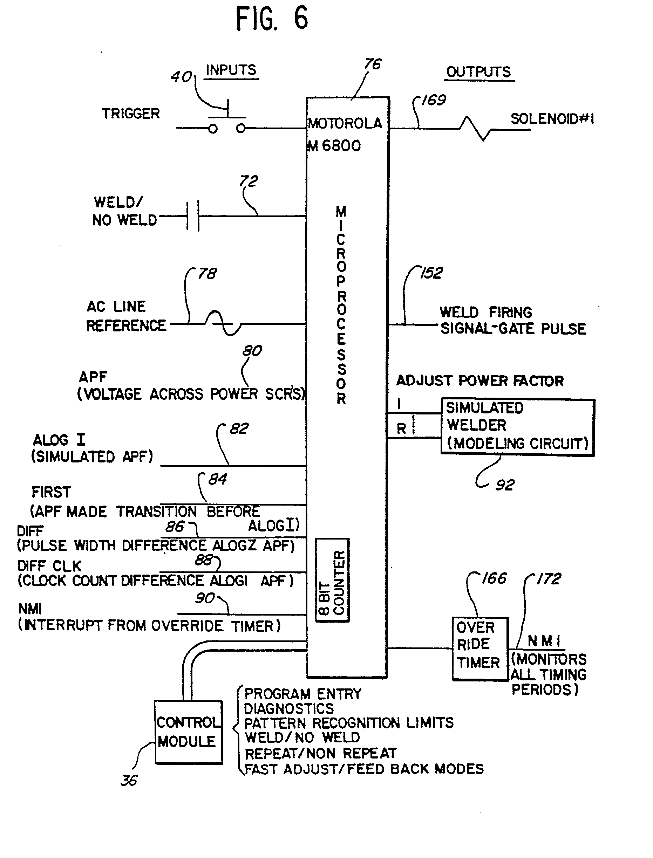

As in the '724 patent, all control signals are interfaced to the microprocessor via its input/output structure. Fig. 6 shows the input and output signals of a microprocessor 76. When power is applied to the welding controller by actuating trigger switch 40, the microprocessor 76 initializes itself as well as its supporting circuitry. Once the welding controller is initialized and is in a standby mode, there is communication between the sequence module 36 and the microprocessor 76. Another input to the welder is the weld/no-weld contact 72 operated by the remote weld/no-weld switch 38 or by switch 72 on the front panel 54 which is a two position switch. With this switch in the weld position, welding current will be passed during a weld initiated by the trigger switch 40. In the no-weld position, the welding controller can be sequenced and no weld current is passed. An AC line reference signal 78 and automatic power factor signal 80 which reflect the voltage across the power SCRs are both inputs into the microprocessor 76 and function in the same manner as described in the '724 patent. An Alogl 82 is a simulated automatic power factor signal from the electronic simulator (modeling circuit). A FIRST input 84 which indicates that the actual weld current makes its transition before the Alogl signal is another input signal to the microprocessor 76. A DIFF input 86, the pulse width of which is equal to the time difference between Alogl and the automatic power factor transitions, is another input to microprocessor 76. Differential clock signal 88, which contains clock counts proportional to the time difference between Alogl and the automatic power factor, is another input. An NMI input signal 90 which is an interrupt signal from override timer. The outputs of the microprocessor are similar to that found in the '724 patent except for the signal fed to the electronic simulator which adjusts its power factor to closely match that of the actual welding circuit during this fast set-up mode 18.

Theory of operation

As previously stated, the feedback welder control system utilizes an 8-bit microprocessor as one of its main control elements. The software program to accomplish the welding controller function resides in the programmable read-only memory (PROM). This memory is non-volatile; that is, the executive program is permanent, even with the memory unpowered. However, the constants for the weld schedule (squeeze-weld-percent current-cool-weld-off times, pattern recognition limits, diagnostics, etc.) are stored in the programmable memory registers known as the RAMs.

Now, referring to Fig. 7, the feedback welder control system consists essentially of four circuit sections. The first section consists of the actual welding transformer 48, welding gun with its electrodes 52 and cables 50, and SCR thyristor contactor 18 used to control the current through the welding transformer. The second major section of circuitry consists of an electronic simulator or modeling circuit 92 which in this case, is an analog circuit but could be just as well a digital circuit that is used to simulate the actual welder circuit referred to in the first section of this feedback system. The third section includes a timer circuit 94 which determines the timing differences between the simulated signals from the electronic simulator 92 and the actual signals coming from the primary 16 of the welder 48. These timing differences are then fed to the microprocessor 76 where it is compared to the limits stored in the RAM memories of the microprocessor 76 which is the fourth section of this feedback welder control system.

The microprocessor 76 in the fourth section of the system compares the information generated from the actual welder with that information generated by the simulated reference welder 25. The pattern recognition limits stored in the RAM memory locations of the microprocessor defines a three dimensional block 66. The pattern recognition limits are originally determined empirically for the particular metal to be welded and correspond to a quality weld. Features are extracted during a weld and, when all of them are mapped into the block 66, a satisfactory weld nugget is formed. The extracted features representing a change in the resistance fall into the following categories: (1) area under the dynamic resistive curve; (2) convexity or shape of the curve; and, (3) the resistive drop, as shown in Fig. 12, indicative of a completed weld. As noted above, a heuristic process is involved in the determination of the range of these limits which will change according to the materials and equipment used.

The electronic simulator or modeling circuit section referred to as the simulated reference welder includes the filter/attenuator 32 which provides the input reference signal derived from the line voltage source 12 as is the actual welding circuit so that a simulated current waveform can be constructed fully affected by line voltage waveform distortions. In essence, the electronic simulator (modeling circuit) solves a differential equation representing the equivalent RL network of the actual welder. This modeling circuit 92 is adjusted by the microprocessor 76 to closely match the actual welding circuit to be described in greater detail later. The primary difference between the simulated reference welder and the actual welder is that the actual welder has material to be welded between its electrodes and the simulated reference welder has no such material. Therefore, any changes in the signals from the simulated reference welder and the actual welder should then only reflect the resistive changes in the material being welded.

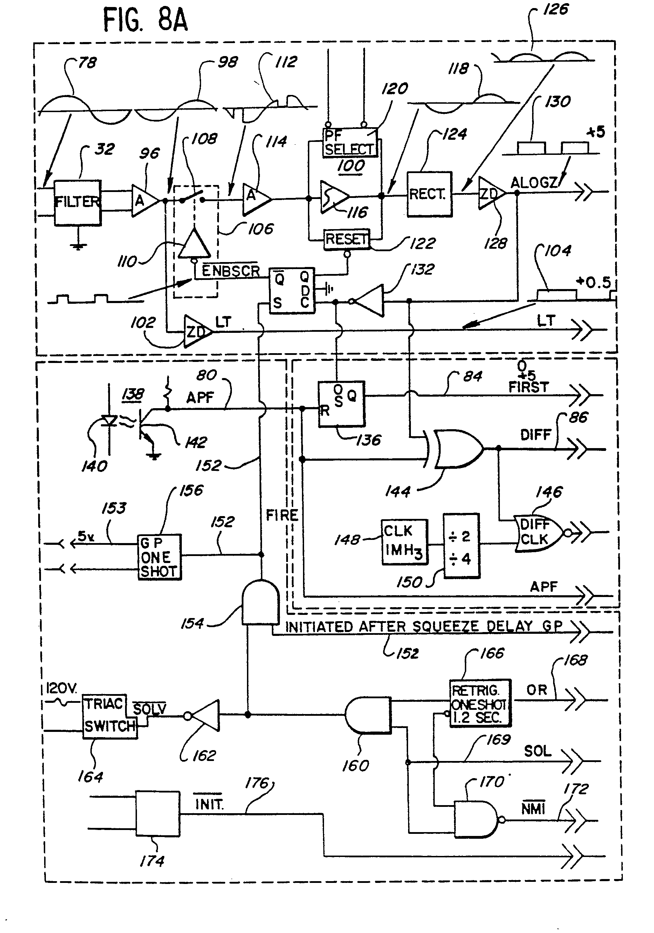

Turning now to Fig. 8A, a more detailed circuit logic block diagram is shown which represents the analog circuitry of the electronic simulator 92. Also included is the circuitry of section one and section three of Fig. 7. This circuitry includes a digital timer as well as the I/O signals necessary for operation of the welding tool. The voltage reference signal 78 from the 480-volt line is inputted to the filter/attenuator 32. This input voltage is sinusoidal voltage as shown in waveform 78 thereabove. The purpose of the filter/attenuator is to first filter out differential mode noise. Secondly, the filter divides down the voltage to a usable level. Once the 480-volt line is divided down to a usable level or approximately +10 or −10 volts maximum, and, 4—6 volts, the reference signal can be fed into a differential operational amplifier block 96. This amplifier blocks's characteristic is a high common mode rejection. Unwanted common mode signal is reduced by this amplifier. The signal at this point is inverted, as shown by waveform 98 in Fig. 8A. The inverted signal at this point divides into two separate routes. One route goes to an analog simulator 100, and a second route goes to zero detection circuit 102. The output of the zero detection circuit 102 becomes a lead trail reference signal 104. In the first route, the signal proceeds to a circuit block or SCR simulator 106 comprising a switch 108 operated by an amplifier 110 so that the switch and amplifier simulate the operation of the SCR 18 in the actual welder circuit. The switch 108 is closed at the same time a gate pulse is initiated to fire the SCRs in the actual welder. The action of the SCR simulator 106 produces a chopped signal as shown in waveform 112 which is then fed into an amplifier 114 which receives the chopped sinusoidal waveform 112 and acts as a buffer and inverts the signal. The inverted signal is then fed into an integrator circuit 116. The integrator 116 solves a differential equation for an equivalent RL network corresponding to the actual RL network of the welder and converts the voltage waveform 112 into a current waveform 118.

Moreover, the power factor of this reference welder represented by the analog circuitry can be varied to match the actual welder power factor through a power factor select circuit 120. The power factor select circuit 120 is an individual binary weighted resistor which is switched in and out by analog switches. When all switches have a logic zero output, then the highest power factor of .8 is simulated. However, this power factor select circuit 120 can also be a Digital to Analog Converter (DAC), such as a National Semiconductor DAC 1020 having the switches plus an R-2R ladder resistor network. In this case, when all switches have a logic one input, then the highest power factor of approximately .8 is simulated. All zeros on the PIA ports result in the lowest power factor of .4. A total of 8 bits will divide the amount of feedback from zero to 255 parts. At the end of a current conduction cycle, a reset circuit 122 will dump a capacitor of the integrator circuit 116. This will allow re-initiation of the integrator 116 for the next half cycle of current conduction. The current signal 118 is then fed into a rectifying circuit 124 which produces a signal waveform 126. This signal is fed into another zero crossing detector 128. The output of the zero crossing detector 128 is a waveform 130 known as the Alogl signal 82. This Alogl waveform 130 is equivalent to the APF signal from the actual welder. The Alogl signal 130 is thus the reference welder's automatic power factor signal.

Referring back to waveform 130 (Ālogl), this signal is then sent to an inverter circuit 132 where it is inverted. The reason for this is so that the trailing edge of Alogl waveform 130 will clock in a zero to a flip-flop circuit 134, which acts as the control for the simulated SCR circuit 106 and the reset circuit 122 of the integrator 116. The 1-0 transition of Alogl waveform 130 opens the switch 108 simulating the SCR action which would normally turn off at this zero crossing of the current. The inverted Alogl signal 130 is also fed into another flip-flop 136. The APF signal 80 from the actual welder is also fed into flip-flop 136 via an isolation circuit 138 comprising a light-emitting diode 140 and an opto-isolator transistor 142 so that the analog circuitry on a logic voltage level is isolated from the power circuit of the actual welder. The Alogl signal 130 and the APF signal 80 are used to determine which one was the last signal to activate the flip-flop 136. Knowing this information, it is possible to then determine which one, the Alogl signal 130 or the APF signal 80, came first. The Alogl and the APF signals 130 and 80, respectively, are also fed into a decision circuit 144 which is an exclusive OR gate. OR gate 144 will be a logic one while there is a difference between Alogl signal and APF signal. This difference between Alogl and APF signals is known as a difference signal 86 at the output of the exclusive OR gate 144 which is used to gate a clock signal and allows a number of clock pulses which are representative of a time difference between Alogl and APF signals. A difference clock circuit 146 has one input from the exclusive OR gate 144 and a second input from a clock 148 whose signal to the difference clock circuit 146 is modified by a divide down network 150 known as a scaler. The clock 148 runs at a fixed frequency and can be divided by one, two or four.

A gate pulse signal (GP) 152 is sent from the microprocessor to a gate circuit 154. This gate pulse signal 152 is ANDed with the condition that the override timer is not timed out and the solenoid valve is initiated. Gate circuit 154 feeds flip-flop 134 to initiate the operation of switch 108 of the SCR simulator circuit 106. The gate circuit 154 also initates the GP one-shot circuit 156 which has an output signal 153 of approximately 5 volts for 25 microseconds. From circuit 156, this gate pulse 153 will be sent to the power module 20 which has pulse transformers that fire the SCRs in the welder. The ANDed condition of the override timer and solenoid valve are summed at an AND gate 160 which, in turn, feeds an inverter circuit 162 which serves as an amplifier for a triac switch circuit 164 to operate the solenoid valve in its 120-volt AC circuit. The triac switch circuit 164 is a solid state switch having an output of 120 volts and one amp. An override timer or retriggerable one-shot circuit 166 is initiated by an OR signal 168. The OR signal 168 is pulsed at least once every second by the microprocessor or a time out condition will occur. If the override timer circuit 166 times out while the solenoid valve is on, NAND circuit 170 produces an output signal 172. This signal 172 is a non-maskable interrupt signal (NMI) that goes back to the microprocessor and should re-initiate the override timer 166 and, at the same time, displays a flashing 99 error in data display 66 on the front panel 54 of the sequence module 36.

A circuit block 174 is the initiation circuit which is actuated by the trigger on the gun of the welder to input a 24-volt DC signal into circuit block 174. The output of circuit block 174 is a signal 176 to initiate (INIT) which instructs the welder controller to begin the welding sequence.

After the set-up procedure is completed where the parameters for determining a good weld have been selected by entering the pattern recognition limits and addresses 21—26, as shown in Fig. 5, the feedback welder control system of the present invention is ready to begin a normal welding sequence. When the operator pulls the trigger on a gun welder or engages an operating button on another type of welder, the initiation signal 176 from circuit block 174 is received by the welder control system. Upon receiving this initiation signal 176, the microprocessor of the welder looks for the lead trail signal 104 coming from zero detection circuit 102. Once the controller is synchronized with the lead trail signal 104, the override timer 166 is initiated. Once the timer 166 is initiated, a solenoid valve signal 158 is given. During a condition when the override timer 166 is initiated or operative and the solenoid valve signal 158 is present, AND gate 160 has an output logic signal which then activates inverter circuit 162 and, in turn, triac switch circuit 164, and then the solenoid valve signal 158 is issued to operate the solenoid valve. At this point in time, gate circuit 154 is activated and provides an input signal to gate pulse circuit 156 which, in turn, provides the gate pulse 152. As previously outlined in the '724 patent, a normal sequence of events is to go through the squeeze delay and then the actual squeeze of the electrode tips together. During the squeeze period of time, the microprocessor looks for the lead trail signals and counts lead trail transitions. Once the squeeze delay and squeeze time are completed, the welder control will initiate the weld pulse. The weld pulse is initiated by waiting a certain time from the lead trail transition and then firing the gate pulse circuit 156. The one-shot output signal from the gate pulse circuit 156 initiates the SCRs of the actual welder. When the SCRs are initiated, flip-flop 134 receives a signal and that, in turn, operates the SCR simulator 106 and switch 108 closes which, in turn, energizes the analog simulator, as previously described. The reference welder section two of Fig. 7, as previously described, is tuned by adjusting the power factor to emulate that of the actual APF signal from the actual welder. A certain number of weld cycles will be ignored after the initiation of a weld pulse and those first few cycles fall within what is called a blanking period before any reference signals are used by the feedback welder control system. Once the blanking period has passed, typically three to four half cycles, the microprocessor accumulates the differences in time between the AP and Alogl signals in a RAM memory location. This information is retained by the microprocessor and compared to the pattern recognition limits to extract certain features which represent a quality weld.

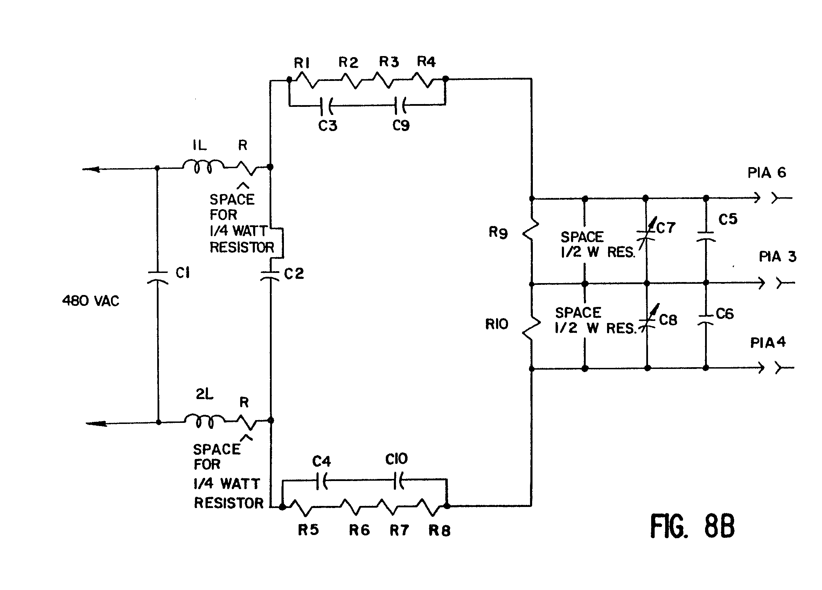

Next, a more detailed discussion of the circuitry of Fig. 8A and the signal processing will be described through Fig. 8B. The voltage reference signal goes through the filter/attenuator 32, as shown in Fig. 4, and is conditioned before it is fed to the simulated reference welder for analog circuitry. The first stage of the filter/attenuator 32 as shown in Fig. 8B consists of a differential noise filter and a voltage divider network used to divider the 480 volts down to a voltage level usable by integrated circuit components found in the electronic simulator, such as 4—6 volt peak-to-peak value. The filter consists of two inductors 1L and 2L and capacitors C1 and C2. Two resistors R are connected in series to conductors L1 and L2 in order to moderate the natural resonance of the filter. A voltage divider is connected in series with the filter and is comprised of resistors R1—R10. Capacitors C7 and C8 are connected across resistors R9 and R10, respectively, and they are adjustable in order to compensate the incoming signal for phase shift due to stray capacitance. From points across resistors R9 and R10, the conditioned logic level signal is fed to an input amplifier and buffer stage.

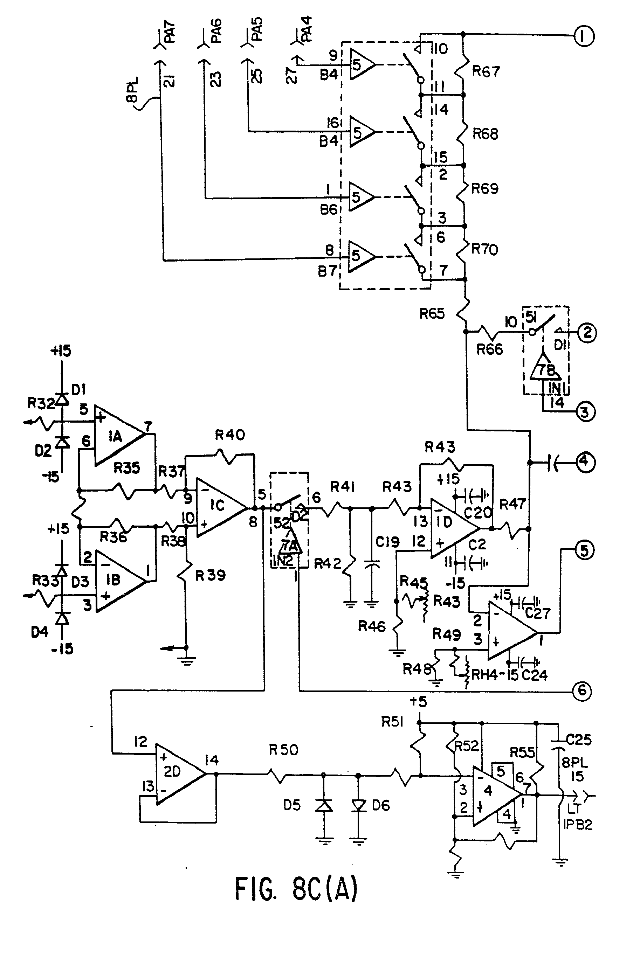

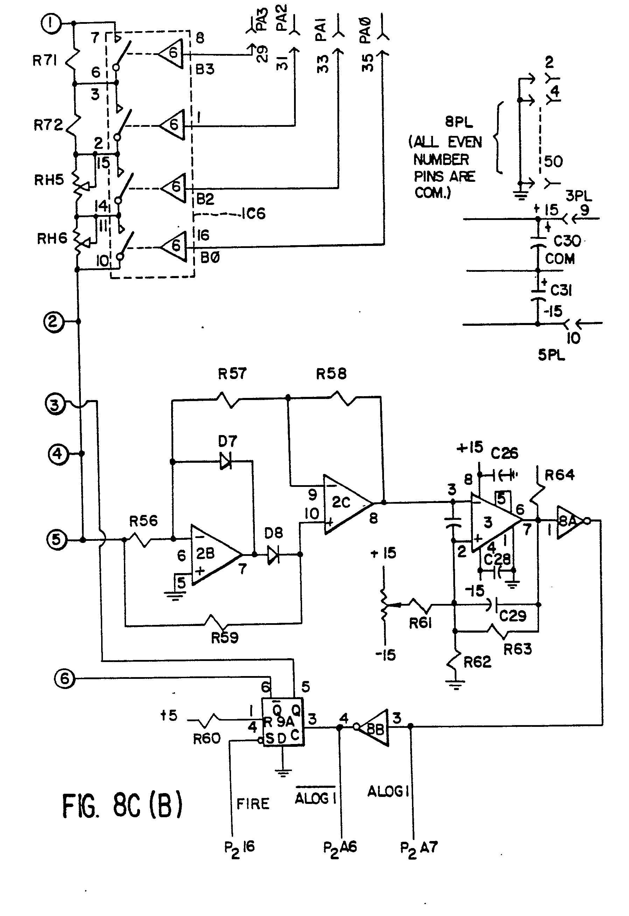

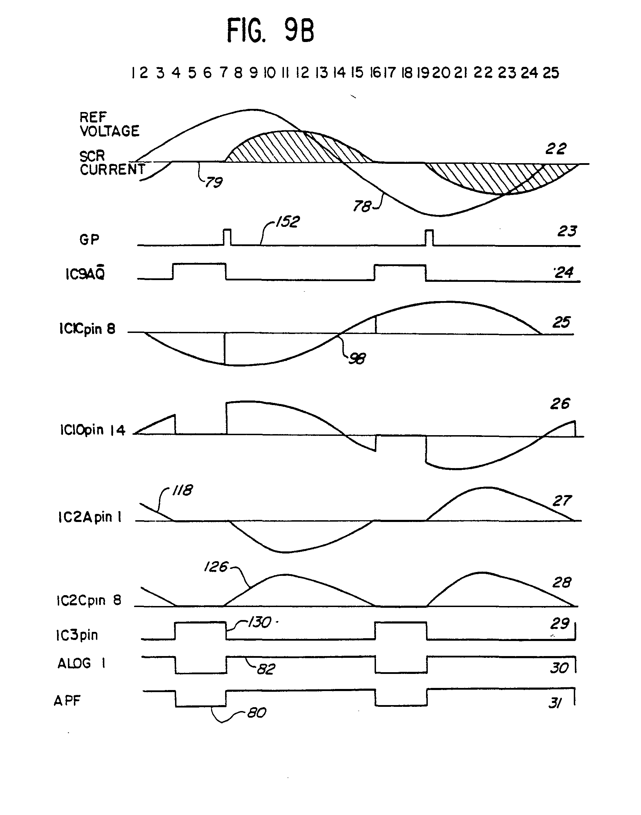

This conditioned logic level voltage reference signal goes to an integrated circuit chip 1 (IC1) in Fig. 8C and its associated circuitry which makes up a differential input instrumentation amplifier. This amplifier has a high common mode

**0 050 950**

rejection. Its primary purpose, therefore, is to reduce unwanted common mode signal and act as a buffer. The input to IC1 is shown as a waveform 78, as shown in Figs. 8A and 9B; the output waveform is shown as a waveform 98 on Figs. 8A and 9B. This signal then divides those into two separate circuits: (1) the analog circuit; and, (2) the lead trail circuit.

The waveform 98 is routed to lead trail circuit comprised of several integrated chips, such as IC2D which is a voltage follower. The output signal of IC2D feeds a zero crossing detection circuit IC4 and peripheral components. A pair of diodes D5 and D6 are connected in series between the low voltage follower and the zero crossing detection circuit and limits the signal excursion. The output zero crossing detection circuit IC4 is a logic level signal typified by waveform 104 of Fig. 8A, known as a lead trail signal. The 1-0 and 0-1 logic level shifts denote the zero crossing of the reference voltage signal waveform 78.

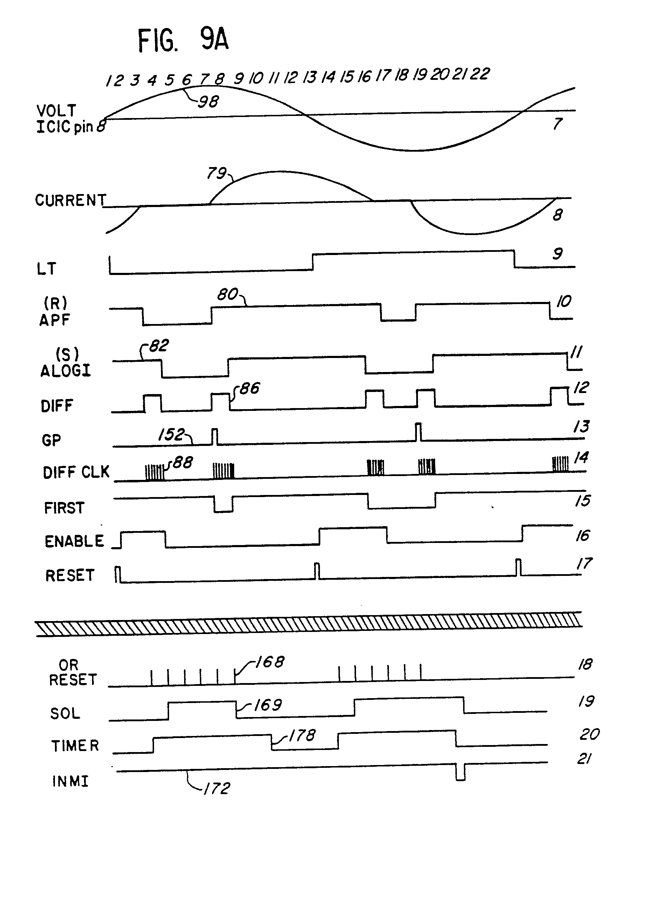

The analog circuit consists primarily of a number of integrated chips (IC) 1A-D, 2A-C, 3, 4, 5, 6, 7A-B and 8A-B with their associated components. The voltage reference signal 78, which is fed to the electronic simulator circuitry or modeling circuit 92, goes through a switch 7A which simulates the SCR of the actual welder. This switch 7A which is an integrated chip phase controls the voltage reference signal as fed into an integrator 116 of Fig. 8A connected in series through 1C. This signal first goes to a buffer amplifier 1D then from there the signal goes into the integrator which is made up of IC2A, capacitor C22, IC5, IC6 and associated resistors R65—R72, and RH5 and RH6. The resistors in the analog switches in the feedback circuit of the integrator IC2A (116) allow the microprocessor to adjust the power factor of this simulator weld circuit. The switches IC5 and IC6 and the resistors connected thereto form a binary weighted resistor network. The setting of this resistor network, which is adjusted by the microprocessor, determines the amount of feedback to the integrator IC2A. The logic one from the microprocessor to all of the switches will cause all of the switches to open. This means more resistance in the feedback loop. More resistance will decrease the power factor. When all switches in IC5 and IC6 are a logic zero, the highest power factor of .8 is simulated. The feedback welder control system described herein is designed such that the lowest power factor (output of the microprocessor two switches IC5 and IC6, all being logic ones) is approximately equal to .4. The output of IC2A is a simulated current waveform 118 of Figs. 8A and 9B. This signal is, in turn, fed to the rectifying circuit consisting of integrated chips 2B and 2C and their associated circuitry. The rectified signal shows as waveform 126 of Figs. 8A and 9B is then fed through the zero crossing detection circuit of integrated chip 3 and its associated components. The output of IC3 resembles waveform 130 of Figs. 8A and 9B and will be a logic one during the absence of current and a logic zero during current conduction. This signal is then further conditioned by integrated chip 8A and produces the Alogl waveform signal 82 of Fig. 9A. This is a simulated automatic power factor signal 82 fed to the counter circuit in the third section of the feedback welder control system, as shown in Fig. 7. The zero crossing of the current signal will turn off the simulated SCR. However, because we are simulating the SCR by switch IC7A, switch IC7A must open to turn off the signal. This is accomplished by using the Alogl signal 82 with integrated chip 9A which is the flip-flop 134 whose output then controls the on/off selection of the simulated SCR 1C7A. Simulated SCR 1C7A is turned on by the gate pulse (GP signal 152 of Figs. 6, 8A and 9A) and is turned off by the zero crossing of the current pulse. IC9A is set by a signal called FIRE (GP signal 152) and is cleared for reset by the Alogl signal 82. This causes a simulated SCR switch to first close for a period of conduction and open at the end of conduction. At the same time, an output from IC9AQ is used to dump the integrator portion of analog circuitry. This is done by a circuit consisting of integrated chip 7B and resistor 66. This circuit resets the integrator and makes it ready for the next current conduction cycle. This completes the circuitry which comprises the analog circuit section which will be referred to as the reference welder circuit or modeling circuit, which is the second section of Fig. 7.

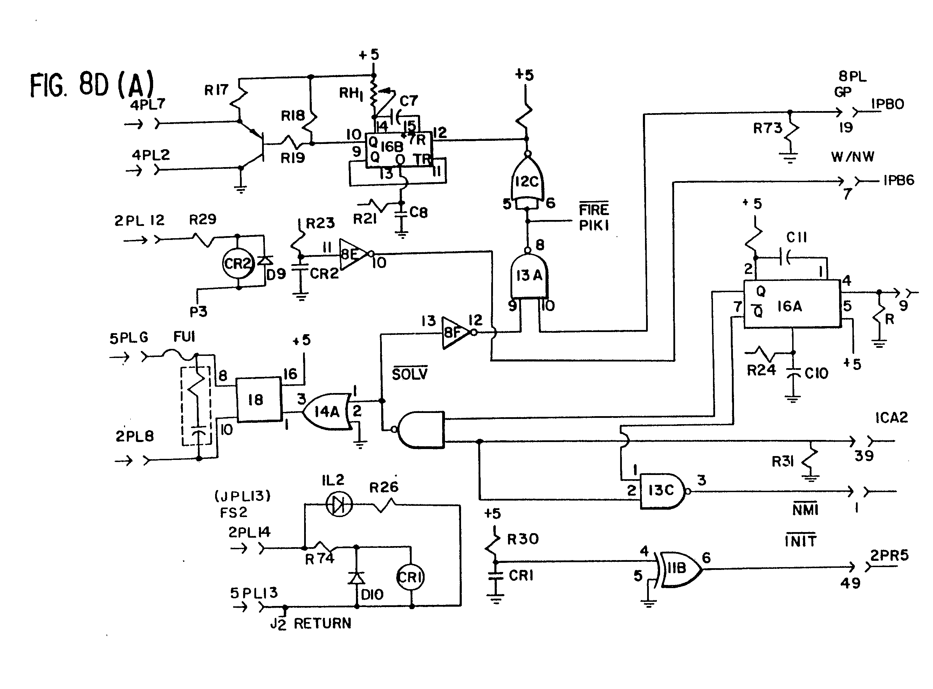

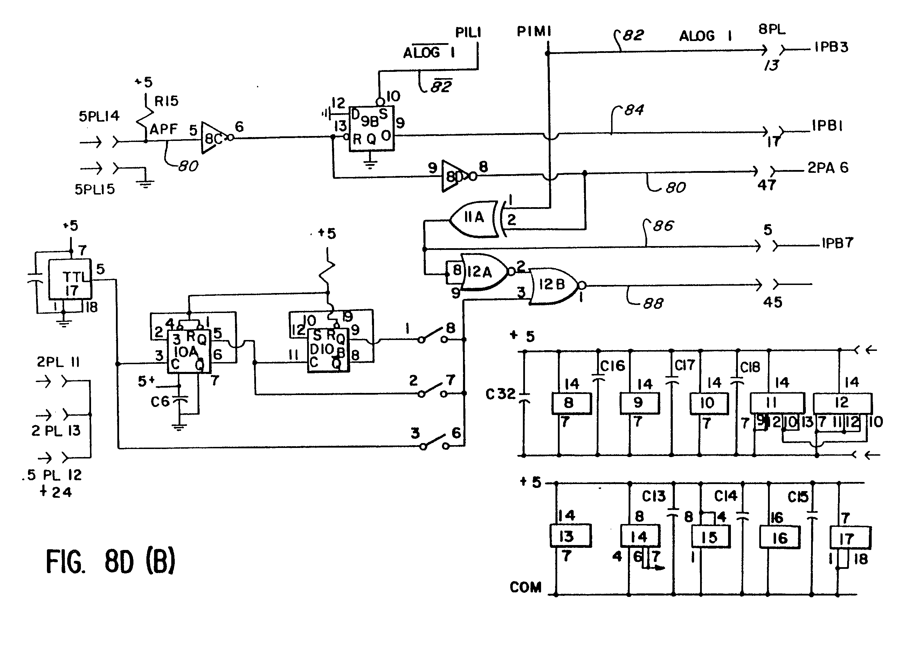

Now, reference is made to the timing sequence in the feedback welder control system, as shown in Fig. 8D. Section three of Fig. 7 is a timer counter. Signals from the welder as well as from the simulated welder are fed into the timer circuitry 94. The automatic power factor circuit of the actual welder produces a signal 80 (Figs. 7 and 9A) and corresponds to current conduction of the SCRs in the actual welding circuit. This signal is buffered by integrated chip 8C and is fed into an integrated chip 9B (chip 136 in Fig. 8A). The presence of current flow through the welding SCRs will reset IC9B if there is no Alogl signal present. The Alogl signal sets flip-flop IC9B in the absence of a reset signal. The Q output of IC9B is designated as the signal FIRST 84 of Figs. 7, 8A and 9B. At the trailing edge is a DIFFERENCE signal 86 of Figs. 7, 8A and 9B which follows the lead trail transition; the FIRST signal 84 designates which of the two signals, APF 80 or Alogl 82, has the last 1-0 transition. The logic zero indicates that the APF transition was last.

The DIFFERENCE signal 86 produced from Alogl 82 and APF 80 are inputs to an integrated chip 11A which produces the exclusive OR at pin 3. This signal is named DIFFERENCE signal 86 and is a logic one whenever Alogl and APF do not match.

The difference clock consisting of a one megahertz clock oscillator integrated chip 17 of transistor logic is used as a time base. A binary divider IC10A and B receives this time base. The time base selection is accomplished when switch 1 is used to select one megahertz, 500 kilohertz, or 250 kilohertz. This time base is gated by a difference signal from IC12A which acts as an inverter. Thus, IC12B gates the clock time base during the time difference between APF 80 and Alogl 82. The output of IC12B is thus a number of clock pulses shown by waveform 86 of Fig. 9A, which represents the time difference between Alogl 82 and APF 80. The difference clock signal is fed to a binary counter integrated chip 26.

An override timer consists of integrated chip 16A and timing components which are set-up as a retriggerable one-shot circuit. Its function is as a WATCHDOG timer. If the microprocessor does not service this device by issuing the OR reset signal 168, shown by waveform 168 of Fig. 6A, before 1.2 seconds have elapsed from the time at which it was enabled, this timer will time out. The output of integrated chip 16A is gated with the solenoid signal 169 of Fig. 9A which, when present, indicates a weld is in progress. Integrated chip 13C provides a logic low when the control is in the process of welding and the override timer times out. This signal is the NMI signal shows as waveform 172 of Fig. 9A and interrupts the microprocessor. Note that the timer should be started before the solenoid signal 169 is issued to ensure proper operation of the NMI signal 172. A solenoid valve is controlled by integrated chip 13B which receives both the timer output signal 178 and the solenoid signal 169. The output pin 6 (signal solenoid) drives buffer 14A which activates the solid state relay IC18.

The gate pulse circuit operates in the following manner: the signal solenoid is inverted by IC8F and is used to gate IC13A. IC13A thus allows the gate pulse signal 152 to be issued. The output pin 8 is labelled FIRE or gate pulse signal 152. This signal is sent to the analog switch IC7A (simulated SCR 106) and also IC12C. The output of IC12C is used to trigger a one-shot circuit IC16B. This produces a signal pulse of approximately 25 microseconds. This pulse goes to the power panel where it is amplified and used to trigger the SCRs.

The initiation circuit is a user connection for the operator's gun trigger 40. The user provides a switch closure to this 24-volt circuit. This signal is used to activate relays CR1. The contact closure is buffered by IC11B and produces a logic zero which indicates trigger initiation to the microprocessor. The weld/no-weld circuit is similar to the initiation circuit. The contact closure is buffered by IC8E. Closure indicates a weld can be made.

As an overview to the timing sequence of the feedback weld control system the initiation circuit is activated when the weld is called for. The microprocessor then initiates the override timer and issues a solenoid valve signal. A squeeze delay and squeeze timing begins by the counting of the lead trail transitions. At the beginning of the weld cycle, the weld/no-weld is checked and, if in a weld position, the gate pulse signal 152 is given to fire the SCRs. At the lead trail transition, the clock difference counter of the microprocessor board is enabled. The counter is first reset and then enabled. The counter is now enabled to count the clock pulse difference between the APF signal 80 and the Alogl signal 82. Turning now to Fig. 9A, looking down vertical line 16, we can see that the APF signal 80 is a logic one and a transition has just occurred on the Alogl signal 82. A signal called DIFF or difference signal 86 will remain a logic one during the time the APF signal 80 and the Alogl signal 82 are at different logic levels. This allows a definite number of clock pulses to be counted which represents the time difference between the two signals. The FIRST signal 84 will tell the microprocessor that the Alogl signal 82 made the transition first; the counter is now disabled and the count can be read. This process is repeated through the weld to determine the difference in time between zero crossings of the current from the welder to that of the modeling circuit. This information is processed by the microprocessor which extracts information and, when the resistive changes fall within the pattern recognition limits set by the operator which characterize the formation of a good weld, the microprocessor terminates the welding cycle.

Referring back to a procedure for setting the pattern recognition limits to extract the features of a quality weld, the pattern recognition limits will depend on the type of material to be welded and the particular welding transformer and secondary circuit used. In general, the area and convexity limits should always be greater than a zero number and less than some large positive number. Typically, an experimental technique is used for determining the lower limits which may proceed as follows: (1) for material to be welded, a feedback welder control system is given limits via sequence module 36 controls to produce a weld of acceptable quality as evidenced from a few destructive tests of sample welds; (2) the operator reduces the weld time one cycle at a time until a minimum of time that will produce an acceptable weld is determined by the operator; (3) the operator uses the sequence module to read and record the values of area, convexity and resistive drop for the welds made in step 2 above; (4) the operator enters the values of the area, convexity and resistive drop found in step 3 above into the lower limit addresses 21, 23 and 25, respectively, of the RAM memories in the microprocessor by using the sequence module as described in the discussion of Fig. 5; and, (5) the upper limits of area, convexity and resistive drop are used primarily to inhibit the welder control system from stopping a weld when values for these three parameters develop which are greatly different from typical welds; this will inhibit false tripping in the event of some disturbances external to the welding processor and will allow the operator, in such cases, to use his experience and judgement to set these upper limits. Note, however, if these limits are set too low, some welds will not be stopped in time and, if such limits are set too high, external disturbances may cause early termination of a weld.

Turning now to Fig. 11, the effects of line voltage waveform distortions on the current extinction time is shown. Voltage waveform 180 is a sinusoidal waveform free of distortion which produces a welder current 182 that goes to zero at time T1. If the line voltage waveform 180 is distorted, as shown by a waveform 184, it will produce a current waveform 186 which extinguishes somewhat later than current waveform 182 at a time T2. Other distortions which tend to diminish the positive half cycle with respect to the negative half cycle will have the opposite effect of causing current extinction to occur earlier than in the non-disturbed case. As can be seen by the change of the current waveforms from waveform 182 to 186 caused by a line voltage waveform disturbance, it would not ordinarily be practical to make the resistive measurement due to the power factor change. What the apparatus does by the electronic simulator is eliminate and provide an immunity from line voltage waveform disturbances since a simulator circuitry and actual welder both see the same line voltage waveform disturbances and the only difference between Alogl signal 82 and the APF signal 80 from the welder could be the change in the resistance of the workpiece between the electrode tips as nugget formation occurs during a weld.

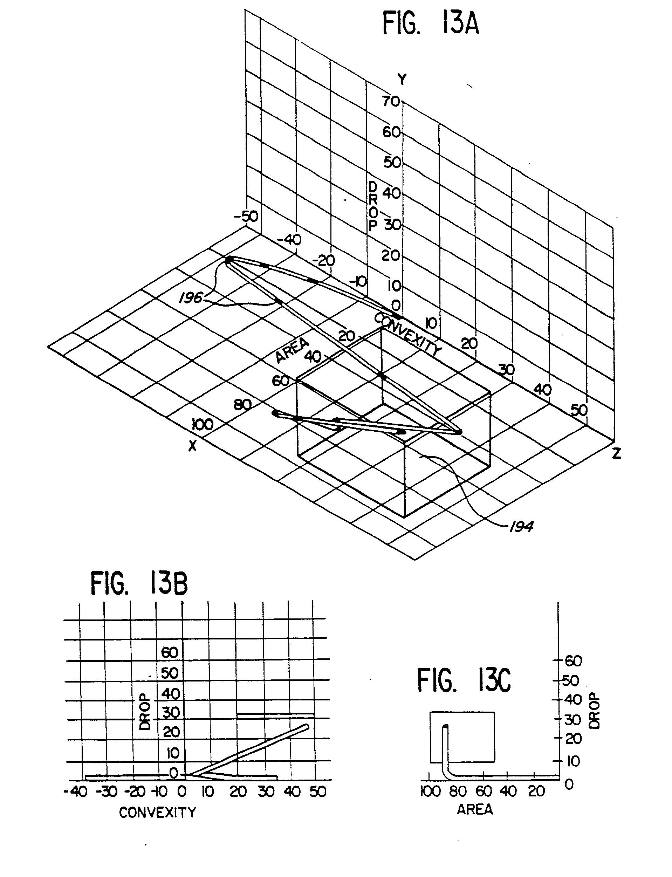

Fig. 12 shows a typical dynamic resistive curve of a mild steel during a weld. The vertical axis is resistance, and the horizontal axis is the half cycles in each weld. As can be seen, the first three or four cycles are the blanking period previously mentioned in which no data is forwarded onto the microprocessor. However, as the weld progresses past the valley at about the fifth half cycle, data is accumulated for the pattern recognition. As can be seen by the curve, there is an area 188 under the curve, a certain convexity 190 to the shape of the curve and a resistive drop from the peak of the curve 192, all of which follow certain limits which we have previously called the pattern recognition limits of the welder control system. Relating Fig. 11 to Figs. 13A—C, Figs. 13A—C show the three-dimensional form of the pattern recognition features and their limits in the feedback welder control system of the present invention. In short, when Figs. 13A—C show the rectangular space 194 defined by the limits of resistive drop, convexity and area found to be features in resistive welding that are indicative of a quality weld. The first half cycle starts at the quadrant 000 axis and progresses as shown by the shaded dots 196, each representing one half cycle of current conduction, for approximately 13 half cycles before the weld falls within the limits of a rectangular space 194 indicating a quality weld. The limits for the resistive drop, convexity and area are approximately 10—32 micro-ohms, 20—50 positive units of convexity, and approximately 50—100 units of area, as shown in Figs. 13B and 13C. Thus, this three-dimensional representation of feature space maps out the three features of a resistive curve of Fig. 12. Once again, the three features are the resistive drop, as previously discussed, the delta R as being the drop, the area which is the area under the curve, and the convexity which is taken as being positive when the curve is higher in the center than it is at its ends. The three axes, as shown X, Y and Z, represent these features of area, resistive drop and convexity, respectively. The box 194 represents the limits on the acceptable values that these features can take and, as the weld progresses, the features are evaluated at each half cycle. The features start out with coordinates at 000 as their origin and, as the weld progresses for each half cycle, the features can be mapped into this three-dimensional space as they form a trajectory which eventually, if the weld is completed properly, ends up inside the box 194 (limit box). When this happens, the current is terminated to the weld. If the trajectory never enters the box 194, the weld is allowed to continue until the maximum number of cycles programmed in by the operator are expended.

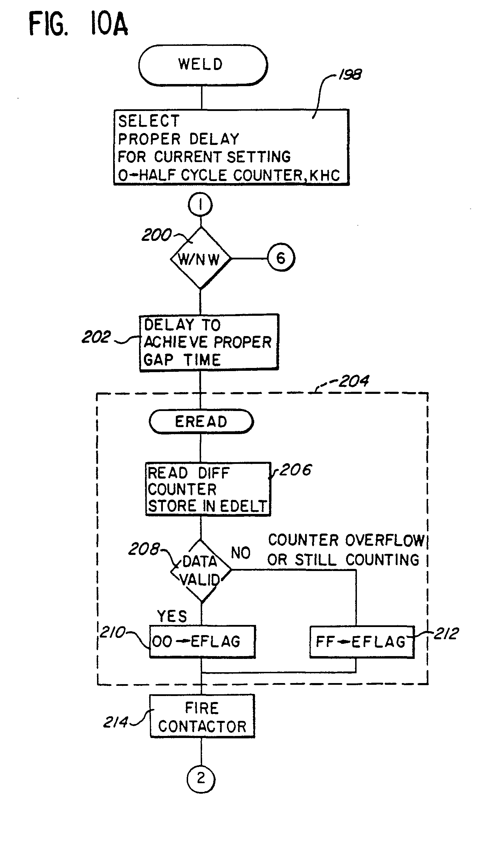

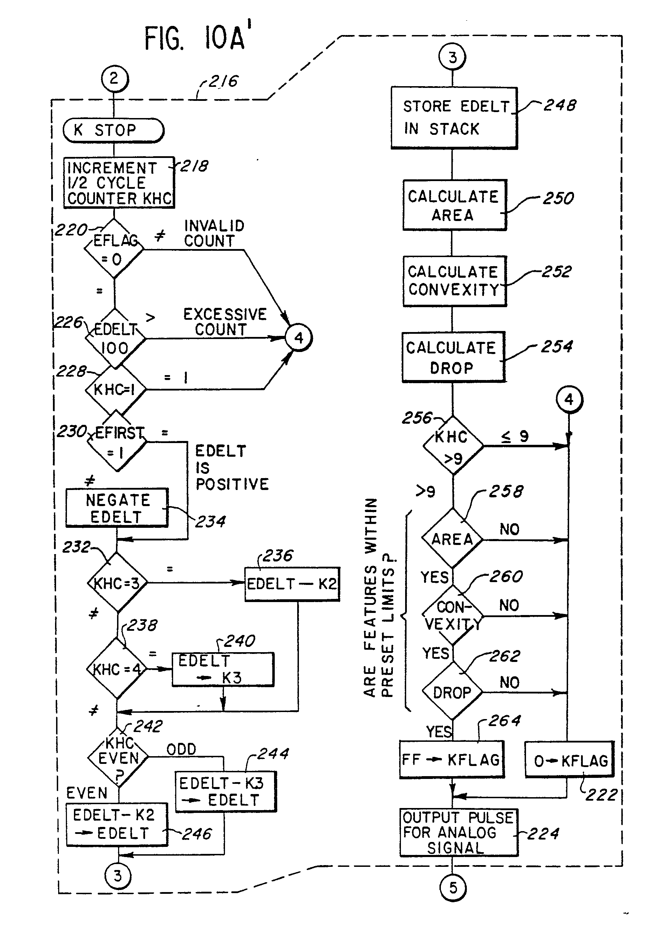

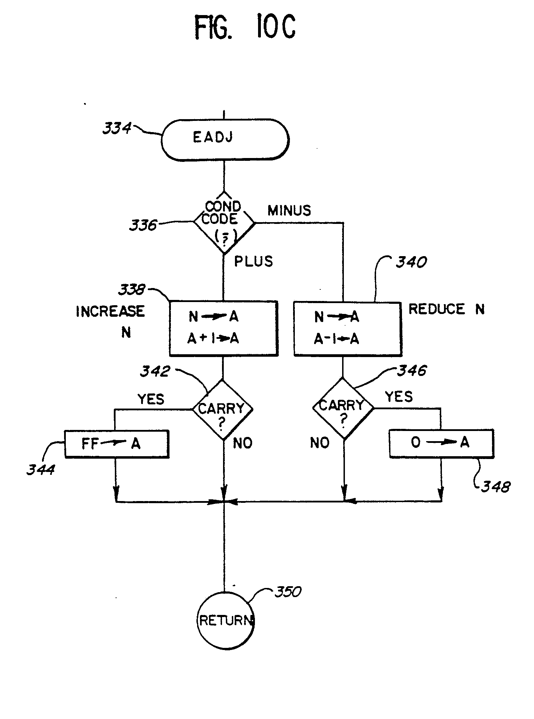

Turning now to Figs. 10A—C, these figs are a block diagram of a flowchart of the operation welder including a preferred embodiment of the present invention. Upon initiation of a weld by an operator, the feedback welder control system of the present invention provides a solenoid output to close the weld tips onto a workpiece and then it waits a sufficient length of time (squeeze time) for the tips to settle, as previously described herein. This sequence of events is identical to that described in the '724 patent and reference herein is made to that patent as well as the previous discussions herein.

Upon finishing the squeeze time period, the microprocessor 76 enters a weld subroutine as shown in Fig. 10A. Based on whether it is a first or second weld of a dual pulse schedule, a block 198 selects an appropriate current as predetermined during operator set-up of the welder as described in the '724 patent, checks the selected current for limits and prepares for initiation of the weld current by setting appropriate delays in RAM memory locations in a manner similar to that described in the '724 patent. In addition, block 198 zeros a half cycle counter (KHC) for use later in the subroutine. A decision block 200 circumvents the current initiation and feedback process of the controller, if a feedback welder control system of the present invention is in a no-weld mode as previously described herein and in the '724 patent.

Continuing on to a block 202, the microprocessor 76 by means of its known fixed cycle time, as previously described in the '724 patent, provides a precision delay prior to the initiation of each half cycle current to both control the magnitude of the current and to avoid excessive in-rush currents. Just prior to initiating current, the microprocessor 76 momentarily leaves the weld subroutine and enters the EREAD subroutine 204. The EREAD subroutine 204 includes a block 206 which reads the contents of the DIFF counter, as previously mentioned, and transfers its contents to a RAM memory location called EDELT. A block 208 is a decision block which determines if the data in EDELT is valid. The data is considered valid if the counter has not overflowed and if the counter has stopped counting (the DIF signal must not be a logic one). For valid data, a block 210 sets a data invalid flag, EFLAG, to zero. For the invalid case, a block 212 sets EFLAG to FF. At this point, the microprocessor 76 returns to the weld subroutine at a block 214 where a weld firing signal or gate pulse is issued to start conduction for that half cycle in the weld. Block 214 also includes a half cycling diagnostic check 98 in diagnostics 44 of Fig. 5 similar to the one described in the '724 patent. The microprocessor 76 once again leaves the weld subroutine and enters into a subroutine called KSTOP block 216.

The subroutine KSTOP performs the following functions: (1) converts the data in EDELT into standard 2's complement notation and normalizes it; (2) stores the data in a data stack; (3) extracts the features from the resistance curve (the data in the data stack); (4) compares extracted features to the operator pattern recognition limits entered as described in the explanation of Fig. 5; (5) sets or clears a weld stop flag, KFLAG, based on the feature comparison with the pattern recognition limits; and, (6) issues an output pulse proportional in length to the EDELT obtained from the last half cycle.

Upon entering the KSTOP subroutine 216, the microprocessor 76 increments the half cycle counter KHC in a block 218. The counter KHC is subsequently utilized during the weld to control sequences of operation for the feedback welder system. A decision block 220 checks EFLAG. If EFLAG 220 is not equal to zero, then it means an invalid count and the microprocessor 76 exits the KSTOP subroutine via blocks 222 and 224. Block 222 puts a zero in KFLAG, the weld stop flag, to prevent the controller from stopping the weld. Block 224 then provides an output pulse of a duration proportional to EDELT for conversion to an analog signal suitable for a strip chart recording. Returning to decision block 220, if the data is valid then EFLAG will be zero and control will transfer to a decision block 226. Here, EDELT is tested for an excessive magnitude of 100 counts or more. From previous welds, it is known that a count of 100 or more is considerably larger than any data that would be normally generated during one particular half cycle in the weld process. If the data is found to be excessively large, the microprocessor 76 exits KSTOP via blocks 222 and 224, as discussed above. A block 228 checks the half cycle counter KHC for equality to one. If KHC is one, block 228 transfers to block 222 also. This is to avoid saving data from half cycle one in each weld.

Upon leaving block 226, the next section is used to change the sign in magnitude as defined by EFIRST and EDELT, respectively, into 2's complement notation. If current extinction on the previous half cycle occurred first on the welder, then EFIRST will be a logic one and a block 230 transfers then to a block 232 with no action. If the welder current extinguished last (an indication of a negative change in resistance), block 230 transfers to a block 234 where a negation or 2's complementation is performed on EDELT to make it a negative number. Proceeding on to block 232, KHC, the half cycle counter, is compared to a numeral three. If equal to three, EDELT will be stored in an address K2 by a block 236. Similarly, blocks 238 and 240 will store EDELT in a location K3 if KHC equals a number four. Note that, at this point, KHC, the half cycle counter, will equal three when the data in EDELT is from the previous half cycle two, and, when KHC equals four, EDELT will be from half cycle three. Thus, K2 contains EDELT from half cycle two and K3 contains EDELT from half cycle three. These two values of EDELT will be used subsequently to normalize the EDELTs generated during the remainder of the weld by subtracting K2 from the EDELTs generated by even numbered half cycles (KHC=2, 4, 6, etc.) and K3 when KHC is odd. Half cycles two and three have been selected for normalizing because they correspond approximately to the valley point of the resistance curve for most ferrous materials, see Fig. 12. Blocks 242, 244 and 246 perform an operation of subtracting either K2 or K3 from the EDELTs throughout the remainder of the weld. The normalized data EDELTs are then stored in an 8-word storage stack by a block 248. Operation of this block 248 is such that no more than eight EDELTs can be stored at any time. When an additional EDELT arrives from another half cycle nine or subsequent ones, the oldest EDELT is discarded. Thus, the stack always contains the eight most recent EDELTs. The next three blocks, 250, 252 and 254, extract the curve features (area, convexity and resistive drop) from the EDELT data train. Block 250 generates the feature called area. This is accomplished by summing the normalized EDELTs, starting with the half cycle two, and continuing throughout the weld. Because the area could become very large (it could conceivably overflow an 8-bit register in the microprocessor 76), the area calculation is carried out using a double-precision (16-bit) method. In addition, the area is divided by 16 to facilitate a comparison with limits in a block 258. In the event that after division by 16 the area is too large to fit into an 8-bit register, block 250 zeros the area to inhibit stopping on this weld. The next curve feature to be extracted is convexity which is used to detect the curvature over the last eight half cycles. If the normalized EDELT from the most recent half cycle is called R(n) and the next most recent is R(n−1) and so forth, the convexity function is defined as:

$$KCV = -R(n) - R(n-1) + R(n-2) + R(n-3) + R(n-4) + R(n-5) - R(n-6) - R(n-7).$$

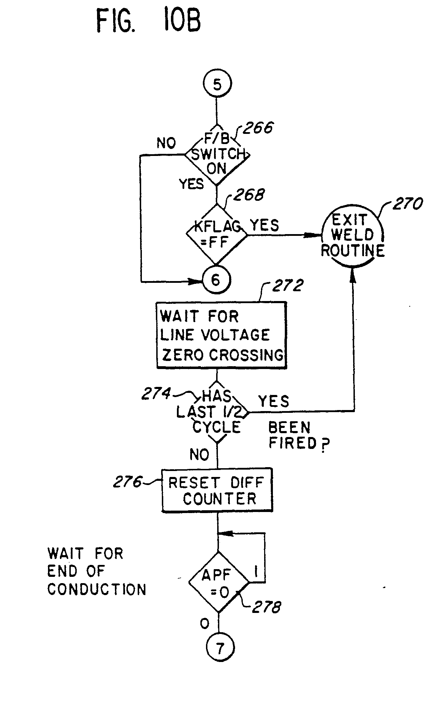

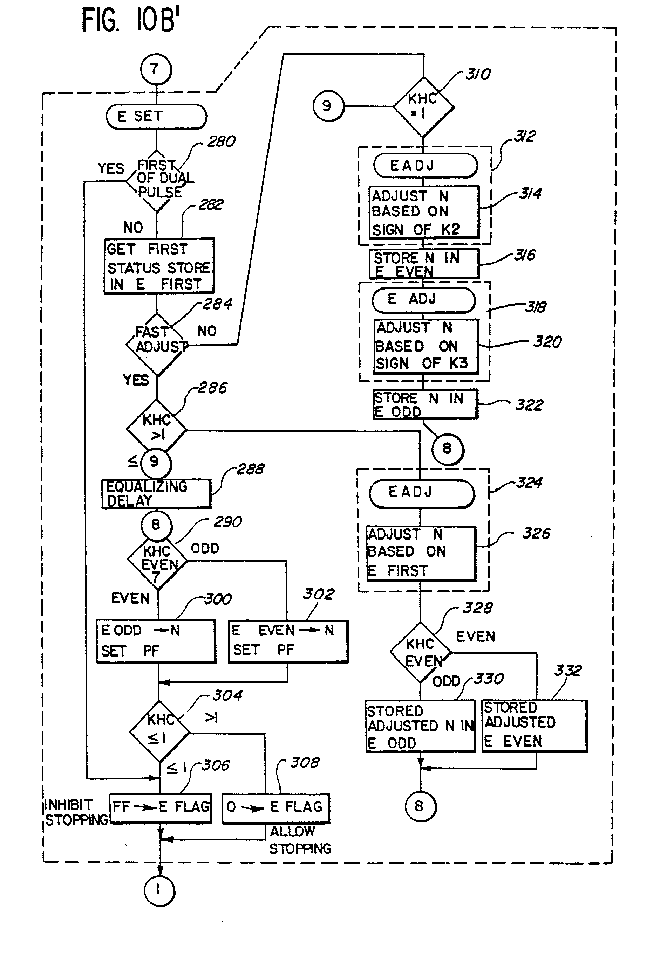

The eight R(n)'s are stored on the stack by block 248, as previously described. A convexity function will produce a positive KCV if the eight data points, when plotted, have a region in the center which is higher than the end points. A negative KCV results if the opposite is true. Again, because of the possibility of overflow, a double-precision method is used. Additionally, KCV is divided by two and, if still too large to fit in an 8-bit word, it is cleared to zero to inhibit stopping the weld. The resistance drop from the peak is determined by the block 254. This block selects the data corresponding to the highest point on a resistance curve and then subtracts data values from it to determine the amount of drop from the peak. If a new peak is detected, the previous is discarded and the new one retained. Because of dissymmetries in the control electronics and in the conductive properties of the welding circuit, the EDELTs, after normalization, may have an alternating variation in amplitude, i.e., those from odd half cycles may be larger than those from even half cycles, or vice versa. Block 254 avoids errors caused by this alternating phenomena by working with the average values of adjacent pairs of EDELTs. Thus, the peak value retained in the highest adjacent pair average and the resistive drop is based on a difference from the peak and subsequent adjacent pair averages. After the three features here are extracted from the EDELT data train, a block 256 checks the value of the half cycle counter. If KHC is less than or equal to nine, the data stack has not been filled and the convexity feature is not valid so control is passed to block 222 to prevent stopping of the weld. If KHC is greater than nine, the convexity features will be compared to the operator set selected limits as previously referred to in the description of Fig. 5. Block 258 compares the area to the upper and lower limits of area set by the operator in the sequence module panel 36, and, if within the limits set to control, then passes to block 260; if not, then to block 222. The convexity block 260 then compares the convexity to the upper and lower limits of convexity as set by the operator on the sequence module panel 36. If the convexity is within the limits set, then control passes to a block 262; if not, the control passes to block 222. Finally, in a like manner, block 262 checks the value of the resistive drop against the resistive drop limits, if within the operator set limits on the sequence module panel 36, control passes to a block 264; if not, to block 222. Thus, only if all three features are within the operator selected limits as set on the sequence module panel 36, can block 264 be entered. Block 264 sets the weld stop flag, KFLAG, to FF. This will cause a cessation of the weld current when a block 268 is encountered in the weld subroutine. The last block, 224, in the KSTOP routine produces an output pulse whose duration is proportional to EDELT. This is used in the production of an analog signal which is used to directly observe the resistance curve as it is being generated during the weld. Control then transfers back to the weld subroutine at a block 266 as shown in Fig. 10b. Block 266 tests a word set by the operator called the feedback switch. If it is set to a non-zero number indicating the feedback mode, as described in the description of Fig. 5, control transfers to the block 268 which will terminate the weld current if KFLAG is set to FF by transferring to the exit point 270. If the feedback switch had been set to zero by the operator, block 268 would have been by-passed preventing early termination of the weld. Control then passes to a block 272 where the microprocessor monitors the lead trail signal LT and waits until a transition indicating that the line voltage has crossed zero. Control then transfers to a block 274 which determines if the total number of half cycles as programmed by the operator have been expended in this particular weld. If all half cycles have been expended, a non-feedback type of exit is made in the weld routine via a block 270. If some cycles remain to be fired, control passes to a block 276 which resets the DIFF counter in preparation for the extinction of the half cycle presently conducting. A next block 278 waits for the weld current to extinguish by waiting for the APF signal to go to zero, as previously described. When this occurs, the subroutine ESET is entered which accomplishes the following: (1) reads and saves the first signal in EFIRST; (2) performs a series of steps which adjust the power factor of the analog circuit to match that of the welder; and, (3) selects the proper value of N for the next half cycle (N being the control word which determines the power factor of the analog circuit).

Upon entering the ESET subroutine, the microprocessor 76 and a block 280 checks if this weld is the first weld of a dual pulse weld. It is assumed that the first weld of a dual pulse weld is used for electrode setting and fit-up improvement and no welding is actually intended to take place during this pulse. Thus, the feedback process is inhibited by setting the data invalid flag, EFLAG, in a block 306. If this weld is a single pulse weld or the second pulse of a dual pulse weld, control then transfers to a block 282. In block 282, the first input is read and its data is stored in EFIRST for subsequent use. Control then transfers to a decision block 284 which determines if the operator has selected the fast adjust mode by entering a non-zero number in location 18 as described in the description of Fig. 5. If the normal mode is selected by placing a zero in location 18, a single adjustment of the analog circuit power factor is made during the first half cycle of the weld. Assuming that the operator has selected the fast adjust mode, control transfers to a block 286 where the half cycle counter, KHC, is compared to one. If less than or equal to one, no adjustment is made, and control is transferred to a block 288. Half cycle one is not used for adjustment because oxides, oil and other foreign matter on the workpieces create an abnormally high contact resistance which influences the extinction angle of the first half cycle. For half cycles greater than one, the subroutine EADJ, a block 324, is entered which adjusts N, the analog circuit power factor control word, based on the value of EFIRST. Referring momentarily to Fig. 10C which is a block diagram of the EADJ routine, a block 336 determines whether to increase or decrease N based on the condition code register in the microprocessor. If the EADJ subroutine has been entered by way of the block 286 on Fig. 10B′, the condition code register would have been set to a minus if the analog circuit had extinguished first or positive for the opposite case. If positive, block 336 transfers to a block 338, where the present value of N is increased by one and retained in the accumulator A of the microprocessor. Similarly, if minus, a block 340 reduces the value of N by one and retains it in the accumulator A. A block 342 then checks for overflow on the addition of a block 338. If the carry bit is set in the microprocessor, accumulator A is set to FF in block 338. Similarly, blocks 346 and 348 correct an overflow condition resulting from subtraction.

The EADJ subroutine is then exited via a block 350 with the new value of N in the accumulator A of the microprocessor.

Returning now to Fig. 10B′, after a block 326 has adjusted N, a block 328 determines whether the present value of the half cycle counter is odd or even and, if even, the adjusted value of N is stored in EEVEN by a block 332. Similarly, if KHC is odd, a block 330 stores the adjusted value of N in EODD. Control then transfers to a block 290. Referring back to block 284, if the fast adjust mode had been selected by the operator on the sequence panel 36, a block 310 would obtain control. In block 310, the half cycle counter (KHC) is compared to one. If it is not equal to one, block 310 transfers control to a block 288, an equalizing delay assigned to consume as much time as blocks 312—322 to avoid upsetting the weld timing. If KHC equals one, block 312 tests the signal of K2, the even half cycle offset from the previous weld, and transfers control to the EADJ subroutine.

As explained previously, the EADJ subroutine will increment value given to it, if the condition code is positive and decrement if the condition code is negative. In block 312, EADJ is given EEVEN and the sign of K2 is tested. Upon exiting block 316, the new value of N is stored in EEVEN. Block 320 performs in a similar manner to block 312 by adjusting EODD based on the design of K3. The new N is then stored in EODD by block 322. Proceeding to block 290, the half cycle counter KHC is tested for being an even or odd value. If even, block 300 takes the value in EODD and outputs it to the analog circuit where its sets the power factor for the next half cycle (an odd half cycle). Conversely, if KHC is odd, block 302 takes the value in EEVEN and sets the power factor for the next half cycle. This procedure implements a dual system of control with the odd half cycles and the even half cycles treated independently for adjustment purposes. Thus, an optimum adjustment is found even though there may be some dissymmetries in the electronic circuits or in the conductive properties of the welder circuit.

A block 304 is used to set or clear the data invalid EFLAG using blocks 306 and 308. The flag is set to invalid FF for half cycles one and cleared for subsequent half cycles. Control is then transferred back to block 200 in the weld subroutine where the process begins for the next half cycle. Thus, the previously outlined steps occur on a half-cycle-by-half-cycle basis in each weld where the operator sets the address 19 on the sequence panel to the feedback mode.

Whereas the previously described pattern recognition technique for the welder control system works well with the modeling circuit when welding bare steel of approximately equal thicknesses to assure a reliable nugget formation, a second recognition technique is used for welding galvanized steel and other special applications to assure proper nugget formation. The second recognition technique handles bare steel welding similar to the previous pattern recognition technique insofar as the characteristic of resistive drop is utilized to determine a proper weld nugget formation. In the case of galvanized steel welding, a predictive methodology is applied in determining the limits to assure proper nugget formation. When welding metals of varying thicknesses, the first pulse in a dual pulse weld is automatically ignored and approximately one-half of the second pulse in each weld is blanked before data is utilized for determining whether or not a quality weld is made.

This second recognition technique employs slightly different circuitry than that previously described in that it more closely resembles the circuitry of the '724 patent controller in its connections to various user supplied external devices; that is, it has three weld initiation inputs, three solenoid valve outputs and various other inputs and outputs identical to the '724 patent. However, these changes in circuitry do not materially affect the modeling circuit concept essential to this invention and, therefore, reference is made to the '724 patent for further details as to the operation of these external devices.

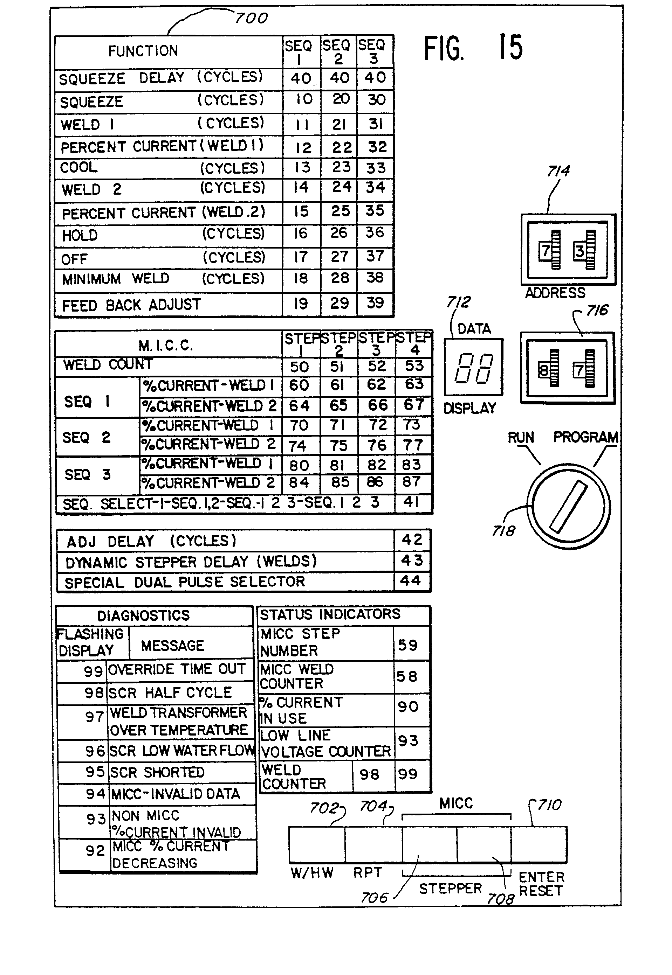

Referring now to Fig. 15, a front elevation of the sequence module incorporating the adjust locations for the feedback parameters of the second recognition technique is shown. The feedback gun welder control in this embodiment is designed to be as versatile as possible for metals of varying thicknesses and composition, while still being easy to set-up and operate in the field. Therefore, the feedback welder controller and sequence module 700, as shown in Fig. 15, incorporates all of the features of the existing '724 patent. In addition, the controller provides for two modes for feedback stop time computation, one for plain steel using the resistance drop technique, and, one for galvanized steel using a new predictive recognition technique. This controller also provides for an additional dynamic stepper which is used in conjunction with either of the feedback modes to vary the weld current in order to keep the stop times for the welds within a certain predetermined range. To set the controller up for feedback operation, the operator first sets the controller for a reasonable weld schedule by programming the sequence module 700; that is, he must pick a weld current that forms a full size weld nugget within the time restraints of his weld schedule. These time restraints are the minimum and maximum weld time entries of the schedule. The basic form for a weld schedule is as follows:

Weld Schedule (Non-MICC)
    Squeeze Delay
    Squeeze Time
    Weld—1 Maximum Time
    Weld—1 Percent Current
    Cool Time
    Weld—2 Maximum Time
    Weld—2 Percent Current
    Hold Time
    Off Time (Repeat Mode Only)
    Minimum Weld Time
    Feedback Mode

For a single-pulse feedback weld, the operator must set one of the maximum time settings to zero, the other pulse will then be used for the weld. The controller will not stop the weld sooner than the minimum weld time setting or later than the non-zero maximum weld time setting.

For normal dual-pulse feedback welds, Weld-1 will be used for heating the electrodes and providing a good electrical contact, and, Weld-2 is used to actually form the weld nugget. Weld-1 stop time is restrained only by the Weld-1 maximum time entry, not the minimum weld time.

The controller will terminate Weld-1 when it determines the good electrical contact has been reached. Weld-2 stop time is restrained by the Weld-2 maximum time on the high end and by the minimum time entry less the number of cycles used by Weld-1 on the low end. For normal dual-pulse welds, the minimum weld time entry is the minimum combined weld time for both pulses.

After a valid weld schedule has been programmed by the operator, including all feedback mode settings, a special adjust mode must be entered in order to set-up the modeling circuitry of the controller. To do this, the operator must enter a 99 in the feedback mode location for the sequence he wants to set up. He will then proceed to pull the trigger with work pieces between the tips of the welder. The welding tips will close and, assuming the operator keeps the trigger closed, the control will automatically adjust itself as previously described in this application. After the control senses that it is adjusted it will reset the feedback mode setting to the value it contained before the 99 was entered; weld a normal weld and then open the tips. The operator may now proceed with normal operation without any further data entry into the sequence module 700. For clarity, we will now discuss the programming of the 700 sequence module for the second recognition technique.

In the following discussion, when an X is used in an address, the X refers to the sequence number. For example, X0 refers to location 10 for sequence 1 and location 30 refers to location 30 for sequence 3. Now we will describe the function of the storage locations on the sequence module 700. Location X0 is squeeze time in cycles which is the same as for the '724 patent. Location X1 is for non-feedback welds, the content of this location is the Weld-1 time in cycles. For feedback welds, this is the maximum time for Weld-1. Location X2 is Weld-1 percent current. This is both the current that will be used when no stepper is on and also the starting current for the dynamic stepper. Location X3 is for cool time in cycles which is the same as for the '724 patent. Location X4 is for non-feedback welds, the content of this location is the Weld-2 time in cycles. For feedback welds, this location contains a maximum for Weld-2. Location X5 is for Weld-2 percent current. This is both the current that will be used when no stepper is on and also the starting current for the dynamic stepper. Location X6 is for hold time in cycles which is the same for the '724 patent. Location X7 is for off time in cycles which is also the same for the '724 patent. Location X8 is only used for feedback welds. The content of this location is the minimum weld time. Location X9 is used to control the feedback operation for this sequence. Valid data entries and their meanings are as follows:

00      Feedback off.
01—50 Plain steel feedback mode in effect. The smaller the number, the less drop before the stop. The larger the number, the more drop is necessary before stopping.
72—88 Galvanized steel feedback mode in effect. An 80 is a normal setting, a smaller number results in a colder weld, a large number results in a hotter weld.
99      Forces the control into a special adjust mode for matching the modeling circuit to the actual welder.

Location 40 Refers to squeeze delay in cycles, which is the same as for the '724 patent.

Location 41 Refers to the stepper mode selector. Valid data entries for the location and their meaning are as follows:
    01 Regular stepper for sequence 1. There is no stepper for sequences 2 and 3.
    02 Regular stepper for sequences 1 and 2, but no stepper for sequence 3.
    03 Regular stepper for sequences 1, 2 and 3.
    11 Dynamic stepper for sequence 1, but no stepper for sequences 2 and 3.
    12 Dynamic stepper for sequences 1 and 2, but no stepper for sequence 3.
    13 Dynamic stepper for sequences, 1, 2 and 3.

Location 42 Refers to the adjust mode delay time in cycles. The number of cycles between adjust mode pulses is equal to the content of this location plus 30 cycles.

Location 43 Dynamic stepper delay. The content of this location is the minimum number of welds that must occur before the dynamic stepper will increment or decrement its current by 1. This controls the gain of the dynamic stepper.

The locations Y in an address refers to a 6 for sequence 1, 7 for sequence 2, or an 8 for sequence 3. Location Y0 — Standard MICC Weld — 1 Step — 1 Current; Location Y1 — Standard MICC Weld — 1 Step — 2 Current; Location Y2 — Standard MICC Weld — 1 Step — 3 Current; Location Y3 — Standard MICC Weld — 1 Step — 4 Current; Location Y4 — Standard MICC Weld — 2 Step — 1 Current; Location Y5 — Standard MICC Weld — 2 Step — 2 Current; Location Y6 Standard MICC Weld — 2 Step — 3 Current; Location Y7 — Standard MICC Weld — 2 Step — 4 Current; Location Y8 — Dynamic MICC Weld — 2 Current; Location Y9 Dynamic MICC Weld — 1 Current; Location 50 — Standard MICC Step — 1 Count×10; Location 51 — Standard MICC Step — 2 Count×100; Location 52 — Standard MICC Step — 3 Count×100; and, Location 53 — Standard MICC Step — 4 Count×100.

Location 44 Special dual pulse selector for welding such difficult materials as the hinge on car doors wherein the metal thickness varies between the pieces to be welded together. In this case, if a zero is entered in this location 44, the control will operate as normal. A non-zero number entered here will cause a special dual pulse feedback mode to be used providing that locations X9 is set-up for feedback welding. This mode uses pulse-one of a dual pulse weld as a non-feedback weld. It then uses pulse-two as if it was a single pulse feedback weld, except that the number entered in location 44 is the number of cycles of blanking before the feedback process is initiated. This blanking period approximately turns out to be one-half of the weld cycles in the second pulse. This feedback mode is intended for special heavy gauge plain steel welding, as previously mentioned.

If stepper operation is desired, the operator has the option of selecting the standard stepper (MICC) similar to that described in the '724 patent or the dynamic stepper. Stepper selection is accomplished by programming the proper number in RAM memory location 41 via the sequence module 700. In the event the standard stepper is desired, the number 01, 02, or 03 is programmed into location 41 signifying stepper control on sequence 1, or sequences 1 and 2, or sequences 1, 2, and 3, respectively. The dynamic stepper is selected by programming the numbers 11, 12, or 13 into location 41 signifying stepper action on sequences 1, or sequences 1 and 2 or sequences 1, 2, and 3, respectively.

The standard stepper is adequately described in the '724 patent and will not be discussed further. The dynamic stepper adjusts the welding current based on when in the weld the feedback process stops the current. If the welds tends to be stopped early, the current is assumed to be excessive and the dynamic stepper, after a number of welds determined by the dynamic stepper delay (programmed by the operator in location 43), reduces the current by a fixed increment. If the welds tend to be stopped later, the stepper current is assumed to be insufficient and the stepper increases the current by a fixed increment after a number (determined by the dynamic stepper delay) of welds. A series of welds stopping at some median time or with a well balanced mix of weld stop times will produce no changes in stepper current, i.e., the current level in use is assumed to be acceptable.

As welding progresses and electrode tip wear becomes significant, the spreading of the current over a larger area by the worn tips will manifest itself as a tendency for the welding times, as controlled by the feedback process to become longer. This causes the stepper to increase the current which shortens the welds until tip wear again causes excessive weld length. Unforseen events, such as a sudden increase in line voltage, make it desirable for the dynamic stepper to reduce the current to a limited extent. In this welder stepper reversal is limited to one-half the change in current from the starting current to the highest current achieved since starting.

The beginning and ending current levels for the dynamic stepper are programmed by the operator via the sequence module. The beginning current is programmed in the same location as the basic sequence currents; that is, locations 12, 22, and 32 for pulse 1, and location 15, 25, and, 35 for pulse 2. The ending current levels for the dynamic stepper are programmed into the MICC step 4 locations 63, 73, and 83 for pulse 1, and locations 67, 77 and 87 for pulse 2.

The stepper action can be turned on or off under operator control using the MICC on/off push button on the sequence module. Resetting of the stepper is accomplished by using the stepper advance push button 708 on the sequence module 700. This procedure is described in '724 patent.

As to the other features on the sequence module 700, this sequence module includes the same five operating buttons as in the '724 patent, and those buttons are, left to right: (a) weld/no-weld switch 702; (b) repeat/non-repeat switch 704; (c) stepper on/off switch 706; (d) stepper advance switch 708, which are part of the MICC program; and (e) enter reset switch 710. The sequence module 700 also includes the data display 712 and address 714 and data entry 716 with a run/program switch 718, all functioning the same as in the '724 patent.

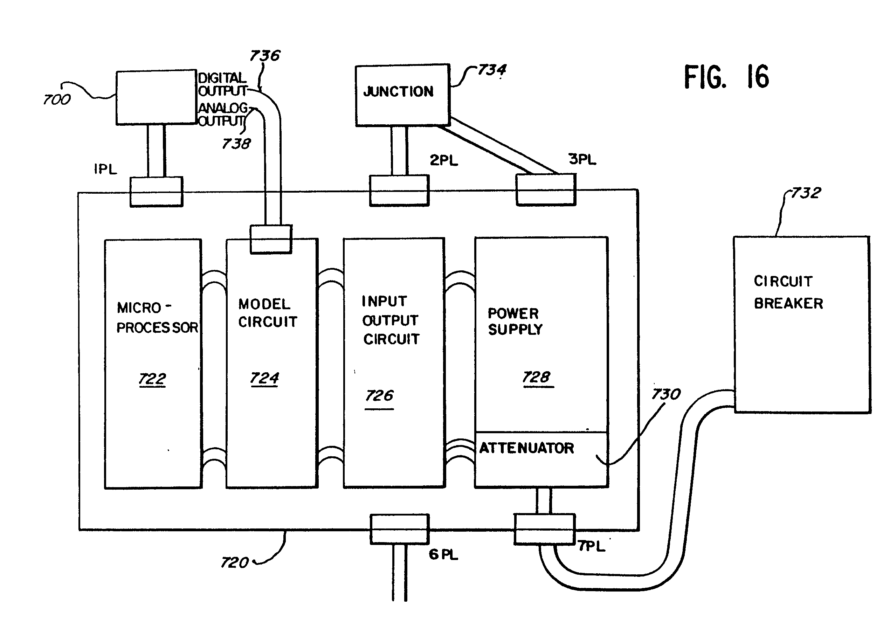

Referring now to Fig. 16, a slightly modified block diagram of the module interconnections for the welding control system is shown. The control system 720 includes a Motorola 6809 microprocessor 722, a modeling circuit 724, an input/output board 726, a power supply 728, an attenuator 730, circuit breaker 732, a 1PL plug to sequence module 700, a 2PL connection to a junction box 734 for operating the solenoids and the like as described in the '724 patent, and two additional outputs from the modeling circuit 724, including a digital output 736 and an analog output 738, which will be described in the following paragraphs.

Data logging outputs can provide important data on the welds being made to the user of the feedback welder control system. Therefore, on the feedback welder control system, there are two special outputs available for monitoring the operation of the controller. These are the analog output 738 and the digital printer outputs 736.

The analog output 738 is a differential analog signal output of the resistance curve as measured by the welder. The resistance curve is outputted both dynamically as the weld is taking place and is also outputted continuously (at a variable rate) in standby mode. The operator may select any one of the three forms for this data; actual, averaged or filtered. The digital output or printer 736 provides a means to log on a printer or tape cassette recorder, such as an STR-LINK, the status of the control after each weld. In repeat mode only, the status of the last weld to be made before the control goes into standby will be logged. The operator has the option of selecting the baud rate for this output as well as selecting between four different message formats. He may also select to have the control perform paging of the output to produce a more readable listing. Locations 98—99 of the sequence module 700 are the weld counter locations. This is a four-digit weld counter where location 98 contains the high order bits, and location 99 contains the low order bits. This number is incremented with each weld and its sole purpose is to label the printer output data.

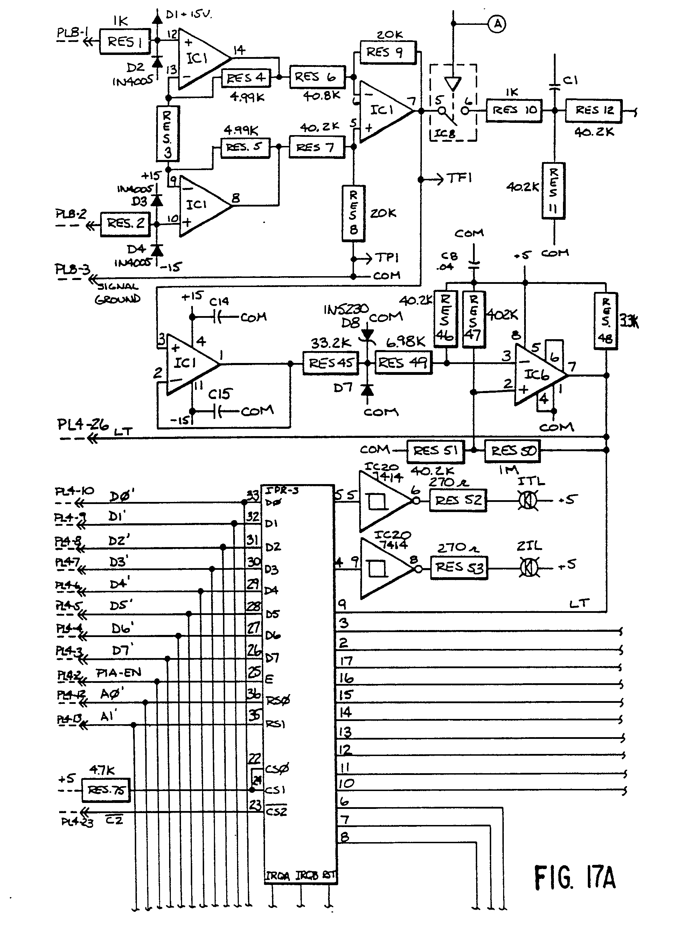

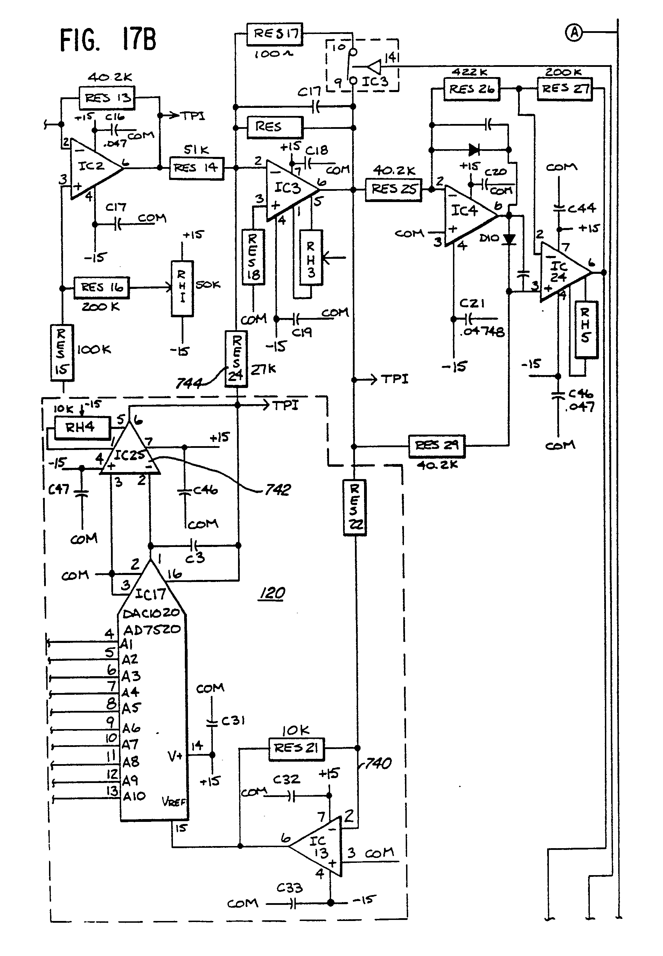

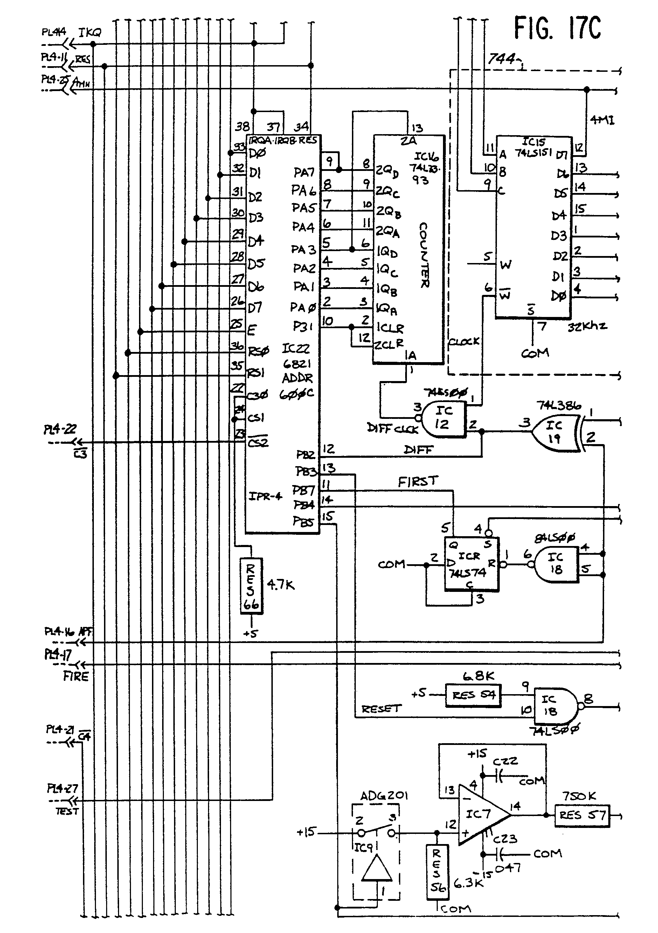

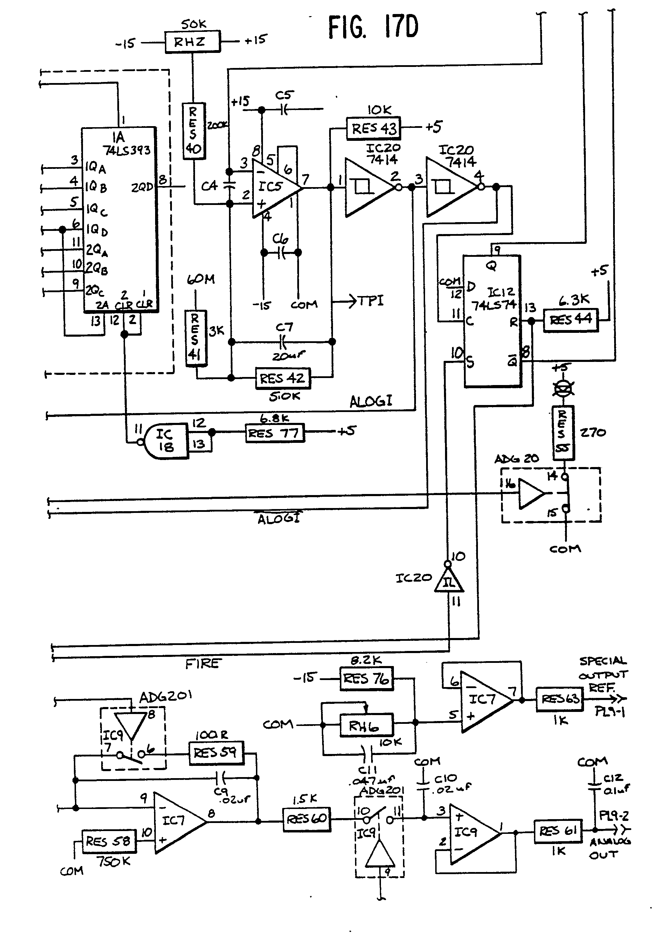

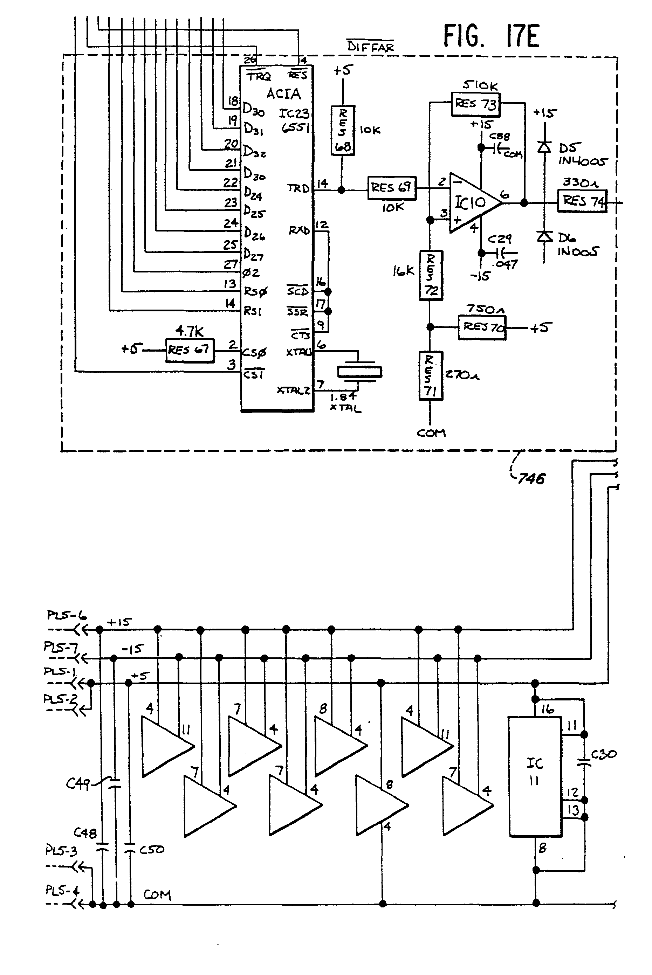

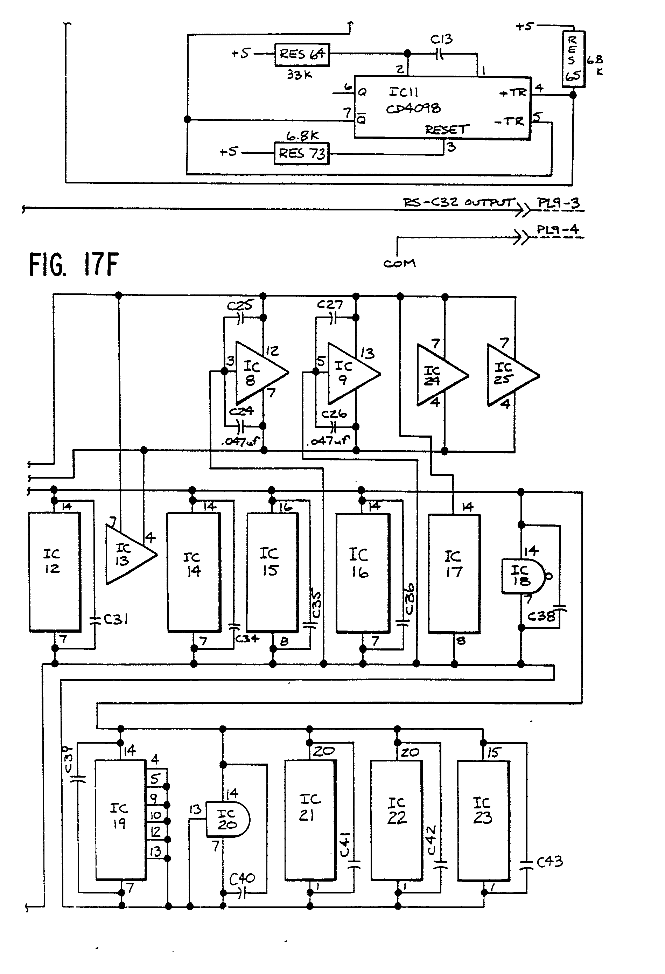

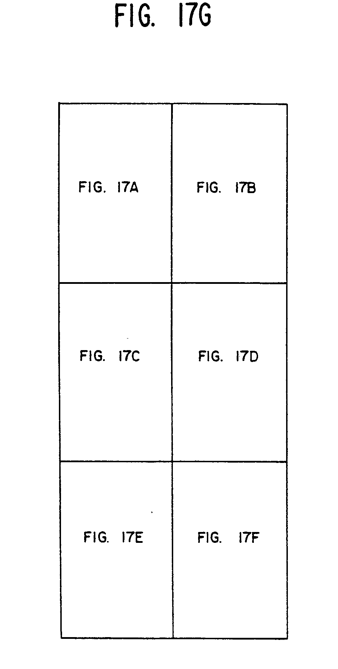

Turning now to Fig. 17, the hardware changes for the second recognition technique will be discussed in greater detail. The second recognition technique differs from the first pattern recognition technique in that the controller more closely resembles the controller of the '724 patent in its connections to the various user supplied external devices; that is, the second recognition technique utilizes three weld initiation inputs, three solenoid valve outputs and various other inputs and outputs like the '724 patent. However, none of these changes are important to the modeling circuit concept and operation of these various features can be understood by referring to the '724 patent for greater detail.

The power factor select circuit 120 for the second recognition technique utilizes the digital-to-analog converter (DAC), National Semiconductor DAC 1020 having the switches plus an R—2R ladder resistor network. The DAC select circuit also includes an input buffer amplifier 740 and an output buffer amplifier 742 for the resistor and switch network 120 used and discussed in the pattern recognition embodiment, as shown in Fig. 17.

Furthermore, the manually selectable clock circuit of Fig. 8d(b) has been replaced by a software controlled clock frequency divider (capable of dividing by powers of two for a maximum of four megahertz). This allows the software to select the best clock frequency for the particular welding machine or metal combination. Also included in the hardware changes of the second recognition technique is a serial data output port suitable for connection to a line printer or teletype. The software contains a series of instructions which, after each weld, outputs a message containing the various weld parameters, i.e., the weld sequence variables of current and time, the sequence selected, stepper on/off, etc., and a tabulated listing of the resistance value for each half cycle of weld current.

Fig. 17 is the circuit diagram which is similar to Figs. 8a—d with the digital-to-analog converter (DAC), the clock divider circuit and the digital data output port added. DAC 1020, its operational buffer amplifiers 740 and 742 take the place of the block 120 of Fig. 8a. In this circuit, the DAC 1020 serves as a variable gain device in which the gain varies between zero and one in proportion to the numeric value of the data represented by the ten input lines, A1—A10. The buffer amplifiers 740 and 742 each have a gain of one, thus, the overall gain through the amplifiers 740 and 742 at the DAC 1020 is equal to the DAC gain. The integrator output 118 is multiplied by the DAC gain and applied to the input via summing resistor 744. It can be shown that this integrator circuit with the DAC in the feedback path has a phase shift angle between input and output under the condition of sinusoidal excitation of angle $\phi$ where:

$$\text{Power Factor} = \text{COS}\phi = \cos \tan^{-1} \frac{WCR_2R_3}{BR_3 + R_2}$$

Where:

$W = 2 \text{ pi } f = 377 \text{ (freq.} = 60\text{hz)}$
$R_s = 35 \text{ k ohms}$
$R_3 = 128 \text{ k ohms}$
$C = .047 \times 10^{-6}\text{F}$

$$B = \frac{N}{1023} \text{ where } 0 \leq N \leq 1023$$

thus

$$0 \leq B \leq 1$$

Where N=the numerical value expressed on the input lines A1—A10 to the DAC.

The angle $\phi$ is fully analogous to the phase angle between the voltage and current in a series resistance and inductance equivalent to a typical welder load. From the equation for $\phi$, it can be seen that, by varying N, $\phi$ or the cosine of $\phi$ (the power factor) can be varied over a range depending on the circuit values to match a welder load.

The clock used in the pattern recognition embodiment is a signal which is gated into a counter IC16 and is conditioned by a divider circuit consisting of IC14 and a selector IC15. This divider and selector circuit under software control on lines A, B and C divides the four megahertz clock (furnished by the microprocessor board) by an integer (0—7) power of two. For maximum resolution, the highest clock rate of four megahertz is desired, however, this, can cause the counter IC16 to overflow and thus lose data. The software program in the microprocessor is designed to monitor the counter, IC16, and between the welds adjust to the maximum clock rate possible without overflow.

A digital data output circuit 746 provides what is commonly known as RS-232 serial signal that is compatible with a wide range of printing and display devices. This output port PL9-3 includes an asynchronous interface adapter (ACIA) IC23, which allows the selection of variable transmission rates under software control from the microprocessor and performs the parallel to serial conversion of the data to be transmitted. The operation of this device is well known in the art and so, therefore, further elaboration is not necessary here. This concludes the differences in circuitry between the pattern recognition technique embodiment and the second recognition technique embodiment.

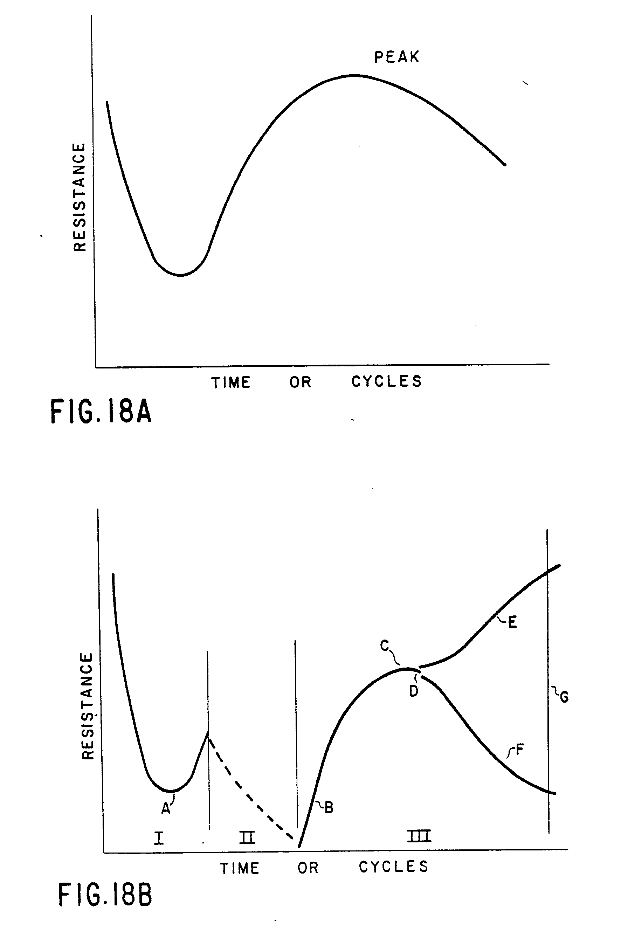

The pattern recognition technique developed for the welder control described earlier was designed to work with the resistance curve such as shown in Fig. 12 or 18A. Laboratory tests have shown this widely published curve to be a good representation of actual curves for bare steel welds of approximately the same thickness. Nugget formation begins somewhere near the peak and the nugget size can be inferred by the amount that the resistance falls from the peak. However, in the case of galvanized steel welding, the resistance curve is more complicated and appears to be the result of several processes, such as zinc melting, tip indentation, bulk heating, zinc shunting of the nugget area, etc., all of which proceed at their own rates, altering the character of the curve from weld to weld. Moreover, it has been found through experiment that dual pulse has the effect of synchronizing those processes occurring at the tip interface at the beginning of pulse two by means of the cool interval which serves to bring the tips and the work piece surfaces in contact with the tips to a uniform temperature. The resistance curve of Fig. 18B illustrates a typical dual pulse resistance curve using galvanized stock in the welding process. Region 1 represents the first pulse of a dual pulse weld. The first pulse is normally of a sufficient length to break down the initial contact resistances and soften and deform microscopic asperities at the interfaces resulting in a minimum resistance at point A. A slight increase in resistance from point A occurs if the first pulse continues. This is due to heating of the work pieces and the positive temperature co-efficient of resistance of steel.

Region 2 called the cool interval is used to allow the water cooled electrode tips in contact with the work pieces to chill the electrode tips to work piece interface regions. Normally, the cool interval is short enough that the work piece to work piece interface region retains some heat so that it has a head start upon entering the Region 3 or Weld-2 of the second pulse.

Weld-2 or the second pulse begins with the resistance considerably lower than it was at the end of Region 1, having decayed during the cool time, Region 2. Earlier in Weld-2, approximately at point B, the galvanized coating begins to melt in the work piece to work piece interface. This solders together the two work pieces and, as the solder areas grows, it increasingly shunts the area where a nugget formation will ultimately begin. This effectively masks the work piece to work piece interface resistance and, furthermore, spreads the current over a wider area than in the bare steel case, thus, reducing its heating value where it is needed most. The current in the immediate vicinity of the electrode tips, however, is confined by the tip geometry to a small area and, it is, thus, more effective at heating. Experience has shown that despite the cooling of the highly conductive copper tips and the head start given the work piece to work piece interface regions, the electrode tip interface regions tend to become higher in temperature than the work piece to work piece temperature.

By the time point C has been reached on the curve, the work piece has been sufficiently softened under the tips to allow for rapid tip indentation. Thus, the peak at C has nothing to do with nugget formation but rather is indicative in part of the shortening path of current flow caused by the tips' indenting. Shortly thereafter at point D, the curve begins to become indeterminate but bounded by the lines E and F. Between these bounds, the curve typically, but not always, reaches another peak from which it may or may not decline by the time it reaches the line G at which time a nugget begins forming. The region from point D to line G is not well understood. However, this region is believed to be the result of further tip indentation, zinc melting and vaporization, nugget formation, bulk heating of the tips and work pieces, etc., all proceeding at their own somewhat independent rates.

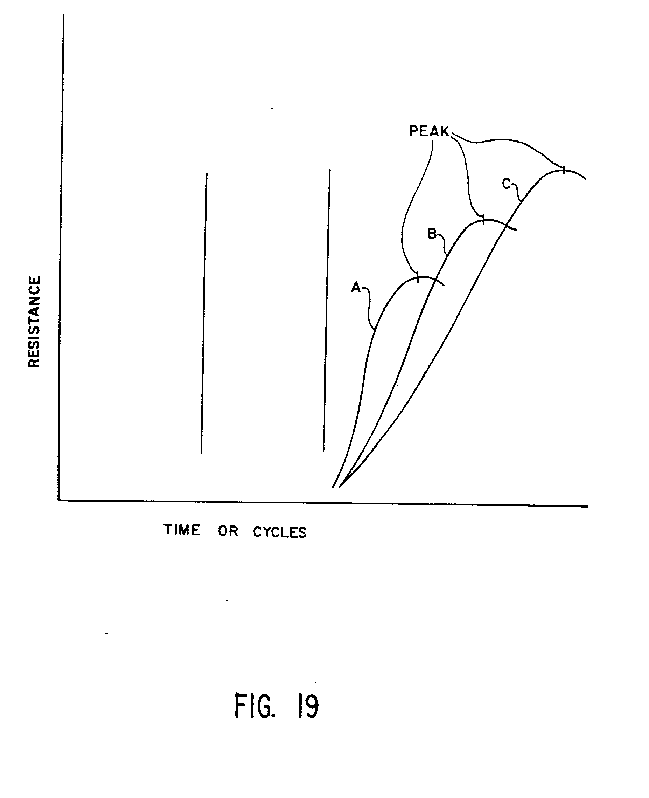

As such then, the resistance curve for galvanized steel is not a reliable indicator of weld nugget formation and growth. Indirectly, however, the resistance curve up to point C of Fig. 18B provides information on the rate that the temperature is rising in the tip interface region. If the current is varied, the length of time to reach point C from the beginning of Weld-2 varies. In Fig. 19, the curve labeled A resulted from a higher current than was used to make curve B and, similarly, curve B was made using a higher current than curve C. Thus, with the higher current levels, tip indentation occurs sooner than with lower current levels.

The above suggests using a weld-stop mode yielding a prediction of weld formation and growth based on the rate of rise of the tip interface region temperature. By measuring the time or number of cycles to the first peak and multiplying this time or cycles by a constant (determined emperically from test welds on the actual work pieces of galvanized steel) a predicted weld nugget formation time is ascertained. After welding has proceeded for this predetermined time, the welding current is terminated.

Theory of operation

This welder controller utilizing the second recognition technique, when operated in the non-feedback mode, performs in a manner essentially identical to that of the welder control described in the '724 patent, and will not be discussed further.

Operation of the welder controller in the feedback mode utilizing the second recognition technique requires selection by the operator of the appropriate feedback options, such as: the bare steel feedback mode, the galvanized steel mode, dynamic stepper on/off, etc. This results in a large number of possible operation modes.

A typical set-up and run procedure might be the following:

1. The operator places the control in the non-feedback mode and proceeds to adjust the weld schedule to produce the satisfactory welds as previously described in the '724 patent.

2. Depending on the type of metal to be welded, the operator selects the feedback mode to be used by programming the appropriate numbers into locations 44, and 19, 29 or 39, in the sequence module 700 of Fig. 15. The selection of the exact number is accomplished by a combination of previous experience and observation of weld quality as welding proceeds.

3. Prior to the first feedback weld, the modeling circuit must be adjusted to close match with the actual welder. This is accomplished by programming the number 99 into location 19, 29 or 39 of sequence module 700 and proceeding to perform a weld on the actual work pieces or a suitable coupon of that stock. After the initiation switch is closed by the operator, the control proceeds to perform a short four-cycle weld followed by a two-second delay and then another four-cycle weld. This process continues until power factor select block 120 of Fig. 8a (Fig. 17) has adjusted the modeling circuit to a satisfactory match with the actual welder. When a satisfactory match is arrived at, the controller removes the 99 at location 44 and restores the number originally placed there by the operator, and then proceeds to perform a weld on the work pieces. Normally, 3 to 5 four-cycle welds are required for adjustment of the power factor select block 120. No fusion in the nugget area occurs while adjusting, as the four-cycle welds are too short to accomplish an actual weld.

4. Continuing to weld, the controller will make further adjustments of the clock and of the power factor select block 120 as necessary to provide the best possible data.

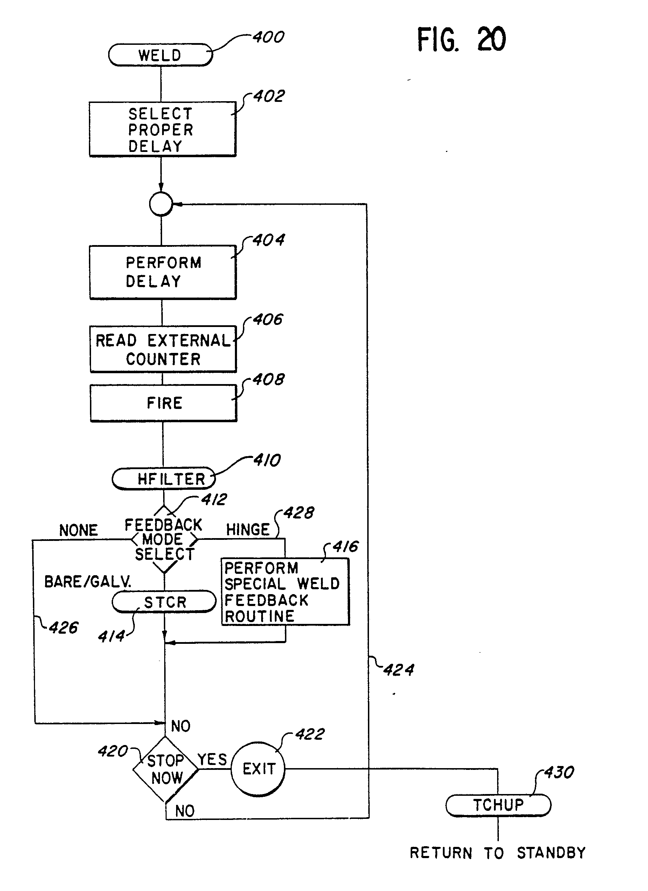

Referring now to Fig. 20, a flowchart of the weld subroutine, blocks 400, 402, 404, 406 and 408 are functionally equivalent to blocks 198, 200, 202, 204 and 214 of Fig. 10a. Block 402 of Fig. 20 selects the proper delay for the current setting and performs various set-up operations for the weld subroutine in a manner essentially the same as block 198 of Fig. 10a. Block 200 of Fig. 10a is not shown on Fig. 20 to help clarify the flow of the program during a normal weld. Block 404 of Fig. 20 performs the steps needed to achieve the delay prior to firing the SCRs. Block 406 reads the external counter to obtain the difference in time between the actual weld current extinction and the modeling circuit extinction. Finally, block 408 issues the necessary signal to initiate conduction of the SCRs. A detailed explanation of the above is found in the discussion of Fig. 10a.

Upon completing the necessary operation to perform block 408 of Fig. 20, the microprocessor resumes the process of analyzing the resistor data (the counter value read each half cycle by block 406) in the filter of subroutine block 410. In block 410, the microprocessor applies a low pass digital filter to the sequence of the resistance values as they are read to produce a sequence of output values which have the high frequency components removed from them. This filter is designed to use finite input response (FIR) techniques that are well known to those familiar with digital signal processing art.

Block 412 is a decision block which routes control via line 426 to block 420, when the operator has selected non-feedback operation by entering a zero in location 44 on the sequence panel 700 of Fig. 15, and a zero at locations 19, 29 or 39 on the sequence panel module 700, Fig. 15. In the event that location 44 has been set to a non-zero number, control will be routed via line 428 to block 416, the special weld feedback routine within the weld subroutine. In this routine, the data in location 44 is used by the operator to provide the variable blanking interval to mask out the first pulse and the first portion of the second pulse of a dual pulse weld. At the end of the blanking period, the routine searches for a peak in the resistance values and, when found, evaluates subsequent resistance values for a drop equal to or greater than the specified by the operator in location 19, 29 or 39. If the operator selects one of the standard feedback modes, location 44 must be set to zero and locations 19, 29 or 39 will be set to an appropriate non-zero number. If this number is set to values between 01 and 50, the bare steel feedback mode is selected. If the value is between 72 and 88, the predictive feedback mode is selected, as previously described. A range of values is used, say between 01 and 50, to allow the operator to adjust the weld stop threshold. These values provide control over the energy delivered to the weld area. In the bare steel feedback mode, an STCR subroutine, block 414, evaluates the resistance values for the presence of a valley. Only after a valley has been detected, are the resistance values evaluated for the presence of the peak. After a peak has been detected, the drop from the peak is compared to that specified by the operator in locations 19, 29 or 39 of the sequence module 700. If the resistance drop from the peak is found to be equal to or greater than that specified by the operator, the subroutine will place the value of the present half cycle counter into a RAM memory location called WSTOP.

Operator selection of the galvanized steel feedback mode is indicated by selection of a number between 72 and 88 and placing it in memory locations 19, 29 or 39. In this mode, the STCR subroutine 414 after detecting a valley, evaluates the resistance values for a first peak or reflection point C on Fig. 18B. The time and half cycles from the valley to the first peak C, is multiplied by a number between 1 and 3 (depending on the exact number in locations 19, 29 or 39) to compute the number of additional half cycles to be fired in the weld. The computed number of half cycles is then added to the present number of half cycles and the result placed in the WSTOP location to be used by a block 420 to stop the weld.

In addition, all three feedback modes in the second recognition technique, the special mode, the bare steel mode, and the galvanized mode, incorporate an expulsion detection feature which will stop the weld current as soon as expulsion is detected. In the case of a dual pulse weld, the expulsion detector is inhibited in the first pulse and until a peak has been found. The special feedback mode inhibits the expulsion detector during the first weld pulse and during the blanking period of the second pulse.

Decision 420 compares the values of the half cycle counter with the contents of the WSTOP location. When the two are equal, the weld is stopped by exiting the weld subroutine via an exit block 422. If the half cycle counter is less than the contents of WSTOP, control is transferred to line 424 to block 404 where the process is repeated for the next half cycle. After exiting the weld subroutine via block 422, a TCHUP subroutine 430 is entered. This subroutine provides a touch-up adjustment to the DAC 1020 settings based on the data obtained in the weld just completed. This subroutine, thus, compensates for drift of electronic circuits, cable warming, etc., to keep the modeling circuit accurately adjusted to the actual welding circuit. Upon completion of the TCHUP subroutine 430, the control returns to the standby mode to await another weld command, such as the operator pulling a trigger for the next weld.

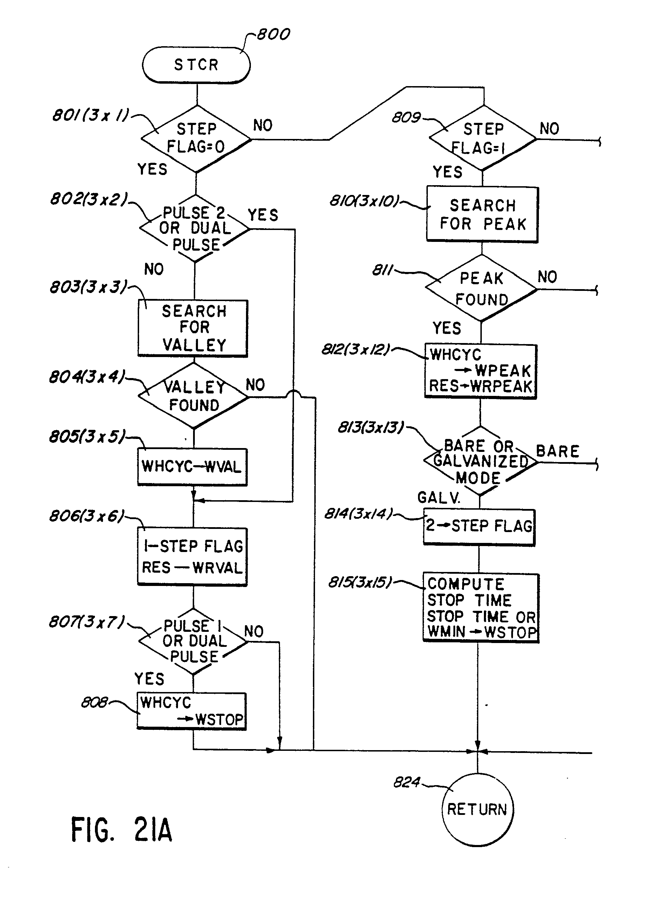

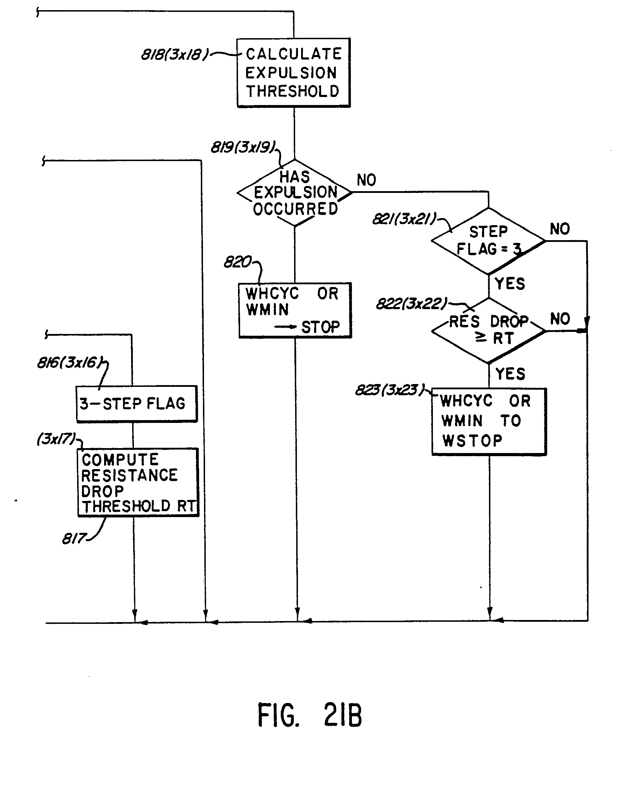

Referring now to Figs. 21, 22, 23 and 24, a more detailed description of the stop time computation touch-up, digital filter and fast adjust subroutines will be discussed.

First, a Stop Time Computation Subroutine (STCR) 800, as shown in Fig. 21, determines the time at which weld current is to be terminated, based on the resistance data obtained from each half cycle. Sequencing through the various parts of this STCR subroutine 800 is controlled by a Step Flag which is initially zero and set to 1 when a valley is found and set to 2 when a peak is found.

A decision block 801 tests the step flag for zero; if the step flag equals zero, control transfers to a decision block 802. Block 802 transfers control to a block 806 if the welder control is presently performing the second pulse of a dual pulse weld. This has the effect of assigning the valley of the second pulse resistance curve to the first half cycle of the second pulse, a procedure which is in agreement with experimental results. Decision block 802 transfers control to a block 803 in the event of a single pulse weld or pulse 1 of a dual pulse weld.

In block 803, the resistance data derivatives (from the HFILTR subroutine) are examined for the presence of a valley. If a valley is found, a block 804 transfers to a block 805; if not, via a return block 824 to the calling subroutine. A block 805 places the present value of the half cycle counter WHCYC into the RAM memory location called WVAL. The step flag is set to 1 in block 806 indicating that a valley has been found and the filtered value of the resistance is stored in a memory location called WRVAL. A decision block 807 transfers to a block 808 if the welder control is presently performing the first pulse of a dual pulse weld; if not, block 807 transfers to the block 824 for return to the calling subroutine. A block 808 places the present value of the half cycle counter WHCYC into a memory location called WSTOP. This will cause the weld current to cease, effecting a "stop on valley if pulse one" feature.

Referring back to block 801, if a valley has previously been found, as indicated by a non-zero number in the step flag, control is transferred to a block 809. Block 809 will transfer to a block 810 to search for a peak if a valley has been previously found and a peak has not been found as indicated by a 1 in the step flag. Block 810 using the resistance data derivatives searches for a peak or maximum in the filtered resistance data. If a peak is found, a block 811 transfers to a block 812; if not, block 811 transfers to block 824 for return to the calling program. Block 812, entered only if a peak has been found, moves the present value of the half cycle counter to a memory location called WPEAK and filtered resistance value at the peak to a memory location called WRPEAK.

A decision block 813 transfers control to a block 814 if the galvanized mode of feedback has been selected or to a block 816 if the bare steel mode of feedback has been selected. The operator previously selected the galvanized mode of feedback control by programming a number between 72 and 88 into memory location 44 or the bare steel mode using numbers between 01 and 50 into location 19, 29 or 39 using the sequence module. If the galvanized steel feedback mode had been selected, block 814 places a 2 into the step flag counter indicating that both a valley and a peak have been found and that the galvanized mode has been selected. Control then transfers to block 815 where the operator-set control value in location 44 is mapped linearly into a multiplier which takes on values between 1 and 3. That is, if location 44 is a 72, the multiplier is 1; if location 19, 29 or 39 is a 73, the multiplier is 1 1/8 etc. Next, block 815 determines the number of half cycles between the valley and the peak (WPEAK—WVAL) and multiplies this difference by the multiplier previously determined. This product is then added to the present value of the half cycle counter WHCYC to produce the stop time. The memory location WSTOP, which controls the weld subroutine, is loaded with the calculated stop time or the minimum weld time, whichever is greater. The minimum weld time has previously been programmed into location 18, 28 or 38 by the operator. Control then transfers to the calling program via block 824.

Referring back to decision block 813, if the bare steel mode has been selected, block 816 places a 3 in the step flag indicating that both a valley and a peak have been found and that the bare steel mode has been selected. A block 817 then computes the amount of resistance drop from the peak which must take place for the weld to be stopped. This is done using the value (1 to 50) previously programmed into location 19, 29, or 39, by the operator and scaling it according to the clock frequency. That is, the drop threshold RT is scaled to a larger value for high clock frequencies and a smaller value for lesser clock frequencies. This allows the production of consistent weld quality even though the clock frequency may be changed by the TCHUP subroutine. After computing the scaled drop threshold RT, block 817 transfers to block 824 for return to the calling program.

Referring back to block 809, if the step flag value is larger than 1, control will transfer to a block 818. Block 818 determines the expulsion threshold which is defined as 1/4 the difference between the peak resistance and the valley resistance, 1/4 (WRPEAK—WRVAL).

The expulsion threshold is linearly limited from a value of 20 at the highest clock rate down to 3 at clock rates of 500 Khz. or less. A block 819 detects if expulsion has occurred. Expulsion is defined as two adjacent half cycles in which the averaged resistance data shows a drop equal to or greater than the expulsion threshold. If the conditions for expulsion are met, a block 820 loads the WSTOP memory location with the present contents of the half cycle counter WHCYC or the minimum weld length WMIN, whichever is larger. Control then transfers to block 824 to return to the calling program. If expulsion is not detected, block 819 transfers control to a decision block 821 which, if the step flag is equal to 3 (indicating that a valley and a peak have been found and that the bare steel feedback mode has been selected), transfers control to a decision block 822. If the step flag is not equal to 3, the block 821 transfers directly to block 824 which returns to the calling program. A decision block 822 determines if the total resistance drop from the peak value of resistance (WRPEAK) equals or exceeds the threshold value RT. If yes, control transfers to a block 823 where the present value of WHCYC or WMIN, whichever is larger, is loaded into WSTOP. Control then transfers to block 824 for return to the calling program. If the resistance drop is not equal to or greater than the resistance drop threshold, block 822 transfers directly to block 824 for return to the calling program.

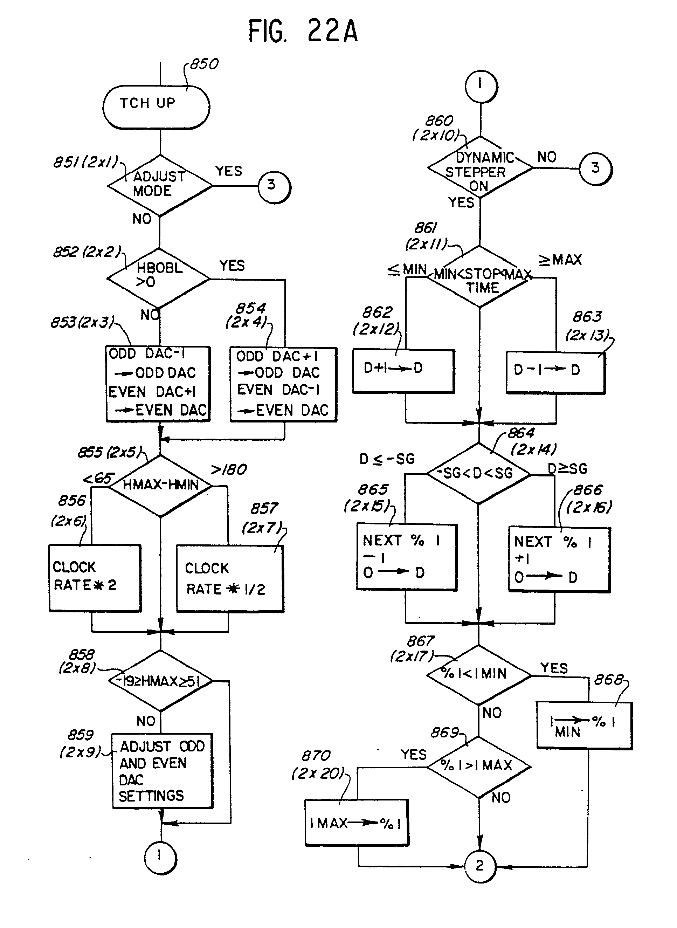

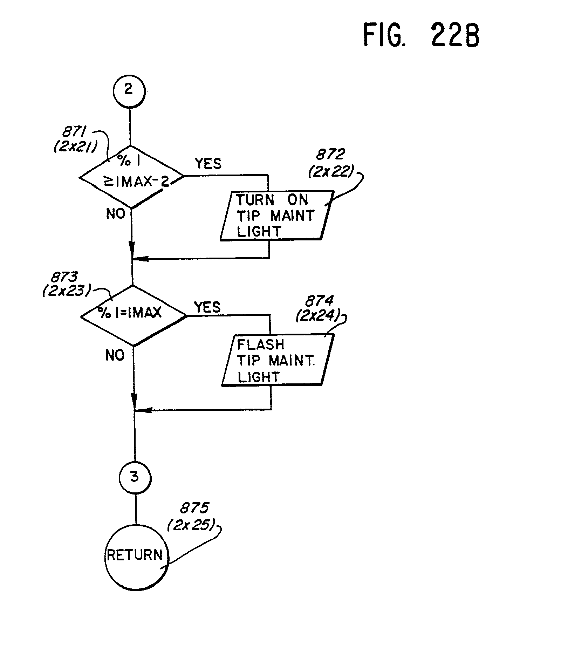

A touchup (TCHUP) subroutine 850, Fig. 22, performs the following functions:

1. Monitors the weld resistance data from the previous weld and makes appropriate changes to the modeling circuit (DAC settings) in order to maintain adjustment over an extended period of time.
2. The subroutine adjusts the clock speed to achieve the maximum practical resolution without counter overflow.
3. If the feedback controlled stepper option (dynamic stopper) is selected, this subroutine determines the level of current for the next weld based on previous welds.

A decision block 851 bypasses the subroutine if the controller is in the adjust mode as indicated by a 99 in location 19, 29 or 39. In the normal mode, control transfers to a decision block 852. In this block 852, the alternating component of the resistance data from the previous weld (HBOBL) is examined. If HBOBL is greater than zero, it means that the odd half cycle DAC setting is too small and the even half cycle DAC setting is too large. A block 854 compensates by adding 1 to the odd half cycle DAC setting and subtracting 1 from the even half cycle DAC setting. If the value of HBOBL is negative, a block 853 compensates in the opposite manner. This procedure, performed after each weld, tends to maintain the minimum amount of alternating component (bobble) in the resistance data.

A block 855 examines the difference between the maximum (HMAX) and the minimum (HMIN) average value of the resistance data from the previous weld. If the difference is less than 180 and more than 65 counts, the clock rate is satisfactory and control transfers to a block 858. If the difference is less than 65, the clock rate is doubled by a block 856 to provide greater resolution. If the difference is greater than 180, the clock rate is halved in a decision block 857 to lessen the danger of counter overflow (maximum counter capacity is 255 counts).

Block 858 examines the value of HMAX and, in conjunction with a block 859, adjusts both the odd an even DAC settings to cause the values of HMAX to range between −19 and −50. Thus, when properly adjusted, all resistance values will tend to be negative in value with the peak resistance (HMAX), the least negative. This has the effect of causing the model circuit to always extinguish slightly earlier than the actual welder current. Any changes in the line voltage waveform caused by the extinction of current in the welder are, thus, prevented from influencing the model.

The remaining portion of the TCHUP subroutine 850, starting with a decision block 860, performs the dynamic stepper function. Block 860 transfers control to a block 861, if the dynamic stepper feature is on; if not, on control is transferred to a block 875 which returns to the calling program. Block 861 determines if the previous weld was stopped under feedback control before, during or after an internally-calculated threshold interval.

The threshold interval is equal to the central two quarters of the difference in cycles between the minimum time (location 18, 28 or 38) and the maximum time (location 14, 24 or 34, for example). If, for instance, the minimum time is set to 9 cycles and the maximum time is set to 18 cycles, the threshold interval is the cycles 12, 13, 14 and 15. Welds terminating within the threshold interval are considered to have been made with a satisfactory current level and no adjustment is warranted. Thus, block 861 transfers directly to a block 864. If the weld terminates prior to the minimum of the threshold interval (cycle 12, in this case), the current is assumed to be excessive. Similarly, if the weld terminates after the maximum of the threshold interval (cycle 15, in this case), the current is assumed to be insufficient. Blocks 862 and 863 add 1 or subtract 1 from a stepper counter D, depending on whether the current is considered insufficient or excessive. Decision block 864 evaluates the contents of the D counter with respect to the value programmed as the stepper gain (location 43) by the operator. If the D counter equals or exceeds the stepper gain (taken as a positive number), the current for the next weld is increased by 1%. If the D counter is equal to or less than the stepper gain (taken as a negative number) the current for the next weld will be reduced by 1%. If the D counter value lies between the points defined by the positive and negative of the stepper gain, no change in current is made and control passes directly to a block 867. The effect of the blocks 861 through 866 is to require a trend to persevere over several welds (as determined by the stepper gain setting) before a change in the weld current is made.

Decision block 867 compares the new current value with the minimum value allowed by the operator. If the new current is less than the minimum value, a block 868 forces the new current value to the minimum value. If the new current is greater than the maximum value allowed, a block 870 forces the new current value to the maximum value.

Blocks 871 through 874 control the tip maintenance light output, a feature common to the '724 patent welder control. Blocks 871 and 872 turn on the tip maintenance output if the current is within 2% of the maximum value. Blocks 872 and 874 set the tip maintenance output to the flashing mode when the current equals the maximum value. Finally, block 875 returns control to the calling program.

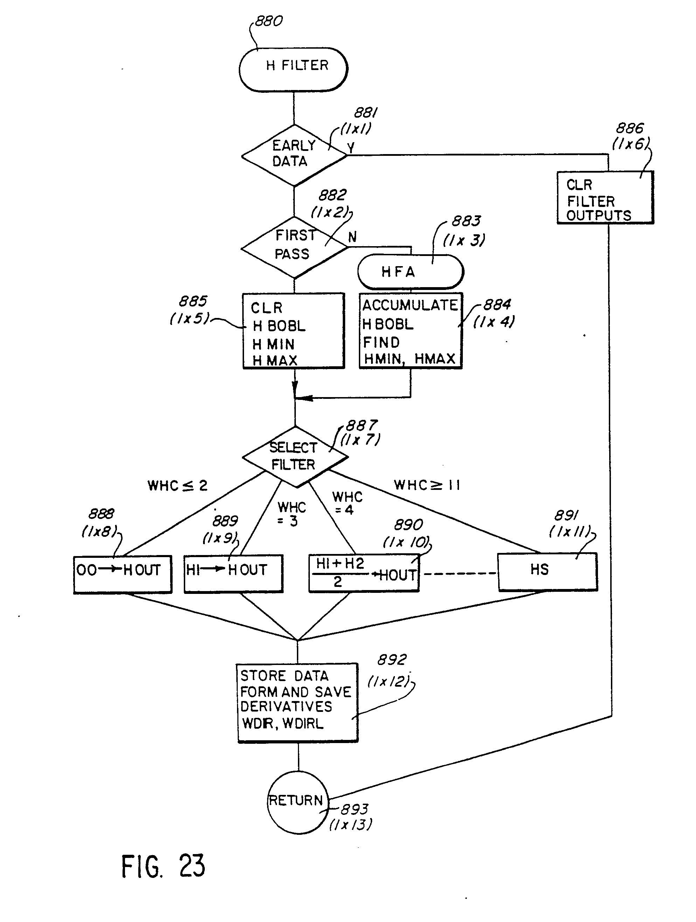

A filter (HFILTR) subroutine 880, Fig. 23, conditions the resistance data by passing it through a group of low pass filters to minimize the influence of spurious data. In addition, the HFILTR subroutine 880 saves the minimum and maximum values of filtered data and calculates a value of the alternating component in the data for subsequent use by other subroutines. Also, the HFILTR takes the discrete time derivative of the filtered resistance data for use in the detection of peaks and valleys in the STCR subroutine 800.

Decision block 881 bypasses the functional part of the subroutine early in the weld before at least two valid data samples have been received. A block 886 clears the filter outputs and returns to the calling program via a block 893. Block 881 transfers control to a block 882 after at least two valid resistance samples have been received (the data from half cycle one of the first pulse is considered invalid while the data from half cycle one of the second pulse of a dual pulse weld is considered valid).

Decision block 882 transfers control to a block 885 to clear the maximum (HMAX), the minimum (HMIN), and the bobble accumulator (HBOBL) on the first pass. Subsequently, block 882 transfers control to a block 883, an internal subroutine HFA which forms the average value of the resistance data from this half cycle and the data from the previous half cycle (this is a low pass digital filter with a cutoff frequency of 30 Hz for a 60 Hz welder). The average filter output called H1 is used by a block 884 in the selection of the maximum and minimum values during a weld. The maximum value of H1 found in a weld is stored in HMAX and the minimum value of H1 is stored in HMIN. Block 884 also calculates a measure of the alternating component of the resistance values. It accomplishes this by adding the unfiltered resistance values resulting from even numbered half cycles to an accumulator called HBOBL and subtracting the unfiltered resistance values resulting from odd numbered half cycle from the accumulator HBOBL. The effect of this action is such that if there a small alternating component in the unfiltered resistance data, HBOBL at the end of a weld will be close to zero. If the unfiltered resistance values from the even half cycles tends to be larger than from the odd half cycles, the value accumulated in HBOBL will be a large positive number. If the data from the odd half cycles is larger, HBOBL will be a large negative number. The value of HBOBL is subsequently used in the TCHUP subroutine to help maintain proper model adjustment.

A decision block 887 selects a low pass digital filter based on the value of the weld pulse half cycle counter, WHC. The action of the selector 887 is to progressively select digital filters with lower cutoff frequencies until a filter with a cutoff frequency of approximately 11 Hz is finally selected. This procedure results in improved transient response at the beginning of each weld pulse along with a low cutoff frequency later in the weld pulse. Five finite impulse response (FIR), linear phase filters are used. Transition errors between the filters are minimized by the selector block 887 selecting an averaging block such as 889 to develop the average output of the two filters on either side. Thus the filter selection process proceeds as follows: for WHC less than or equal to 2, no filter is selected and the output HOUT is zeroed. For WHC equal to 3, filter H1 the adjacent pair average filter is selected. When WHC equals 4, both the H1 and H2 filters are selected and the average value of the two filters becomes the output HOUT. When WHC equals 5, only the H2 filter is selected (cutoff frequency of 21.5 Hz) to compute the output HOUT. Proceeding on to WHC equal to 6 both the H2 and H3 filters are selected and averaged too for HOUT. In this manner, a smooth progression of filters with lower and lower cutoff frequencies is used to process the resistance data. When WHC equals or exceeds 11, the H5 filter is used exclussively to generate HOUT.

A block 812 stores all data from a weld in three tables located in memory. The actual resistance data is stored in the table called HRTBL. The averaged data H1 and the selectively filter data HOUT are stored in table called HATBL and HFTBL respectively. In addition, a block 892 forms the discrete time differences (analogous to derivative in the continuous case) in the values of HOUT. These values now called the derivatives are retained only for the current and the previous half cycle and are referred to as WDIR and WDIRL respectively.

Exit from this subroutine is then made via block 893.

A fast adjust subroutine (ESET) 900 is used to rapidly adjust the model circuit to match the actual welder load. It accomplishes this by a procedure which uses data from each half cycle of a series of short test weld pulses while in the adjust mode.

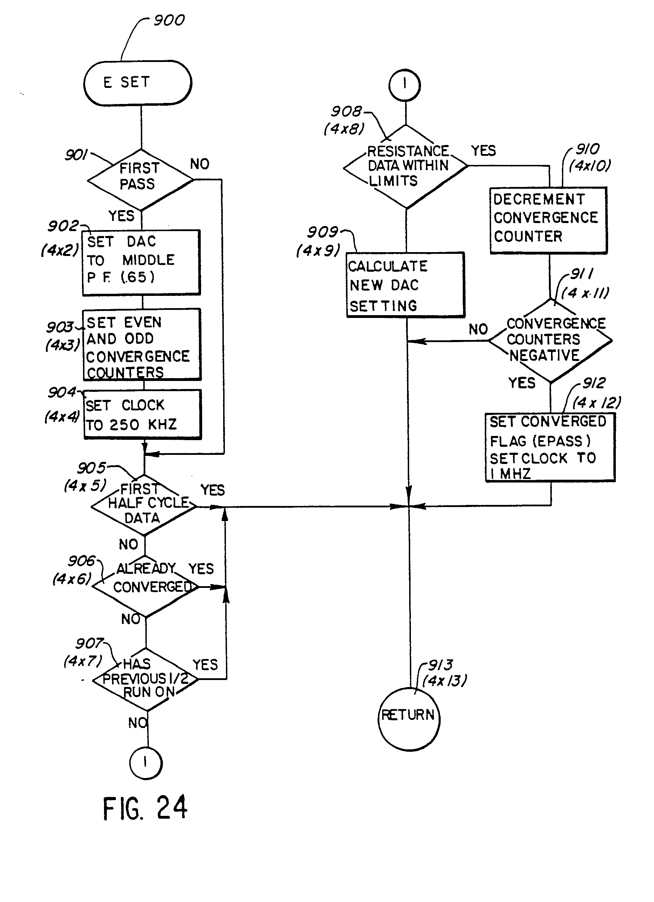

Referring to Fig 24, a block 901 transfers control to blocks 902, 903, and 904 on the first pass through in the adjust mode. Block 902 sets both the odd and even half cycle DAC settings to a median value corresponding to a power factor of about .64. The convergence counters for both the even and odd half cycles are set to a small positive number in block 903 and finally block 904 sets the clock rate to 250 Khz.

Next, a block 905 transfers control to a block 913 if the presently available resistance value is from the first half cycle of a test weld pulse. This data is not used as a basis for adjustment. A decision block 906 bypasses further adjustment if the model adjustment process has already converged as evidenced by the EPASS flag (this flag is set in a block 912). Adjustment on this half cycle is skipped by a decision block 907 if the model is still conducting from the previous half cycle. This indicates a model power factor much less than the actual welder power factor. When a previous half cycle is found to still be conducting or running on, the action of block 907 is to allow only adjustment on every other half cycle until it no longer runs on and interferes with the next half cycle. Then adjustment proceeds on both half cycles.

A decision block 908 checks the present resistance data for values within limits indicating satisfactory adjustment. If the value of resistance data is found to be outside of the acceptance limits, control transfers to block 909. The function of block 909 is to calculate the new odd or even DAC setting using the value of resistance from the previous odd or even half cycle. The calculation carries out the following equation;

$$NDAC=OLDAC+(RES+OFFSET) A.$$

Where NDAC is the new DAC value OLDAC is the previous DAC value, RES is the resistance value and offset is a constant used to force convergence to some desired final value. The variable A is an integer between 1 and 4 selected on the basis of the OLDAC value and is used to make the effective open loop gain of the adjustment feedback loop approximately equal to 1 for the fastest possible convergence. Block 909 when completed, transfers to block 913 which returns to the calling program.

Returning to block 908, if the present value of resistance is found to be within the limits of acceptance; control is transferred to block 910. In block 910 the odd or even convergence counter is decremented by 1 and control is passed to block 911. Block 911 tests the value of both the odd and the even convergence counters and if both are found to be decremented to negative values, the adjustment process is complete and control passes to block 912. If both odd and even half cycle convergence counters have not been decremented to negative values, control passes to block 913 to return to the calling program and ultimately for further repeated passes through the ESET subroutine. Block 912 sets the converged flag EPASS to FF indicating that adjustment is satisfactorily completed. This action will terminate the adjust mode and cause the control to revert to the normal welding mode. Finally, block 912 sets the clock rate to 1 Mhz and transfers control to block 913 to return to the calling program.

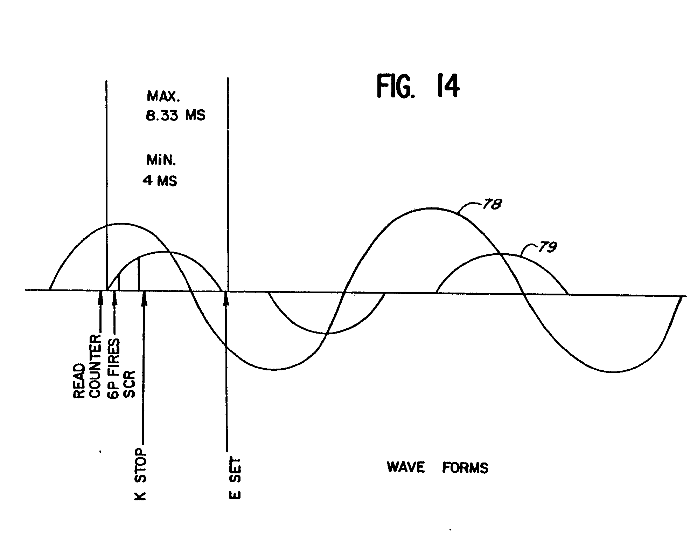

Turning now to Figure 14, Fig. 14 shows the reference voltage 78 and half cycles of current conduction 79. Moreover, the drawing shows when events occur during the welding period with reference to these waveforms. For instance, the typical half cycle of current conduction lasts approximately a minimum of four milliseconds to 8.33 milliseconds depending upon the weld heat desired. EREAD, where the counter is read, occurs just before the gate pulse signal to fire the SCR happens. KSTOP is sequenced before one millisecond elapses after the GP signal ESET is issued during the gap time between half cycles of current conduction and so forth.

While certain preferred embodiments of the invention have been specifically disclosed, it is understood that the invention is not limited thereto, as many variations will be readily apparent to those skilled in the art, and the invention is to be given its broadest possible interpretation within the terms of the following claims:

**Claims**

1. Control apparatus for controlling the quality of a weld in a resistance welding apparatus with the welding apparatus including a pair of welding electrodes (36) and a welding transformer (26) having a secondary winding (30) connected to the electrodes and a primary winding (24) connectible to an AC source for energizing the primary and the secondary winding with alternating polarity half cycles of actual welding current, characterized by: means providing a model (2) of the actual welding current in the primary winding and a model signal (82) indicative of the instant when each half cycle of the model welding current reaches zero; means providing an actual weld signal (80) indicative of the actual welding current in the primary winding and the instant when each half cycle of actual welding current reaches zero; and means (94) for measuring a time difference between the zero crossing of the model signal (82) and the zero crossing of the actual weld signal (80) and interrupting an actuable switching means (18) between the source (12) and the primary winding (16) when the difference equals a preselected value.

2. Apparatus according to claim 1, characterized by: means for measuring said time difference between the model signal (82) and the actual weld signal (80) during a half cycle when the value of the time difference betweem the signals is minimum and storing the value of the minimum difference; and means (18) for interrupting the actual welding current in the primary winding when the difference between the minimum difference value and a signal (86) indicative of the difference between the model signal and the actual weld signal during a half cycle subsequent to the half cycle producing the minimum difference value is greater than or equal to a preprogrammed value.

3. Apparatus according to claim 1, characterized in that the primary winding (16) is connected to the source by a pair of thyristors (18) connected in inverse parallel and the signal (80) indicative of the welding current is provided by a means connected across the thyristors.

4. Apparatus according to claim 1, characterized in that the means providing the model of the actual welding current, the means providing the actual weld signal, the means for measuring the time difference between the model (82) and actual weld signals (80) and interrupting the energizing circuit are controlled by a microprocessor (76).

5. Apparatus according to claim 1, characterized by said means providing said model of the actual welding current in the primary winding providing a signal (82) indicative of the power factor of the model current during each half cycle of the welding current; means providing a signal (80) indicative of the power factor of the actual welding current in the primary winding; means (94) for measuring a time difference between the power factors of the model signal (82) and the actual weld signal (80) during a half cycle when the value of the time difference between the signals is minimum and storing the value of the minimum difference; and means (18) for interrupting the actual welding current in the primary winding when the difference between the minimum difference value and a signal (88, 84) indicative of the difference between the power factor of the model signal and the power factor of the actual weld signal during a half cycle subsequent to the half cycle producing the minimum difference value is greater than or equal to a preprogrammed value.

6. Apparatus according to claim 5, characterized in that the means for providing a model of the welding current and the model signals includes a solid state switch (108) that is switched to a conductive state concurrently with the switching of the thyristors to a conductive state.

7. A method for controlling the quality of a weld that is formed by a resistance welding apparatus with the apparatus including a pair of welding electrodes (36) engageable with a pair of workpieces (38) that are to be welded together and a welding transformer (28) having a secondary winding (30) connected to the electrodes and a primary winding (24) connectible to an AC source for energizing the primary and the second winding with alternating polarity half cycles of actual welding current, characterized by: providing a model of the actual welding current in the primary winding and a model signal (82) indicating the instant when each half cycle of model welding current reaches zero; providing an output signal (80 indicative of the actual welding current in the primary winding and the instant when each half cycle of actual welding current reaches zero; measuring a time difference between the zero crossing of the model signal and the zero crossing of the actual weld signal during a half cycle when the value of the time difference between the signals is minimum and storing the value of the minimum time difference; and interrupting the actual welding current in the primary winding when the difference between the minimum difference value and the signal (88, 84) indicative of the difference between the model signal and the actual weld signal during a half cycle subsequent to the half cycle producing the minimum difference value is greater than or equal to a preprogrammed value.

**Patentansprüche**

1. Steuervorrichtung zur Steuerung der Qualität einer Schweiße in einem Widerstandsschweißgerät, das zwei Schweißelektroden (36) und einen Schweißtransformator (26) besitzt, der eine mit den Elektroden verbundene Sekundärwicklung (30) und eine Primärwicklung (24) aufweist, die mit einer Wechselstromquelle zum Speisen der Primär- und der Sekundärwicklung mit in der Polarität abwechselnden Halbperioden eines Arbeitsschweißstroms verbindbar ist, gekennzeichnet durch eine Einrichtung zum Erzeugen einer Nachbildung (2) des Arbeitsschweißstroms in der Primärwicklung und zum Erzeugen eines Nachbildungssignals (82), das den Zeitpunkt darstellt, in dem in jeder Halbperiode des Nachbildungsschweißstroms der Nullpegel erreicht wird, durch eine Einrichtung zum Erzeugen eines Arbeitsschweißstromsignals (80), das den Arbeitsscheißstrom in der Primärwicklung und den Zeitpunkt darstellt, in dem in jeder Halbperiode des Arbeitsschweißstroms der Nullpegel erreicht wird, und durch eine Einrichtung (94) zum Messen einer Zeitdifferenz zwischen dem Nulldurchgang des Nachbildungssignals (82) und dem Nulldurchgang des Arbeitsschweißstromsignals (80) und zum Öffnen einer betätigbaren Schalteinrichtung (18) zwischen der Stromquelle (12) und der Primärwicklung (16), wenn die Differenz einem vorgewählten Wert entspricht.

2. Vorrichtung nach Anspruch 1, gekennzeichnet, durch eine Einrichtung zum Messen der Zeitdifferenz zwischen dem Nachbildungssignal (82) un dem Arbeitsschweißstromsignal (80) während einer Halbperiode, in der die Zeitdifferenz zwischen den Signalen minimal ist, und zum Speichern des Wertes der minimalen Differenz, und durch eine Einrichtung (18) zum Unterbrechen des Arbeitsschweißstroms in der Primärwicklung wenn die Differenz zwischen dem Wert der minimalen Differenz und einem Signal (86), das die Differenz zwischen dem Nachbildungssignal und dem Arbeitsschweißstromsignal während einer Halbperiode anzeigt, die der Halbperiode folgt, in der die minimale Differenz aufgetreten ist, ebensogroß oder größer ist als ein vorprogrammierter Wert.

3. Vorrichtung nach Anspruch 1, dadurch gekennzeichnet, daß die Primärwicklung (16) mit der Stromquelle durch zwei antiparallelgeschaltete Thyristoren (18) verbunden ist und daß das den Schweißstrom darstellende Signal (80) von einer den Thyristoren parallelgeschalteten Einrichtung erzeugt wird.

4. Vorrichtung nach Anspruch 1, dadurch gekennzeichnet, daß die Einrichtung zum Erzeugen der Nachbildung des Arbeitsschweißstroms, die Einrichtung zum Erzeugen des Arbeitsschweißstromsignals, und die Einrichtung zum Messen der Zeitdifferenz zwischen dem Nachbildungssignal (82) und dem Arbeitsschweißstromsignal (80) und zum Unterbrechen des Speisekreises von einem Mikroprozessor (76) gesteuert werden.

5. Vorrichtung nach Anspruch 1, dadurch gekennzeichnet, daß die Einrichtung zum Erzeugen der Nachbildung des Arbeitsschweißstroms in der Primärwicklung während jeder Halbperiode des Schweißstroms ein Signal (82) erzeugt, das den Leistungsfaktor des Nachbildungsstroms darstellt, daß eine Einrichtung vorgesehen ist, die ein Signal (80) erzeugt, das den Leistungsfaktor des Arbeitsschweißstroms in der Primärwicklung darstellt, daß eine Einrichtung (94) vorgesehen ist, die zum Messen einer Zeitdifferenz zwischen den Leistungsfaktoren des Nachbildungssignals (82) und des Arbeitsschweißstromsignals (80) während einer Halbperiode dient, in der die Zeitdifferenz zwischen den Signalen minimal ist, und die den Wert der minimalen Differenz speichert, und daß eine Einrichtung (18) vorgesehen ist, die den Arbeitsschweißstrom in der Primärwicklung unterbricht, wenn die Differenz zwischen dem Wert der minimalen Differenz une einem Signal (88, 84), das die Differenz zwischen dem Leistungsfaktor des Nachbildungssignals und dem Leistungsfaktor des Arbeitsschweißstromsignals während einer Halbperiode darstellt, die der Halbperiod folgt, in der die minimale Differenz aufgetreten ist, ebensogroß oder größer ist als ein vorprogrammierter Wert.

6. Vorrichtung nach Anspruch 5, dadurch gekennzeichnet, daß die Einrichtung zum Erzeugen einer Nachbildung des Schweißstroms und der Modellsignale einen Festkörperschalter (108) besitzt, der gleichzeitig mit dem Herstellen eines leitenden Zustandes der Thyristoren in einen leitenden Zustand überführt wird.

7. Verfahren zur Steuerung der Qualität einer Schweiße, die mit einem Widerstandsschweißgerät erzeugt wird, das zwei Schweißelektroden (36) besitzt, die an zwei miteinander zu verschweißende Werkstücke (38) anstellbar sind, sowie einen Schweißtransformator (28) der eine mit den Elektroden verbundene Sekundärwicklung (30) und eine Primärwicklung (24) aufweist, die mit einer Wechselstromquelle zum Speisen der Primär- und der Sekundärwicklung mit in der Polarität abwechselnden Halbperioden eines Arbeitsschweißstroms verbindbar ist, dadurch gekennzeichnet, daß eine Nachbildung des Arbeitsschweißstroms in der Primärwicklung und ein Nachbildungssignal (82) erzeugt werden, das den Zeitpunkt darstellt, in dem in jeder Halbperiode des Nachbildungsschweißstroms der Nullpegel erreicht wird, daß eine Zeitdifferenz zwischen dem Nulldurchgang des Nachbildungssignals und dem Nulldurchgang des Arbeitschweißstromsignals während einer Halbperiode gemessen wird, in der die Zeitdifferenz zwischen den Signalen minimal ist, und der Wert der minimalen Zeitdifferenz gespeichert wird, und daß der Arbeitsschweißstrom in der Primärwicklung unterbrochen wird, wenn die Differenz zwischen dem Wert der minimalen Differenz und dem Signal (88, 84), das die Differenz zwischen dem Nachbildungssignal und dem Arbeitsschweißstromsignal während einer Halbperiode anzeigt, die der Halbperiode folgt, in der die minimale Differenz aufgetreten ist, ebensogroß oder größer ist als ein vorprogrammierter Wert.

## Revendications

1. Appareil de contrôle servant à contrôler la qualité d'une soudure dans une appareil de soudage à résistance, cet appareil de soudage à résistance incluant un couple d'électrodes de soudage (36) et un transformateur de soudage (26) possédant un enroulement secondaire (30) raccordé aux électrodes et un enroulement primaire (24) pouvant être raccordé à une source à courant alternatif servant à alimenter l'enroulement primaire et l'enroulement secondaire avec des alternances, ayant des polarités alternantes, du courant de soudage réel, caractérisé par; des moyens fournissant un modèle (2) du courant de soudage réel dans l'enroulement primaire et un signal modèle (82) indicatif de l'instant où chaque alternance du courant de soudage modèle s'annule; des moyens fournissant un signal de soudage réel (80) indicatif du courant de soudage réel dans l'enroulement primaire et de l'instant où chaque alternance du courant de soudage réel s'annule; et des moyens (94) servant à mesurer un intervalle de temps entre l'annulation du signal modéle (82) et l'annulation du signal de soudage réel (80) et servant à interrompre des moyens de commutation (18) pouvant être actionnés, situés entre la source (12) et l'enroulement primaire (16), lorsque cet intervalle de temps est égal à un valeur présélectionnée.

2. Appareil selon la revendication 1, caractérisé par: des moyens pour mesurer ledit intervalle de temps entre le signal modèle (82) et le signal de soudage réel (88) pendant une alternance, lorsque la valeur de l'intervalle de temps entre les signaux est minimum, et à mémoriser la valeur de l'intervalle de temps minimum; et des moyens (18) pour interrompre le courant de soudage réel dans l'enroulement primaire lorsque la différence entre la valeur de l'intervalle de temps minimum et un signal (86) indicatif de l'intervalle de temps entre le signal modèle et le signal de soudage réel pendant une alternance intervenant à la suite de l'alternance fournissant la valeur de l'intervalle de temps minimum est supérieure ou égale à une valeur programmée d'avance.

3. Appareil selon la revendication 1, caractérisé en ce que l'enroulement primaire (16) est raccordé à la source par un couple de thyristors (18) branchés selon un montage antiparallèle et que le signal (81) indicatif du courant de soudage est délivré par des moyens raccordés aux bornes des thyristors.

4. Appareil selon la revendication 1, caractérisé en ce que les moyens fournissant le modèle du courant de soudage réel, les moyens fournissant le signal de soudage réel, les moyens servant à mesurer l'intervalle de temps entre le signal de soudage modèle (82) et le signal de soudage réel (81) et à interrompre le circuit d'alimentation sont commandés par un microprocessur (76).

5. Appareil selon la revendication 1, caractérisé par lesdits moyens fournissant ledit modèle du courant de soudage réel dans l'enroulement primaire, fournissant un signal (82) indicatif du facteur de puissance du courant modèle pendant chaque alternance du courant de soudage; des moyens fournissant un signal (80) indicatif du facteur de puissance du courant de soudage réel dans l'enroulement primaire; des moyens (94) servant à mesurer un intervalle de temps entre les facteurs de puissance du signal modèle (82) et du signal de soudage réel (80) pendant une alternance lorsque la valeur de l'intervalle de temps entre les signaux est minimum et à mémoriser la valeur de l'intervalle de temps minimum; et des moyens (18) servant à interrompre le courant de soudage dans l'enroulement primaire lorsque la différence entre la valeur de l'intervalle de temps et un signal (88, 84) indicatif de l'intervalle de temps entre le facteur de puissance du signal modèle et le facteur de puissance du signal de soudage réel pendant une alternance intervenant à la suite de l'alternance fournissant la valeur de l'intervalle de temps minimum est supérieure ou égale à une valeur programmée d'avance.

6. Appareil selon la revendication 5, caractérisé en ce que les moyens servant à fournir un modèle du courant de soudage et les signaux modèles incluent un commutateur à l'état solide (108) qui est commuté dans un état conducteur en même temps que s'effectue la commutation des thyristors dans un état conducteur.

7. Appareil pour contrôler la qualité d'une soudure, qui est formée au moyen d'un appareil de soudage à résistance, cet appareil incluant un couple d'électrodes de soudage (36) pouvant être amenées en contact avec un couple de pièce à traiter (38), qui doivent être soudées l'une à l'autre, et un transformateur de soudage (28) possédant un enroulement secondaire (30) raccordé aux électrodes et un enroulement primaire (24) pouvant être raccordé à une source à courant alternatif pour alimenter l'enroulement primaire et l'enroulement secondaire avec des alternances, possédant des polarités alternantes, du courant de soudage réel, caractérisé en ce qu'il consiste à: fournir un modèle du courant de soudage réel dans l'enroulement primaire et un signal modèle (82) indiquant l'instant où chaque alternance du courant de soudage modèle s'annule; à fournir un signal de sortie (80) indicatif du courant de soudage réel dans l'enroulement primaire et de l'instant où chaque alternance du courant de soudage réel s'annule; à mesurer un intervalle de temps entre l'annulation du signal modèle et l'annulation du signal de soudage réel pendant une alternance, lorsque la valeur de l'intervalle de temps entre les signaux est minimum, et à mémoriser la valeur de l'intervalle de temps minimum; et à interrompre le courant de soudage réel dans l'enroulement primaire lorsque la différence entre l'intervalle de temps minimum et le signal (88, 84) indicatif de l'intervalle de temps entre le signal modèle et le signal de soudage réel pendant une alternance intervenant à la suite de l'alternance fournissant la valeur de l'intervalle de temps minimum est supérieure ou égale à une valeur programmée d'avance.

29

FIG. I

0 050 950

**0 050 950**

FROM SQUEEZE ROUTINE

FIG. 2

# FIG. 3A

PEAK
*156*

RESISTANCE

TIME OR CYCLES

7 8 9

$-\sum \Delta T_N$

PEAK
*158*

*160*
THRESHOLD

$\Delta T_8$

$\Delta T_7$

TIME OR CYCLES

# FIG. 3B

# FIG. 4

# FIG. 5

ADDRESS PROGRAM CHART

**FUNCTION (46)**

| | ADDR. |
|---|---|
| SQUEEZE (CYCLES) | 10 |
| WELD I (CYCLES) | 11 |
| % CURR. WELD I (%) | 12 |
| COOL (CYCLES) | 13 |
| WELD 2 (CYCLES) | 14 |
| % CURR. WELD 2 (%) | 15 |
| HOLD (CYCLES) | 16 |
| OFF (CYCLES) | 17 |

| | ADDR. |
|---|---|
| SQUEEZE DELAY (CYCLES) | 40 |
| PATT. RECGN. LIMITS | |

**LIMITS (42)**

| | ADDR. |
|---|---|
| AREA LOWER LIMIT | 21 |
| AREA UPPER LIMIT | 22 |
| CONVEXITY LOWER LIMIT | 23 |
| CONVEXITY UPPER LIMIT | 24 |
| DROP LOWER LIMIT | 25 |
| DROP UPPER LIMIT | 26 |

**DIAGNOSTICS (44)**

| | ADDR. |
|---|---|
| OVERRIDE TIME-OUT | 99 |
| HALF-CYCLING | 98 |
| TRANSFORMER TEMP. | 97 |
| LOW WATER FLOW | 96 |
| SHORTED SCR | 95 |
| CHECK HEAT SETTING | 93 |

**MODE**

| | |
|---|---|
| FAST ADJUST | 18 |
| FEEDBACK | 19 |
| | |
| | |

DATA (66)

ADDRESS (58) (56)

DATA (60) (62)

RUN — PROG. (64)

(68) (70) (72) (74)

(54) (36)

# FIG. 6

INPUTS — 40

TRIGGER

WELD/NO WELD — 72

AC LINE REFERENCE — 78

APF (VOLTAGE ACROSS POWER SCR'S) — 80

ALOG I (SIMULATED APF) — 82

FIRST (APF MADE TRANSITION BEFORE ALOGI) — 84

DIFF (PULSE WIDTH DIFFERENCE ALOGZ APF) — 86

DIFF CLK (CLOCK COUNT DIFFERENCE ALOGI APF) — 88

NMI (INTERRUPT FROM OVERRIDE TIMER) — 90

MOTOROLA M 6800 — 76

MICROPROCESSOR

8 BIT COUNTER

OUTPUTS

169 — SOLENOID#I

152 — WELD FIRING SIGNAL-GATE PULSE

ADJUST POWER FACTOR

I
R

SIMULATED WELDER (MODELING CIRCUIT) — 92

OVER RIDE TIMER — 166

NMI (MONITORS ALL TIMING PERIODS) — 172

CONTROL MODULE — 36

PROGRAM ENTRY
DIAGNOSTICS
PATTERN RECOGNITION LIMITS
WELD/NO WELD
REPEAT/NON REPEAT
FAST ADJUST/FEED BACK MODES

# FIG. 7

FIG. 8A

0 050 950

8

FIG. 8B

FIG. 8C(A)

FIG. 8C (B)

FIG. 8D (A)

FIG. 8D (B)

0 050 950

# FIG. 9A

0 050 950

# FIG. 9B

1 2 3 4 5 6 7 8 9 10 11 12 13 14 15 16 17 18 19 20 21 22 23 24 25

REF VOLTAGE
SCR CURRENT — 79 — 78 — 22

GP — 152 — 23

IC9AQ̄ — 24

IC1Cpin 8 — 98 — 25

IC1Opin 14 — 26

IC2Apin 1 — 118 — 27

IC2Cpin 8 — 126 — 28

IC3pin — 130 — 29

ALOG 1 — 82 — 30

APF — 80 — 31

15

# FIG. 10A

```
                    ┌──────────────┐
                    │     WELD     │
                    └──────────────┘
                            │                    ╭─198
                    ┌──────────────────────────┐
                    │ SELECT                   │
                    │ PROPER DELAY             │
                    │ FOR CURRENT SETTING      │
                    │ O→HALF CYCLE COUNTER,KHC │
                    └──────────────────────────┘
                            │
                           (1)
          200─╮           ◇
                    ◇ W/N W ◇────(6)
                           ◇
                            │
          202─╮  ┌──────────────┐
                 │ DELAY TO     │
                 │ ACHIEVE PROPER│
                 │ GAP TIME     │
                 └──────────────┘
                        │                  ╭─204
        ┌ ─ ─ ─ ─ ─ ─ ─ ─ ─ ─ ─ ─ ─ ─ ─ ─ ─ ┐
        │       ┌──────────────┐
        │       │    EREAD     │
        │       └──────────────┘
        │            │
        │       ┌──────────────┐ ╭206
        │       │ READ DIFF    │
        │       │ COUNTER      │
        │       │ STORE IN EDELT│
        │       └──────────────┘
        │            │                COUNTER OVERFLOW
        │  208─╮   ◇            NO    OR STILL COUNTING
        │        ◇ DATA ◇──────────────────┐
        │        ◇ VALID ◇
        │            │
        │          YES
        │ 210─╮ ┌──────────┐      ┌──────────┐ ╭212
        │     │ OO→EFLAG │      │ FF→EFLAG │
        │     └──────────┘      └──────────┘
        └ ─ ─ ─ ─ ─ ─ ─ ─ ─ ─ ─ ─ ─ ─ ─ ─ ─ ┘
                     │
       214─╮  ┌──────────────┐
            │ FIRE         │
            │ CONTACTOR    │
            └──────────────┘
                     │
                    (2)
```

# 0 050 950

## FIG. IOA'

17

# FIG. 10B

WAIT FOR
END OF
CONDUCTION

FIG. 10 B'

# FIG. 10C

**FIG. 11**

**FIG. 12**

DYNAMIC RESISTANCE CURVE
FOR MILD STEEL WELDING

RESISTANCE →

PEAK

192

RESISTIVE DROP FROM $\Delta R$ PEAK

190

AREA 188

VALLEY POINT

5

HALF CYCLES

# FIG. 13A

# FIG. 13B

# FIG. 13C

FIG. 14

FIG. 15

| FUNCTION | SEQ 1 | SEQ 2 | SEQ 3 |
|---|---|---|---|
| SQUEEZE DELAY (CYCLES) | 40 | 40 | 40 |
| SQUEEZE (CYCLES) | 10 | 20 | 30 |
| WELD 1 (CYCLES) | 11 | 21 | 31 |
| PERCENT CURRENT (WELD 1) | 12 | 22 | 32 |
| COOL (CYCLES) | 13 | 23 | 33 |
| WELD 2 (CYCLES) | 14 | 24 | 34 |
| PERCENT CURRENT (WELD 2) | 15 | 25 | 35 |
| HOLD (CYCLES) | 16 | 26 | 36 |
| OFF (CYCLES) | 17 | 27 | 37 |
| MINIMUM WELD (CYCLES) | 18 | 28 | 38 |
| FEED BACK ADJUST | 19 | 29 | 39 |

700

| M.I.C.C. | | STEP 1 | STEP 2 | STEP 3 | STEP 4 |
|---|---|---|---|---|---|
| WELD COUNT | | 50 | 51 | 52 | 53 |
| SEQ 1 | %CURRENT-WELD 1 | 60 | 61 | 62 | 63 |
| | %CURRENT-WELD 2 | 64 | 65 | 66 | 67 |
| SEQ 2 | %CURRENT-WELD 1 | 70 | 71 | 72 | 73 |
| | %CURRENT-WELD 2 | 74 | 75 | 76 | 77 |
| SEQ 3 | %CURRENT-WELD 1 | 80 | 81 | 82 | 83 |
| | %CURRENT-WELD 2 | 84 | 85 | 86 | 87 |
| SEQ. SELECT-1-SEQ.1,2-SEQ.-1 2 3-SEQ.1 2 3 | | | | | 41 |

| ADJ DELAY (CYCLES) | 42 |
|---|---|
| DYNAMIC STEPPER DELAY (WELDS) | 43 |
| SPECIAL DUAL PULSE SELECTOR | 44 |

| DIAGNOSTICS | |
|---|---|
| FLASHING DISPLAY | MESSAGE |
| 99 | OVERRIDE TIME OUT |
| 98 | SCR HALF CYCLE |
| 97 | WELD TRANSFORMER OVER TEMPERATURE |
| 96 | SCR LOW WATER FLOW |
| 95 | SCR SHORTED |
| 94 | MICC-INVALID DATA |
| 93 | NON MICC %CURRENT INVALID |
| 92 | MICC % CURRENT DECREASING |

| STATUS INDICATORS | | |
|---|---|---|
| MICC STEP NUMBER | | 59 |
| MICC WELD COUNTER | | 58 |
| % CURRENT IN USE | | 90 |
| LOW LINE VOLTAGE COUNTER | | 93 |
| WELD COUNTER | 98 | 99 |

714

7 3
ADDRESS

712
DATA
88
DISPLAY

716
8 7

RUN    PROGRAM

718

702  704   MICC   710

W/HW   RPT   STEPPER   ENTER RESET
706   708

FIG. 16

FIG. 17A

FIG. 17B

0 050 950

27

FIG. 17C

0 050 950

28

# FIG. 17D

**0 050 950**

FIG. 17E

30

FIG. 17F

# FIG. 17G

| | |
|---|---|
| FIG. 17A | FIG. 17B |
| FIG. 17C | FIG. 17D |
| FIG. 17E | FIG. 17F |

FIG.18A

FIG.18B

FIG. 19

0 050 950

FIG. 20

RETURN TO STANDBY

35

FIG. 21A

FIG. 2IB

# FIG. 22A

*850*

TCH UP

*851 (2x1)*

ADJUST MODE — YES → ③

NO

*852 (2x2)*

HBOBL >O — YES

NO

*853 (2x3)*

ODD DAC-I
→ODD DAC
EVEN DAC+I
→EVEN DAC

*854 (2x4)*

ODD DAC+I
→ODD DAC
EVEN DAC-I
→EVEN DAC

*855 (2x5)*

<65    HMAX-HMIN    >180

*856 (2x6)*

CLOCK RATE *2

*857 (2x7)*

CLOCK RATE * 1/2

*858 (2x8)*

-19≥HMAX≥51

NO

*859 (2x9)*

ADJUST ODD AND EVEN DAC SETTINGS

①

*860 (2x10)*

① 

DYNAMIC STEPPER ON — NO → ③

YES

*861 (2x11)*

≤ MIN    MIN<STOP>MAX TIME    ≥MAX

*862 (2x12)*

D+I→D

*863 (2x13)*

D-I→D

*864 (2x14)*

D≤-SG    -SG<D<SG    D≥SG

*865 (2x15)*

NEXT % I
—I
0→D

*866 (2x16)*

NEXT % I
+I
0→D

*867 (2x17)*

% I<IMIN — YES → *868*

I→%I
MIN

NO

*869*

% I>IMAX — YES

*870 (2x20)*

IMAX→%I

NO

②

38

# FIG. 22B

FIG. 23

# 0 050 950

FIG. 24